# EUROPÄISCHE PATENTANMELDUNG

(11) **EP 4 249 421 A2**
(43) Veröffentlichungstag der Anmeldung: **27.09.2023**
(21) Anmeldenummer: 23177700.4
(22) Anmeldetag: 09.10.2020
(51) Int. Cl.: B66F 9/06

(54) **AUTONOMES FLURFÖRDERZEUG**

(30) Priorität: 09.10.2019 DE 102019127194
(62) Teilanmeldung aus: 20789943.6
(71) Anmelder: MetraLabs GmbH Neue Technologien und Systeme, 98693 Ilmenau (DE)
(72) Erfinder: ULBRICH, Stefan, 98693 Ilmenau (DE); Bley, Andreas, 98693 Ilmenau (DE); WOLF, Erik, 98693 Ilmenau (DE); FISCHER, Benjamin, 98693 Ilmenau (DE); MARTIN, Christian, 98693 Ilmenau (DE); TRABERT, Johannes, 98693 Ilmenau (DE); SYLEIMAN, Ahmed, 98693 Ilmenau (DE); STERNITZKE, Christian, 98693 Ilmenau (DE)
(74) Vertreter: Harrison, Robert John

(57) **Zusammenfassung**

Ein Verfahren zur Kalibrierung eines Inertialsensors (40) einer mobilen Basis (1) ist offenbart, wobei die mobile Basis (1) mindestens einen Sensor (15, 16, 18, 20, 29, 31, 32) zur Erfassung eines Umfelds der mobilen Basis (1) umfasst. Das Verfahren umfasst eine Erfassung des Umfelds der mobilen Basis (1) mittels des mindestens einen Sensors (15, 16, 18, 20, 29, 31, 32); eine Detektion, basierend auf der Erfassung des Umfelds, eines Hindernisses (151); eine Ermittlung, basierend auf der Erfassung des Umfelds, eines Erfassungswinkels des Hindernisses (151); eine Durchführung mindestens einer Drehung der mobilen Basis (1) um einen Drehwinkel, wobei eine Ermittlung des Drehwinkels durch eine Auswertung des Erfassungswinkels erfolgt; und einen Vergleich des basierend auf der Auswertung des Erfassungswinkels ermittelten Drehwinkels mit einem mittels des Inertialsensors (40) ermittelten Drehwinkel.

## Beschreibung

### Gebiet der Erfindung

Die Erfindung bezieht sich auf sich autonom fortbewegende Fahrzeuge, insbesondere auf autonome Flurfördergeräte bzw. Flurförderzeuge. Dabei deckt die Erfindung auch Stapler und Hubwagen ab. In einer Ausführungsform handelt es sich um einen autonomen Hubwagen, der als autonomes bzw. fahrerloses Transportsystem (AGV - autonomes guided vehicle) bzw. autonomes Transportfahrzeug ausgestaltet ist.

### Hintergrund der Erfindung

Autonome Flurförderzeuge der anfangsgenannten Art finden in der Intralogistik zahlreiche Anwendungen. Solche autonome Flurförderzeuge werden hier vornehmlich dazu genutzt, Waren, Werkstücke, Halbzeuge und Rohmaterial zu transportieren, wobei eine Ware bzw. ein Transportgut identifiziert wird, der Hubwagen die Ware bzw. das Transportgut aufnimmt, zu einem anderen Standort transportiert und dort wieder absetzt.

Die Transportgüter, die ein solches Flurförderzeug transportiert, befindet sich teilweise in Warenträgern, die übereinandergestapelt auf Rollwagen gelagert sind. Das Flurförderzeug nimmt die Rollwagen samt Warenträger (einschließlich Werkstückträger, (Transport-)kisten) auf und transportiert die Warenträger zu einer anderen Position. Hierbei ist die Herausforderung, die Rollwagen mit den Warenträgern korrekt aufzunehmen. Diese Rollwagen können sich teilweise in Bereichen befinden, die mittels Markierungen auf dem Boden eingegrenzt werden. Dabei orientiert sich das Flurförderzeug entsprechend an den Bodenmarkierungen, um die entsprechenden Rollwagen zu identifizieren und korrekt aufzunehmen, indem die Ladefläche bzw. die Staplergabeln unter dem Rollwagen positioniert werden, um diesen dann anzuheben.

Im Stand der Technik sind, wie nachfolgend näher beschrieben wird, teilweise solche Systeme bekannt, die an der Vorderseite der Ladefläche bzw. den Gabeln Abstandsensoren aufweisen. Experimente mit derartigen Abstandssensoren an einem Flurförderzeug haben gezeigt, dass die Position der Rollwagen nicht zufriedenstellend detektiert werden kann, bspw. durch den Einsatz eines LIDAR, womit die entsprechenden (nicht detektierten) Rollwagen durch das Flurförderzeug nicht aufgenommen werden können, vor allem, weil derartige LIDAR-Sensoren nicht in der Lage sind, Markierungen auf dem Boden zu erfassen.

Stattdessen wird in diesem Dokument eine Sensoreinheit vorgeschlagen, in der ein Kamerasystem zum Einsatz kommt. Diese Sensoreinheit verfügt in einem optionalen Aspekt zusätzlich über einen LIDAR und/oder über eine Lampe, um z.B. den Erfassungsbereich der Kamera auszuleuchten, da die Arbeitsumgebung teilweise nicht besonders gut beleuchtet ist.

### Stand der Technik

Im Stand der Technik sind verschiedene autonome Stapler bzw. Hubbühnen/Gabeln für derartige Stapler bekannt. Dazu zählen JPH08161039, EP2944601, CN108609540, CN207483267, CN105752884, CN205773116 oder CN206232381, welche jedoch keine Sensorik an den Gabeln bzw. der Hubebene aufweisen, welche derart orientiert sind, dass die Sensorik in Fahrtrichtung vorwärts zeigt, wenn die Ladung aufgenommen wird.

Aus CN108046172 und CN207699125 ist ein Stapler bekannt, der an den Gabeln über Hindernissensoren verfügt, bspw. Ultraschall oder photoelektrische Sensoren. In CN206427980 wird ein Infrarot-Emitter und mehrere Infrarot-Detektoren zur Distanzmessung an der vorderen Seite eines Lifters herangezogen. CN106672867 verfügt über einen in eine Gabel integrierten Codescanner und einen RFID-Lesegerät.

Eine Gesamtkonstruktion eines Staplers ist auch in CN107364809 beschrieben. Hierbei sind allerdings keine Sensoren am Rand des Ladebereichs verbaut. Unter der Ladefläche findet sich zudem ein einfaches, beweglich gelagertes Rad.

### Beschreibung der Erfindung

Das in diesem Dokument beschriebene, autonome Flurförderzeug (AFF) verfügt über mindestens drei Räder, davon mindestens zwei Antriebsräder, welche sich im vorderen Teil im Bereich des Aufbaus befinden. Die Antriebsräder werden durch eine Steuereinheit kontrolliert und von einer Stromquelle mit Energie versorgt, z.B. von einem Akkumulator. Des Weiteren verfügt das AFF über eine Vorrichtung, um die Stromquelle selbst wieder mit Energie zu versorgen, in einem Aspekt über eine Schnittstelle zum Andocken an eine Ladestation zum Aufladen des Akkumulators sowie die dazu notwendige Elektronik. Die Schnittstelle kann für galvanisch gekoppeltes oder induktives Laden ausgelegt sein. Bei der Steuereinheit kann es sich um einen Rechner handeln, der mit mindestens einem Speicher verbunden ist. Das AFF kann darüber hinaus über weitere Rechner verfügen.

Das AFF verfügt vorne über einen Aufbau mit einem Display, optional Alarmleuchten, akustische Meldesignale (Sirene, Wampieper, Lautsprecher usw.) und Bedienelementen. Eine Vorwärtsbewegung des AFF impliziert, dass das AFF sich mit dem Aufbau voran bewegt. Hinten befindet sich eine Ladefläche zum Transport von Ladungen, welche höhenverstellbar ist. Diese Ladefläche hat in einem Beispiel eine Tiefe von ca. 60 cm und eine Breite von 23 cm. Es sind jedoch auch Abweichungen hiervon möglich, bis dahingehend, dass die nachfolgend beanspruchten Konfigurationen auch Gabelstapler umfassen können, die üblicherweise über zwei etwas schmalere Gabeln (im Vergleich zu den 23 cm) verfügen und die ggf. auch länger als 60 cm sind. Die Ladefläche ist elektrisch höhenverstellbar um mindestens 5mm, und in einem anderen Beispiel mindestens 20mm. Der Antrieb zum Höhenverstellen der Ladefläche wird ebenfalls durch den Rechner kontrolliert und mittels eines Höhenverstellungsensors kontrolliert. Unterhalb der Ladefläche findet sich eine Gelenkrolle (auch als Castor-Rad bekannt), in einem Aspekt als Doppelrolle ausgestaltet. Eine Rückwärtsbewegung des AFF impliziert, dass sich das AFF mit der Ladefläche voran bewegt.

Weiterhin ist das AFF in einem Aspekt mit einer Drahtlosschnittstelle ausgestattet, bspw. einem WLAN oder Bluetooth/ZigBee/GSM/UMTS/LTE/5G-Modul. Ferner verfügt das AFF über mindestens eine Funkschnittstelle zum Ansteuern (monodirektional) und/oder bidirektionaler Kommunikation von Gebäude-bezogenen Anlagen wie (Automatik-)Türen zum ferngesteuerten Öffnen und Schließen, optischen und akustischen Signalisierungseinrichtungen zum Auslösen von Signalen, etc., vorzugsweise über Bluetooth, ZigBee, ISM/ 433/ 868 MHz (Sub-1-Ghz)-Transceiver oder über Infrarot (IrDA) usw. Ebenso können im Gebäude bzw. im Fahrbereich an bekannten Orten montierte Schalter / Taster, Eingabegeräte vorgesehen sein, um das AFF z.B. zur Stelle zu rufen (z.B. Abholung vom Transportgut) oder um andere bestimmte Aktionen auszulösen.

Das AFF besitzt auf der Aufbauseite mindestens einen LIDAR, der mit einem der Rechner verbunden ist. In einem alternativen oder ergänzenden Aspekt kann auch mindestens eine 3D-Kamera zum Einsatz kommen, z.B. eine RGB-D-Kamera, bspw. mit Speckle- oder Time-of-Flight-(ToF)-Technologie oder eine Stereokamera. In einem weiteren Aspekt weist das AFF mindestens ein, vorzugsweise zwei nach vorne gerichtete LIDAR und mindestens ein, in einem Aspekt zwei weitere LIDAR auf, die im Wesentlichen vertikal ausgerichtet sind und somit auch Hindernisse in der Höhe erkennen können. In einem Aspekt sind diese LIDAR nicht außen auf dem Gehäuse des AFF montiert, sondern befinden sich innerhalb von Einbuchtungen, womit diese besser gegen Stöße geschützt sind und Fahrzeuggrundfläche nicht zusätzlich vergrößern. Damit diese LIDAR dennoch in etwa vertikal messen können, sind die LIDAR angekippt, wodurch der Winkel zur Vertikalen vorzugsweise zwischen etwa 5° und 20° beträgt.

Das AFF verfügt an der Seite, wo sich die Ladefläche befindet und die beim Aufnehmen der Ladung als Vorderseite fungiert, ansonsten aber die Rückseite ist, über eine rückwärtsgerichtete Sensoreinheit mit mindestens einer Kamera, in einem Aspekt eine RGB-Kamera ist, in einem alternativen Aspekt eine RGB-D-Kamera, bspw. mit Speckle- oder Time-of-Flight-(ToF)-Technologie oder aber eine Stereokamera. Alternativ und/oder ergänzend befindet sich dort mindestens ein Abstandssensor, in einem Aspekt ein LIDAR. In einer alternativen und/oder ergänzenden Ausführung befindet sich dort weiterhin mindestens eine Lichtquelle, welche so konfiguriert ist, dass die Lichtquelle mindestens Teile des Sichtfelds der Kamera ausleuchten kann. Dabei ist in einem Aspekt die mindestens eine Lichtquelle so konfiguriert, dass die Lichtquelle vor allem diffuses Licht emittiert. Die Lichtquelle kann auch staubgeschützt eingehaust sein. In einem Aspekt handelt es sich hierbei um mindestens eine LED, z.B. eine Hochleistungs-LED. In einem alternativen und/oder ergänzenden Aspekt befindet sich dort auch mindestens eine RFID-Antenne, welche mit einem RFID-Reader verbunden ist.

Das AFF verfügt in einem Aspekt über Sensorik, die derart ausgestaltet ist, dass eine Ladung auf der Ladefläche detektiert werden kann, vorzugsweise auch die Tiefe, mit der sich die Ladung auf der Ladefläche befindet. Somit können Ladungen unterschiedlicher Tiefe transportiert werden. Hierfür können einerseits drahtlose Sensoren z.B. in einem Ladungsermittlungsmodul zum Einsatz kommen, die die Ladefläche in einer im Wesentlichen horizontaler Ebene vom Aufbau her abtasten und die Entfernung der Ladung bis hin zum Aufbau ermitteln. Als Beispiel seien Ultraschallsensoren, Infrarotsensoren, Radar, LIDAR, kapazitive Abstands- bzw. Tiefensensoren, Laser-Abstandssensoren und/oder 3D-Kameras genannt. Es können in einem alternativen Aspekt auch nach oben gerichteten Sensoren genutzt werden, die die Zuladung in der vertikalen Ebene ermitteln. Dazu können, entweder kontinuierlich oder in diskreten Abständen, Sensoren in die Ladefläche eingelassen sein und/oder durch diese Ladefläche hindurchmessen. Diese Sensoren können, bspw. in der kontinuierlichen Variante, Wägezellen sein, bspw. Dehnungsmesstreifen, die in die Oberfläche der Ladefläche eingelassen sind. Es kann sich auch um Infrarotsensoren handeln, die in die Oberfläche eingelassen sind und detektieren, an welchen Stellen eine Ladung sich auf der Ladefläche befindet.

Das oben erwähnte Ladungsermittlungsmodul ist derart konfiguriert, dass das Ladungsermittlungsmodul mittels der Sensordaten die Position der Ladung auf der Ladefläche ermitteln kann und diese Informationen über die Position innerhalb des Speichers des AFF für weitere Auswertungen zur Verfügung stellt. In einer Ausführungsform befindet sich ein Laser-Abstandsmesser, z.B. mit ausgedehntem Messfleck (bspw. der Firma Keyence) innerhalb des Gehäuses mit der Antriebseinheit. Durch den ausgedehnten Messfleck wird die Wahrscheinlichkeit vergrößert, dass der Laser des Laser-Abstandsmesser tatsächlich auch auf den Warenträger trifft. Dieser Laser-Abstandsmesser ist in einem Aspekt so weit nach innen in das Gehäuse versetzt, dass die Totzone des Laser-Abstandsmessers (minimaler Messabstand, innerhalb der noch keine präzise Messung möglich ist) sich innerhalb des Gehäuses befindet und entlang der Ladefläche komplett gemessen werden kann. Auf diesem Weg kann die Ladung möglichst zentral auf dem AFF transportiert werden, was die Stabilität der Ladung während der Fahrt erhöht. In einem alternativen Aspekt befindet sich der Laser-Abstandsmesser in einem Gehäuse auf der Ladefläche. Um innerhalb der Totzone zu messen, befindet sich in diesem Gehäuse bspw. ein Kontaktsensor wie bspw. ein Endlagenschalter, der detektiert, wenn eine Ladung bis zum Fahrzeug-innenseitigen Ende der Ladefläche aufgenommen ist und/oder die Ladefläche komplett einnimmt und dabei den Endlagenschalter auslöst.

In einem ergänzenden, optionalen Aspekt wird die zum Anheben, Absenken und/oder Halten der Ladefläche benötigte Energie bzw. Stromfluss ermittelt und daraus die Masse des Transportguts bestimmt, um bspw. darüber die Ladung auszuwerten. Alternativ und/oder ergänzend kann mindestens ein Ladeflächen-Ladungssensor als Wägezelle ausgestaltet sein, bspw. als Dehnungsmessstreifen, der zur Ermittlung der Masse genutzt wird. Diese Funktionalität ist im optionalen Ladungsermittlungsmodul hinterlegt. Weiterhin ermittelt ein Sensor die Position und/oder eine Positionsänderung der Ladefläche. In einem Aspekt werden hier die Umdrehungen des Motors und/oder eines Getriebes bzw. Getriebebestandteils gezählt, bspw. per Encoder bzw. Inkrementalgeber an der Welle und/oder integriertem Hall-Sensor, mit einem Stroboskop-Drehzahlmesser, Tachogenerator, Induktionsgeber (in den kurzen Ansteuerungspausen der Motorsteuerung die Induktionsspannung an Wicklungen messen- ist drehzahlproportional), und/oder Wiegand-Sensor. In einem alternativen Aspekt wird ein Schrittmotor eingesetzt und es werden die Schritte gezählt. Die Masse m lässt sich daraus als m = Energie/(g*Höhe), wobei g die Erdbeschleunigung ist.

In einem Aspekt kann das AFF oder ein mit dem AFF verbundenes, externes System die Ladung des AFF auswerten. Dazu sind bspw. im Speicher des AFF Regeln hinterlegt, die einem definierten Stromfluss bzw. für die benötigte Energie die korrespondierende Masse ermitteln lassen. Der ermittelte Wert der Masse kann, in einem Aspekt, mit in einem Speicher hinterlegten Werten für die Masse verglichen werden, welche das AFF im Rahmen eines Transportauftrags transportieren soll. Dazu ruft das AFF für die zu transportierende Ladung in einem Speicher hinterlegte Daten auf, die neben der Abholposition der Ladung und der Zielposition der Ladung in einem Aspekt auch Informationen zum Gewicht der Ladung umfassen. In einem alternativen Aspekt ermittelt das AFF im Zeitablauf die Masse der zu transportierenden Ladungen, speichert diese ab und errechnet einen Schätzwert für die Masse der jeweiligen Ladung, die einem Transportauftrag zugeordnet ist. Beim Anheben einer neuen Ladung im Rahmen des Abarbeitens eines Transportauftrags ermittelt das AFF die neue Masse, vergleicht diese mit in einem Speicher hinterlegten Masse vergangener Transportaufträge und ermittelt auf Basis errechneter Differenzen, ob die gemessene Masse mit der Masse aus vergangenen Transportaufträgen in etwa übereinstimmt.

Die ermittelten Daten zu Masse und Transportauftrag wie Orts- und Zeitangaben, Dimensionen der Ladung, etc. können, in einem Aspekt, klassifiziert werden, um Regeln aus diesen Daten abzuleiten. So kann bspw. ein Auftrag, der eine bestimmte Route und eine bestimmte Zeit betrifft, mit bestimmten Massen assoziiert sein, wobei das AFF in dem Fall z.B. durch Vorliegen des Massewerts die Route ableiten kann. Werden hiervon Abweichungen festgestellt, kann das AFF einen Wert in einem Speicher ändern, ein anderes System benachrichtigen bzw. einen Signalisierungsparameter anpassen, der bspw. ein Ampelsignal auslöst. Zusammengefasst lassen sich, in einem Aspekt, Validierungen der aufgenommenen Ladung vornehmen, um bspw. Fehler innerhalb des Produktionssystems bzw. innerhalb des Fertigungsablaufs zu erkennen wie die Zuordnung von falschen Teilen oder falschen Mengen zu einer Maschine. Dies ist insbesondere bei solchen Fertigungsabläufen interessant, bei denen bspw. zwischen Fertigungsinseln ein automatisierter Teiletransport mittels eines AFF stattfindet. Dazu werden die ermittelten Daten mit in einem Produktionsplanungssystem hinterlegten Daten direkt oder indirekt verglichen. Indirekt bedeutet, dass bspw. in einem Speichereine Konkordanz zwischen Gewicht von zu transportierenden Ladungen und den in einem Produktionsplanungssystem hinterlegten Produktionsmengen herstellen kann. Die ermittelte Masse des Transportguts kann über eine Schnittstelle anderen Systemen zur Verfügung gestellt werden.

Softwareseitig ist das AFF mit einem Navigationsmodul ausgestattet, einem 2D und/oder 3D-Umfelderfassungsmodul und ein Kartierungsmodul mit einer Karte der Umgebung, in der sich das AFF bewegt. Diese Karte kann bspw. "verbotene" Zonen umfassen wie bspw. Gullideckel, Wasserrinnen, Dehnungsfugen, Türschwellen, Treppen, etc. die beim Überfahren zu starken Erschütterungen des AFF und damit eine Gefährdung der Ladung führen können. Weiterhin verfügt das Navigationsmodul über ein Selbstlokalisierungsmodul, vorzugsweise innerhalb einer kartierten Umgebung. Ein Pfadplanungsmodul, dass das AFF effizient den eigenen, zurückzulegenden Weg berechnen und hinsichtlich bestimmter Kriterien in seinem Aufwand bewerten kann. Ein Bewegungsplaner nutzt u.a. die Ergebnisse der Pfadplanung aus dem Pfadplanungsmodul und errechnet eine optimale Wegstrecke für das AFF unter Berücksichtigung bzw. Optimierung verschiedener Kostenfunktionen. Als Kostenfunktionen fungieren neben den Daten aus der Pfadplanung auch solche aus der Hindernisvermeidung, einer Vorzugsfahrrichtung, usw. Hierbei kommt der im Stand der Technik bekannte Dynamic Window Approach zum Einsatz.

Ein Lademodul für das automatische Laden sorgt dafür, dass das AFF bei niedrigem Energiestand automatisch eine Ladestation aufsucht, dort andockt und seinen Akkumulator auflädt. In einem Aspekt kann das AFF auch so konfiguriert sein, dass es bei der Interaktion mit einer Maschine (bspw. beim Aufnehmen einer Ladung von einer Maschine) und/oder beim Warten an oder nahe dieser Maschine direkt geladen werden kann. Dazu kann das AFF über Ladekontakte vorne oder hinten, über Schleifkontakte und/oder über eine induktive Ladevorrichtung verfügen. Daneben gibt es ein Ladungsermittlungsmodul, mit dem die Position und/oder das Gewicht bzw. der Schwerpunkt einer Ladung auf der Ladefläche ermittelt wird.

Das AFF verfügt ferner über ein Kommunikationsmodul zur AFF-AFF-Kommunikation. Hierfür wird ein Funkmodul für den Nahbereich genutzt, in einer bevorzugten Ausführungsform ein ZigBee- oder Bluetooth-Modul, ferner WLAN und/oder die oben aufgeführten Kommunikationstechnologien. Dieses Kommunikationsmodul ist so konfiguriert, dass das Kommunikationsmodul automatisiert eine Funkverbindung zu anderen ZigBee-Modulen aufbaut, die auf anderen AFF montiert sind. Es findet anschließend ein Informationsaustausch mittels eines Übertragungsprotokolls statt. Bei diesem Austausch werden mit Zeitbezug (Zeitstempel) Informationen wie die Position des AFF (vorzugsweise auf einer Karte), die aktuelle Geschwindigkeit, Orientierung in einer horizontalen Ebene und die geplante Route übertragen. Erhält das AFF die Route eines anderen AFF, wird diese als dynamisches Hindernis in der Karte des AFF eingetragen und/oder in der Pfadplanung berücksichtigt, vorzugsweise sobald ein Distanzschwellwert zwischen den beiden AFFs unterschritten wird. In einem Aspekt werden hierbei im AFF Vorfahrregeln hinterlegt, bspw. an Kreuzungspunkten von Pfaden.

Auf der Hardwareebene sind verschiedene Komponenten implementiert. Darunter ist ein Odometrie-Modul, d.h. eine Mess- und Steuereinheit für die Odometrie-Funktion, welche mit dem Navigationsmodul über eine Schnittstelle verbunden ist. Druckempfindliche Stoßstangen (bzw. kombinierte Gummi-gepufferte Schaltleisten mit Aufprallschutz) befinden sich im Abstand von vorzugweise mehr als 10 Millimeter über dem Boden und erlauben eine Kollisionsdetektion. Alternativ und/oder ergänzend können auch ToF-Sensoren und/oder sog. Nahbereichs-LIDAR/ Radar/ Ultraschallsensoren als Abstandssensoren genutzt werden. Sofern eine Kollision detektiert wird, wird ein sofortiger Stopp des Differentialantriebs ausgelöst. Dieser Differentialantrieb stellt ansonsten die generelle Fortbewegung des AFF sicher. Ein Ladeport (für galvanisch gekoppeltes oder induktives Laden) mit zugehöriger Ladeelektronik ermöglicht es, den integrierten Akkumulator wieder aufzuladen und von einer externen Ladevorrichtung mit entsprechender Energie versorgt zu werden.

Das AFF verfügt über verschiedene Sicherheitsvorrichtungen, um Menschen in seinem Umfeld zu warnen. Dazu gehören akustische Warner (Sirene, Buzzer/ Pieper u.ä.), visuelle Warner wie Sicherheitsleuchten sowie eine Projektionseinheit, welche Lichtsignale auf den Boden in Fahrtrichtung projiziert, um zu indizieren und damit zu warnen, dass das AFF sich dort entlangbewegen wird. Als ein Ergebnis der Geschwindigkeitsüberwachung kann eine Steuerung des AFF das Abbrechen der Bewegung erzwingen, wenn die gewünschte Zielgeschwindigkeit nicht innerhalb eines definierten Zeitintervalls erreicht werden kann (z. B. durch Anfahren an steilen Rampen, welche nur durch eine höhere Beschleunigung überwunden werden können; AFF wird aktiv gedrückt usw.). Die Überwachung kann direkt oder indirekt erfolgen, d.h. einerseits kann direkt die Geschwindigkeit überwacht werden, andererseits auf indirektem Weg daraus abgeleitete Kenngrößen wie Drehzahl am Rad und/ oder Motor, Drehmoment, Strom, etc. Dies resultiert in einem Zwangsabbruch der Fahrbewegung durch ein aktives Bremsen über die Motoren und/ oder separate Bremseinrichtung bis zur Drehzahl Null und anschließend das Abschalten der Elektromotoren, so dass der Elektromotor nicht mehr durch drehmomentverursachende Kraft angetrieben wird. Somit kommt der Antriebsstrang aufgrund von Lastmomenten oder Reibung zum Stillstand. Alternativ kann das AFF so konfiguriert werden, dass in dem Zustand des Stehens die Drehzahl "Null" von den Motoren aktiv gehalten wird (unter Beaufschlagung des nötigen Haltestroms bzw. Haltemoments), so dass das AFF, falls es auf abschüssigem Gelände steht, nicht wegrollen kann.

Diese oder eine andere, implementierte Steuerung kann ergänzend noch wie folgt konfiguriert sein: Die Sensoren, insbesondere die LIDARs, decken den relevanten/wichtigen Erfassungsbereich ab und können definiert Hindernisse/Personen erkennen. Dazu wird mindestens ein sogenanntes Schutzfeld, typischerweise mehrere Schutzfelder innerhalb eines Speichers der Sensoren definiert, dass aus Schwellwerten im zweidimensionalen Raum besteht. Sobald in diesem Bereich ein Hindernis oder eine Person erkannt wird, gibt der Sensor diese Information über das Hindernis oder die Person weiter an die Steuerung. Diese Steuerung wiederum reduziert die maximale Geschwindigkeit auf ein definiertes Maß (und ggf. wird das AFF auch stark gebremst). Je näher die Person bzw. das Hindernis an das AFF herankommt, werden weitere Schutzfelder aktiviert ("ausgelöst") und die Geschwindigkeit weiter verringert, ggf. bis zum Stehen. Die Größe der definierten Geschwindigkeit ergibt sich aus dem Gewicht und auch aus der Geometrie des AFF und/oder der Puffereigenschaften der Sicherheitsschaltleiste oder einer anderweitigen Stoßstange. Es muss sichergestellt werden, dass bei einer möglichen Kollision mit einer Person die resultierende Kraft so klein ist, dass keine Verletzungen an der Person entstehen können.

Weiterhin müssen die Schutzfelder innerhalb der Sensoren so bemessen werden, dass innerhalb eines Schutzfeldes von bspw. einer maximal möglichen Geschwindigkeit auf die definierte Geschwindigkeit abgebremst werden kann, womit das eingangs als definiert bezeichnete Erkennen der Hindernisse/Personen gemeint ist. Dies bedeutet auch, dass die Schutzfelder, in einem Aspekt, ineinander geschachtelt sind und unterschiedliche Distanzen abdecken. So kann ein Schutzfeld einen weiten Bereich abdecken und ein anderes Schutzfeld einen nahen Bereich. Das Schutzfeld, welches größer ist, ist bei einer höheren Geschwindigkeit aktiv, das kleinere bei einer niedrigeren Geschwindigkeit. Damit wird die Fahrgeschwindigkeit des AFF anhand des Abstands zum Hindernis bzw. zur Person moduliert: großer Abstand erlaubt hohe/höhere Geschwindigkeiten, ein kleinerer Abstand zwingt entsprechend zu kleineren Geschwindigkeiten bis hin zum Stillstand bzw. Stop und abgeschaltetes Antriebsmoment. Ggf. ist ein aktives Bremsen bspw. durch den Motor oder eine separate Bremse nötig.

Die Grenzen des einen oder von mehreren Schutzfeldern sind von der momentanen Geschwindigkeit des AFF und vom Einschlagwinkel, z.B. Lenken zur Änderung der Fahrtrichtung, abhängig. Bei größeren Geschwindigkeiten sind die Schutzfeldgrenzen weiter außen bezogen auf die Fahrzeugberandung bzw. es sind die äußeren Schutzfelder aktiv. Analog werden die Schutzfeldgrenzen in der Richtung nach außen gesetzt, in die hingelenkt wird. Bei kleineren Geschwindigkeiten werden die Schutzfeldgrenzen enger zum Fahrzeug hingelegt, bzw. weiter innen liegende Schutzfelder sind aktiv (und die äußeren entsprechend aufgehoben).

Die Weiteren findet die Übertragung von Sensordaten zweikanalig statt, wovon die Übertragung z.B. auf einem Kanal analog, auf einem anderen digital erfolgt. Die Geschwindigkeitsermittlung erfolgt in einem Aspekt über die Ermittlung der Motordrehung, wobei zwei unterschiedliche physikalische Wandlungsprinzipien eingesetzt werden. Insgesamt werden Zustandsinformation gewonnen, die nahezu - im Idealfall identische - Größen haben. So wird bspw. in einem Aspekt die Drehzahl eines Motors anhand von Drehwinkelsensoren wie a) integrierten Hall-Sensoren und b) Encoder bzw. Inkrementalgeber bzw. digital erfassten Drehwinkeldaten bestimmt. Es sind, in einem Aspekt, auch andere Wege der Geschwindigkeitsermittlung möglich, bspw. übe den Einsatz derartiger oder ähnlicher Sensorik direkt an den Rädern. Alternative Aspekte decken Kameraauswertungen ab, die bspw. für ein definiertes Sichtfenster die Bewegungen von erkannten Merkmalen im Bild ermittelt. Hierbei kann eine Kamera auf eine Oberfläche gerichtet sein, bspw. den Boden oder eine Seitenwand, und es können auf Basis gemessener Änderungen der Oberflächenstruktur relativ zum autonomen Fahrzeug die Geschwindigkeit bestimmt werden, insbesondere dann, wenn das Sichtfenster der Kamera eine definierte Größe hat, was bei einem weitestgehend ebenem Boden und einem konstanten Sichtabstand der Kamera zum Boden der Fall ist. Es können weiterhin LIDAR-Daten und/oder Daten einer 2D und/oder 3D-Kamera genutzt werden, die unter Bezug auf die relative Änderung der Position von Hindernissen und/oder Landmarken im Umfeld des AFF ermittelt werden, etc. Diese können, in einem Aspekt, in einer Karte des AFF enthalten sein.

Die Steuerung selbst wertet die erhaltenen Sensordaten aus. So werden bspw. die Sensordaten von a) und b) im Prozessor der Steuerung verglichen und bei Übereinstimmung, ein messtechnisch bedingter Minimalunterschied wird dabei zugelassen, als valide Sensorquelle für die Steuerung akzeptiert. Andernfalls wird über die Steuerung die Fahrt abgebremst und zum Stillstand gebracht.

Der Prozessor der Steuerung selbst wird durch einen Watchdog überwacht, der die Antriebsmotoren abschaltet, sobald die Steuerung nicht mehr mit Strom versorgt wird. Dabei schließt zunächst elektronisch mindestens ein (aktiv gesteuertes) Halbleiterelement wie einen MOSFET-Schalter, die im spannungslosen Zustand leitfähig sind, und dann parallel mechanisch ein Relais die Wicklungen des Motors kurz. Durch den Kurzschluss fließt aufgrund der Induktionsspannungen (sich noch drehende Motorwelle) ein sehr großer Strom, der stark bremsend wirkt. Zusätzlich kann noch eine aktive, mechanische Bremse vorgesehen sein, die an die Räder- oder Motorachsen montiert ist, elektrisch gesteuert ist und die eine Mindestversorgungsspannung braucht, damit die Bremse sich löst. D.h. bei Stromausfall fällt die Bremse automatisch in den Ruhezustand und blockiert (wie Totmannschalter). Dieser hardwarenah implementierte Mechanismus stellt sicher, dass, selbst wenn eine Software auf Applikationsebene, die bspw. das AFF anweist, eine Ladung schnell zu transportieren, das Hindernis nicht erkennt und schnell weiterfahren will, die Hardware das AFF auf eine definierte Geschwindigkeit bremst, wobei die definierte Geschwindigkeit auch 0 sein kann.

Bei den Ladungen, die das AFF transportiert, kann es sich in einem Aspekt um Rollwagen handeln, die so konfiguriert sind, dass auf diese Warenträger mit Bauteilen gelagert sein können, welche ggf. auch gestapelt sind. Derartige Rollwagen können in unterschiedlichen Dimensionen vorliegen. In einem Anwendungsszenario haben die Wagen eine Breite von z.B. 40cm. Die Rollwagen können aufgereiht sein und es können sich mehrere Reihen nebeneinander befinden, teilweise mit einem Abstand von weniger als 3cm. In einem Aspekt sind die Rollen der Rollwagen innerhalb von Schienen gelagert, bspw. von Monorail-Schienen, z.B. der Firma Orgatex. In einem alternativen und/oder ergänzenden Aspekt befinden sich auf dem Boden mittig zwischen den Wagen mindestens eine Markierungs- bzw. Führungslinie. Derartige Markierungs- und/oder Führungslinien können auch anders als mittig positioniert sein. Es kann sich in einem Aspekt auch um Projektionen, Muster oder Befestigungen wie Schienen etc. auf dem Boden handeln. Diese verschiedenen Aspekte werden kollektiv aus Vereinfachungsgründen dennoch als Markierungs- und/oder Führungslinien bezeichnet.

Am Anfang einer Reihe von Rollwagen befinden sich auf dem Boden Vorrichtungen, um die Reihen zu identifizieren. Dabei kann es sich um auf dem Boden befestigte Identifizierungscodes in 1D, 2D oder 3D wie Barcodes, QR oder Aruco-Marker handeln. Es kann sich aber auch um dort platzierte RFID-Tags handeln. In einem alternativen Aspekt befinden sich diese Markierungen bzw. RFID-Tags an den vorhandenen Schienen. In einem alternativen und/oder ergänzenden Aspekt sind diese Markierungen bzw. RFID-Tags an den Rollwagen und/oder den Warenträgern auf den Rollwagen angebracht, womit eine direkte Detektion der Ladung möglich wird. In einem alternativen und/oder ergänzenden Aspekt sind diese Markierungen bzw. RFID-Tags an Paletten und/oder an anderen Ausführungsformen der zu transportierenden Ladung befestigt. Im Falle von 1D, 2D oder 3D-Identifizierungscodes wie Barcodes, QR-Codes, etc. können diese Identifizierungscodes in einem alternativen Aspekt auch auf den Boden und/oder andere Flächen projiziert werden, an denen die Identifizierungscodes durch das AFF ausgelesen werden können. Alternativ und/oder ergänzend kann es sich auch um lichtemittierende Markierungen handeln und/oder um Displays.

Über die Drahtlosschnittstelle kann das AFF Anweisungen erhalten, eine bestimmte Position im Raum einzunehmen oder per vorher definiertem Ablaufplan, der auch lokal im AFF gespeichert sein kann. Es kann auch Anweisungen erhalten, eine bestimmte Ladung aufzunehmen, in einem Aspekt die im vorigen Abschnitt genannten Rollwagen. Dazu navigiert das AFF zunächst zu einer Position im Raum, an der sich die aufzunehmende Ladung befindet (Grobnavigation) und stoppt, bspw. in einem Abstand von 70 cm von der vermeintlichen Position entfernt. Diese Bewegungen werden im Vorwärtsgang des AFF ausgeführt.

Dort setzt die Feinorientierung ein. Dazu wendet das AFF und tastet mittels seiner Sensorik, die sich vorne an der Ladefläche (und damit hinten am AFF) befindet, den Bereich ab, in dem sich die zu transportierende Ladung befindet. In einem Aspekt detektiert das AFF direkt die Ladung über die genannte Sensorik wie bspw. RFID-Tags. In einem alternativen und/oder ergänzenden Aspekt detektiert das AFF mittels der Kamera eine IdentifikationsVorrichtung zur Identifizierung einer Reihe, wie einen 1D-, 2D- oder 3D-Identifizierungscode , z.B. einen Aruco-Marker, der sich bspw. mittig oder an der äußeren Berandung am Beginn einer Reihe von Rollwagen befindet. Für den Fall, es handelt sich bei den Identifikations-Vorrichtungen um RFID-Tags, wird anstelle der Kamera ein RFID-Reader genutzt. Befinden sich diese Identifikations-Vorrichtungen nicht auf dem Boden, sondern anderswo, werden diese Identifikations-Vorrichtungen auf äquivalentem Weg detektiert. Die in den Identifikations-Vorrichtungen enthaltenen Informationen, bspw. ein Identifizierungscode, wird mit einem in einem Speicher hinterlegten Identifizierungscode verglichen, welche auch Positionsinformationen beinhaltet und mit der Karte im Navigationsmodul synchronisiert ist. Damit kann das AFF abgleichen, ob es sich tatsächlich vor der gesuchten Ladung befindet. Ist dies nicht der Fall, kann das AFF im Rahmen der Feinorientierung bspw. eine Reihe mit Rollwagen anfahren, die sich in der Nähe befindet, bspw. direkt nebenan.

Als nächstes detektiert die Sensorik vorne an der Ladefläche, insbesondere die Kamera, die Position einer Markierungs- bzw. Führungslinie. In einem alternativen Aspekt, bei dem statt Markierungs- bzw. Führungslinien Schienen für die Wagen genutzt werden, werden diese Schienen auch durch die Sensorik detektiert. Sofern das AFF nicht mittig zwischen den Schienen bzw. zentral zur Markierungs- bzw. Führungslinie oder etwaigen anderen Identifikationsvorrichtungen, die die Orientierung der Rollwagen beschreiben, und damit parallel zu diesen Rollwagen ausgerichtet ist, führt das AFF ein Fahrmanöver aus, bspw. in S-Form, um sich derartig zu positionieren. Damit ist das AFF parallel zu Markierungs- bzw. Führungslinie, Schiene und/oder Identifikationsvorrichtung ausrichtet und damit auch parallel zu den Seiten der abgestellten Rollwagen, wobei es dabei einen Abstand zu diesen Rollwagenseiten hält, der größer als 5mm ist, z.B. zwischen 30-50 mm.

Das AFF bewegt sich anschließend parallel zur Markierungs- und/oder Führungslinie auf die in der Reihe stehenden Rollwagen zu. Hierbei ist das AFF in der Lage, auch leere Reihen zu erkennen, bspw. dadurch, dass es der Markierungs- bzw. Führungslinie bis zum Ende folgt und kein Hindernis bzw. Rollwagen detektiert wird und/ oder über die am AFF integrierten Vorrichtungen zur 2D/ 3D-Umgebungswahrnehmung. In einem alternativen Aspekt tastet der mindestens eine Entfernungssensor die Tiefe der Reihe ab, vergleicht diese ermittelte Tiefe mit im Speicher hinterlegten Daten zur Reihentiefe und ermittelt, ob sich Hindernisse bzw. Rollwagen in dieser abgetasteten Reihe befinden. Dies kann in einem Aspekt durch mindestens einen Sensor vorne an bzw. unter der Ladefläche bzw. in einem alternativen und/oder ergänzenden Aspekt durch den mindestens einen Sensor oberhalb der Ladefläche geschehen.

Detektiert das AFF einen Rollwagen, fährt das AFF bis an diesen Rollwagen heran bzw. mit der Ladefläche unter diesen. Das AFF verfügt in seinem Speicher über Informationen zur Tiefe der Rollwagen, die bspw. 40 cm und 60 cm betragen kann (aber auch andere Maße umfassen kann). Handelt es sich bspw. um einen 60 cm tiefen Rollwagen, fährt das AFF so weit unter den Rollwagen, bis die Abstandsensoren oberhalb der Ladefläche detektieren, dass der Rollwagen am Ende der Ladefläche angekommen ist. Handelt es sich um einen Rollwagen, der bspw. nur 40 cm tief ist und damit eine geringere Tiefe aufweist als die Länge der Ladefläche, fährt das AFF soweit unter den Rollwagen, bis die Abstandssensoren oberhalb der Ladefläche detektieren, dass der Rollwagen mit einer Länge von bspw. ca. 40 cm auf der Ladefläche positioniert ist, die Ladefläche aber nicht wesentlich unter dem Rollwagen herausreicht. Hierbei wird in einem Aspekt eine Differenzberechnung vorgenommen, bei der die vom Abstandssensor ermittelte Länge der nicht beladenen Fläche von der bekannten Gesamtlänge der Ladefläche subtrahiert wird. Dabei können, in mindestens einem Aspekt, auch Informationen aus einem Speicher genutzt werden, die die Länge bzw. Tiefe der aufzunehmenden Ladung beschreiben.

In einem alternativen und/oder ergänzenden Aspekt befindet sich ein Sensor am Ende der Ladefläche (und auf der Seite, von wo die Ladung aufgenommen wird), welcher nach oben gerichtet ist und der erfassen kann, ob die Ladung über das Ende der Ladefläche hinausragt. Hierbei kann es ich um einen Laser-Abstandsmesser handeln, um einen Ultraschallsensor, eine einen ToF-Sensor, einen LIDAR, Radar, etc. Detektiert bspw. der Sensor oder ein anderer (bspw. im vorigen Absatz beschriebener Sensor bzw. die im Rechner des AFF ablaufende Auswertung der Sensordaten), dass eine Ladung über die Ladefläche hinausragt, können in einem Aspekt im Speicher des AFF Regeln hinterlegt sein, dass die Ladung wieder abgesetzt wird. Das ist insbesondere dann der Fall, wenn in einem Speicher hinterlegt ist, dass die abzuholende Ladung eine Tiefe hat, die geringer ist als die Tiefe der Ladefläche. In einem Aspekt ermittelt das AFF über in einem Speicher abgelegte Werte die Dimensionen der Ladung und berücksichtigt diese Dimensionen, in einem Aspekt, bei der Ermittlung des Überstehens.

Nach Absetzen der Ladung kann das AFF die Ladung erneut aufnehmen. Dabei kann, in einem Aspekt, dass AFF ein neues Herannavigieren an die Ladung stattfinden, bspw. eine Neuorientierung anhand der Führungslinien vornehmen. Wird bspw. zweimal hintereinander ein Aufnehmen der Ladung festgestellt, die über die Ladefläche hinausragt, kann das AFF eine Fehlermeldung an ein System, welches mit dem AFF über die Drahtlosschnittstelle verbunden ist, absetzen. Das AFF kann, wie bei der Detektion von weiteren Fehlern im Ablauf, etc., zudem eine Signalleuchte aktivieren und/oder eine Warteposition einnehmen. Dabei wird die Warteposition vorzugsweise in Bereichen eingenommen, die auf der im Navigationsmodul hinterlegten Karte als mögliche Wartebereiche hinterlegt sind.

Anschließend wird die Ladefläche angehoben, so dass die Ladung durch das AFF bewegt werden kann, z.B. um einen Bereich von etwa 20 bis 30mm, so dass die Stützen/ Auflagepunkte oder Räder des Rollwagens (oder einer anderen, aufzunehmenden Ladung) zuverlässig aus der Bodenhaftung gehoben sind. Das AFF fährt geradeaus und parallel aus der Reihe heraus und navigiert anschließend zur Zielposition (Grobnavigation). Hier wird, wie bereits bei der Identifizierung der abzuholenden Ladung, die richtige Reihe detektiert (Feinnavigation). Das AFF wendet und richtet die Ladefläche in Richtung der Reihe aus, positioniert sich mittig vor der Reihe, in der die Ladung abgesetzt werden soll, und fährt rückwärts in die Reihe hinein, wie jeweils bereits für den Abholvorgang der Ladung beschrieben wurde.

Anschließend ermittelt das AFF den Punkt, an dem die Ladung abgesetzt werden soll. Die Abladeposition kann eine Maschine sein, ein Lager, ein Absetzpunkt, etc. In einem Aspekt handelt es sich um ein Areal zum Abstellen von Rollwagen bspw. in Form einer Reihe. In diesem Fall ermittelt das AFF zunächst, ob die Reihe leer ist und nutzt dafür mindestens einen Sensor vorne an bzw. unter der Ladefläche bzw. in einem alternativen und/oder ergänzenden Aspekt durch den mindestens einen Sensor oberhalb der Ladefläche. Ist die Reihe leer, fährt das AFF dabei in einem Aspekt bis zum Ende der Markierungs- und/oder Führungslinie, ggf. unter Abtasten von etwaigen Hindernissen, insbesondere dort abgestellten Rollwagen. In einem alternativen und/oder ergänzenden Aspekt kann das AFF initial prüfen, ob die Reihe leer ist. Im Fall einer leeren Reihe wird die Ladung am Ende der Reihe abgesetzt und das AFF fährt vorwärts wieder aus der Reihe hinaus. Ist die Reihe nicht leer, fährt das AFF bis an das detektierte Hindernis heran, vorzugsweise einen bereits dort abgestellten Rollwagen, und vorzugsweise bis auf einen Abstand von unter 3cm, setzt die Ladung dort ab und fährt vorwärts wieder aus der Reihe hinaus.

Das AFF ist über eine Drahtlosschnittstelle mit einer Datenbank verbunden, welche Informationen zu Ladungen und deren Position enthält. Als weitere Attribute sind in einem Aspekt auch die Größe der Rollwagen bzw. der zu transportierenden Ladungen (Paletten, etc.) und/oder deren Masse bzw. Gewicht hinterlegt. In einem Aspekt kann es sich hier um ein Warenwirtschaftssystem handeln. Diese Datenbank wird mit den Navigationsmodul abgeglichen. Die Datenbank ist, in einem Aspekt, so konfiguriert, dass an einem Abholort, bspw. einer Lagerstation für Teile, die transportiert werden sollen, mindestens eine Reihe (bevorzugt mehrere Reihen) hinterlegt sind, in der bzw. denen sich zu transportierenden Ladungen befinden können. Dazu zählt, in einem Aspekt, mindestens auch eine Vorrichtung zur Identifizierung einer Reihe, deren örtliche Position und/oder auch die absolute oder relative Position der Reihen zueinander. Das AFF kann damit, wie oben beschrieben, durch Auslesen einer Vorrichtung zur Identifizierung einer Reihe seine Position ermitteln, indem es bspw. die Koordinaten der Vorrichtung in der Datenbank abfragt. Die Datenbank ist ferner so konfiguriert, dass in der Datenbank die zu transportierenden Ladungen und/oder auch weitere Ladungen hinterlegt sind inkl. ihrer räumlichen Zuordnung. Dazu kann bspw. zählen, dass eine Art von zu transportierender Ladung in vier Reihen mit je drei Bodenrollern vorgehalten wird, die alle transportiert werden sollen.

Die Datenbank kann, basierend auf Regeln, die Reihenfolge der zu transportierenden Ladungen und, in einem Aspekt, auch die vom AFF abzufahrende Strecke vorgeben. Das kann mit Blick auf in Reihen vorgehaltene Ladungen bedeuten, dass die Reihe und die Position innerhalb der Reihe in eine Sequenz gebracht werden, in der die Ladungen vom AFF zu Transportzwecken aufgenommen werden. In der Datenbank wird demzufolge erfasst, in welcher Reihenfolge die Ladungen transportiert worden sind, indem die vom AFF zurückgelegte Strecke über das Odometrie-Modul und/oder optische Sensoren zur Positionsbestimmung ermittelt wird. In der Datenbank und/oder einem mit der Datenbank in Beziehung stehendem Speicher sind ferner Regeln hinterlegt, die den Transportaufträgen und/oder den räumlichen Positionen der zu transportierenden Ladungen zugeordnet sind und welche Anweisungen an das AFF beinhalten können, bestimmte Steuerungsvorgänge auszulösen. Dazu kann, in einem Aspekt, das Ansteuern einer Tür und/oder Schleuse bedeuten, was bspw. deren Öffnen und/oder Schließen auslöst. In einem alternativen und/oder ergänzenden Aspekt kann darunter auch eine Fehler- und/oder Alarmmeldung verstanden werden, die Signale am AFF auslöst und/oder über eine Drahtlosschnittstelle triggert, welche bspw. eine manuelle Intervention am AFF erfordern.

Das AFF ist derart konfiguriert, dass in seinem Navigationsmodul eine Karte hinterlegt ist, welche in verschiedene Zonen eingeteilt ist. Dabei besteht die Karte in einem Aspekt aus verschiedenen Ebenen, die optional verfügbar sind. Eine der Ebenen berücksichtigt bspw. den Energieverbrauch, der sich aus Nutzlast, Steigung, Reibungskoeffizient des Bodens, etc. ergibt. Eine weitere Ebene berücksichtigt die Dichte an beweglichen Hindernissen. Eine andere Ebene zeigt feste Hindernisse auf, die umfahren werden müssen, ohne dass die festen Hindernisse durch die Sensorik, die üblicherweise für die Positionsbestimmung genutzt wird wie bspw. eine Kamera, ein LIDAR, etc., notwendigerweise erkannt werden. Eine weitere Ebene berücksichtigt Hindernisse, die durch die genannten Sensoren erkannt werden. Eine andere Ebene kann Verkehrsregeln enthalten, bspw. eine Vorzugsfahrtrichtung, ein Rechtsfahrgebot, Einbahnstraßenregeln, etc. Die Ebenen können in einem Aspekt auch integriert sein. Ein Beispiel sind Hindernisse, die durch die Sensorik teilweise nicht oder nur schlecht erkannt werden und Zonen, die bestimmten Verkehrsregeln unterliegen. In einem alternativen und/oder ergänzenden Aspekt werden mindestens zwei Ebenen für Navigationszwecke herangezogen.

Ferner ist das AFF mit einem Management-System verbunden, welches dem AFF Anweisungen zum Transport von Ladungen geben kann und das so konfiguriert ist, dass eine Priorisierung von Aufgaben für die AFF vorgenommen werden kann. In einem alternativen Aspekt ist das Management-System in mindestens einem AFF implementiert. Diese Priorisierung wird auf Basis der folgenden Parameter vorgenommen und kann, in einem Aspekt, durch zeitgleiche Optimierung mindestens eines der folgenden Parameter vorgenommen, welche als Kostenfunktion(en) abgebildet werden:
- der Art der zu transportierenden Ladungen
- der zurückzulegenden Wegstrecke
- der Lebensdauer (Restkapazität, sog. "State-of-Health" SoH) und des Ladezustands ("State-of-Charge" SoC) des Akkumulators
- der Dringlichkeit des Auftrags
- dem Wartungszustand des AFF, insbesondere der verbleibenden Zeit bis zu einem Wartungsereignis
- etwaige technische Probleme des AFF bzw. dessen Wartungszustand
- Verfügbarkeit anderer AFF
- den Eigenschaften des AFF, die für den Transport relevant sind, bspw. Dimensionen der Ladefläche, maximales Ladegewicht, mögliche Hubhöhe der Ladung, etc.

In einem weiteren Aspekt ermittelt das AFF seine Betriebszeit bzw. die Betriebszeit einzelner Komponenten bzw. anderweitig messbare Faktoren mit Einfluss auf die Lebensdauer einer Komponente, speichert diese ggf. und vergleicht diese Zeiten mit in einem Speicher hinterlegten korrespondierenden Zeiten. Dabei wird in einem Aspekt eine Differenz der Zeiten gebildet und mit im Speicher hinterlegten Schwellwerten verglichen. Wird ein Schwellwert unterschritten, wird eine Kostenfunktion für den Bewegungsplaner generiert, die für die Bewegungsplanung berücksichtigt wird. Dies kann, in einem Aspekt, die mögliche Betriebszeit des Akkumulators betreffen, die sich aus dem Produkt aus der Lebensdauer des Akkumulators (Restkapazität - SoH) und des Ladezustands - SoC) ergibt.

Alternativ kann ein AFF auch einen höheren Verschleißgrad/ fehlende Schmierung o.ä. im Antrieb aufweisen und daher mehr Energie beim Fahren benötigen als andere AFF. Hat diese gewisse Mindestalter in Betriebsstunden, Ladezyklen und/oder messtechnisch bestimmte SoH-Zustände erreicht, reduziert das AFF (und/oder ein übergeordnetes Flottenmanagement-System) als Konsequenz entsprechend der Anzahl und/oder Länge der Fahrten, bis der Akkumulator ausgetauscht wird.

In einem alternativen und/oder ergänzenden Aspekt kann das AFF oder ein übergeordnetes Flottenmanagement-System Transportaufträge über mehrere AFF derart verteilen, dass Transportaufträge, die mit kürzeren Wegstrecken assoziiert sind, vornehmlich solchen AFF zugeteilt werden, die aufgrund ihrer Akkumulator-Kapazität, und/oder - Lebensdauer schneller wieder aufgeladen werden müssen und/oder die aufgrund anderer Verschleißparameter nicht mehr so viel Wegstrecke zurücklegen sollen, um etwaige Folgeschäden zu vermeiden. D.h., diese AFF verfügen über eine vergleichsweise geringe Akkumulator-Kapazität, und/oder -Lebensdauer und/oder über erhöhte Verschleißparameter anderer Bauelemente.

In einer ergänzenden Ausführung werden die Differenzwerte in einer Datenbank abgespeichert und das AFF bzw. ein übergeordnetes Management-System erstellt eine Prognose für einen Zeitpunkt, wann ein bestimmter Schwellwert erreicht wird. Diese Prognose kann alternativ und/oder ergänzend in den Bewegungsplaner einfließen. Die Prognose kann, in einem Aspekt, derart realisiert werden, dass ein Durchschnittswert pro Woche gebildet wird, die Differenz zum Schwellwert errechnet und dieser Wert durch den Durchschnittswert pro Woche geteilt wird, um die Anzahl an Wochen zu erhalten, wann der Schwellwert erreicht wird. Prognostizierte Werte können im zuvor genannten Managementsystem abgespeichert werden. In einer alternativen und/oder ergänzenden Ausführung werden diese Werte über eine Drahtlosschnittstelle an ein Managementsystem übertragen, dass die Prognosen erstellt und wieder an das AFF zurücküberträgt.

Das AFF verfügt in einem Aspekt über ein fortlaufendes Monitoring des Energieverbrauchs, der Abschätzung Restkapazität des Akkumulators und über eine Prognosefunktion, wann ein Zustand des Akkumulators erreicht wird, der ein Laden notwendig macht. Dies kann bspw. mathematisch über das Integral aus U(t)*I(t)*dt ermittelt werden, wobei die Parameter U für die momentane Spannung, I für den momentanen Stromverbrauch und t für die Zeit stehen.

In einem Aspekt misst eine mit der Steuerung verbundene Sensorik die Spannung der Akkumulatorzellen im Zeitablauf, vergleicht den Spannungsabfall mit in einem Speicher hinterlegten Werten und ermittelt einen Zeitpunkt, wann die Kapazität des Akkumulators einen Schwellwert unterschritten hat. Das AFF hat ferner in seinem Speicher übliche Zeiträume hinterlegt, wie lange eine Aufladung des Akkumulators je nach Restkapazität (SoH) dauert. Dies kann, in einem Aspekt, eine Komplettladung des Akkumulators implizieren, in einem anderen Aspekt eine Ladezeit, um bspw. eine fixe Betriebszeit des AFF zu garantieren, die unter der Gesamtbetriebszeit bei initial nahezu voll geladenem Akkumulator bedeutet. Eine nicht vollständige Aufladung des AFF (bspw. nur 50% oder nur 25%, wobei der Wert von einer Prognose über das künftige Auftragsvolumen abhängen kann), kann das AFF dann in Erwägung ziehen, wenn bspw. an einem bestimmten Zeitpunkt mit einer Unterbrechung der Transportaufgaben gerechnet werden kann (und es bis dahin über eine ausreichende Restfahrstrecke verfügt), bspw. weil das Ende einer Schicht erreicht wurde, während bis dahin das AFF jedoch noch weitere Transportaufgaben übernehmen soll.

In einem Aspekt kann die prognostizierte Leerlaufzeit des AFF, in der es keine Aufträge abarbeitet, bspw. 20 min betragen, wobei dies in einem Aspekt ein Zeitraum sein kann, indem der Akkumulator bspw. vollständig geladen werden kann. In einem alternativen und/oder ergänzenden Aspekt kann bspw. ein Auftragsvolumen prognostiziert werden, bei dem das autonome Fahrzeug über einen Zeitraum, der mindestens 50% der üblichen Ladedauer für den Akkumulator des autonomen Fahrzeugs betrifft, keine Aufträge abarbeitet, welcher dann wiederum als Zeitraum für das (weitere) Aufladen des Akkumulators eingeplant werden kann. Damit verfügt das AFF über ein System zur adaptiven Ladedaueranpassung, indem es eine Prognose über zukünftige Aufträge zurückgreift, eine Prognose über die Restladung des Akkumulators erstellt und im Falle einer Restkapazität, die einen Schwellwert unterschreitet, lediglich eine Teilladung des Akkumulators vornimmt, wenn innerhalb eines definierten Zeitraums ein Auftragsvolumen prognostiziert wird, dass unter einem Schwellwert liegt. Die Prognose über die Restladung des Akkumulators erfolgt damit im Zeitverlauf.

Insgesamt erstellt das AFF einen Zeitplan für das Aufladen des Akkumulators, der auch Informationen über die zu nutzenden Ladestationen beinhalten kann wie deren ID und/oder örtliche Position. Der erstellte Zeitplan kann, in einem Aspekt, als Kostenfunktion im Rahmen der Bewegungsplanung des AFF berücksichtigt werden. Das AFF kann nun ein prognostiziertes Zeitintervall, in dem ein Laden des Akkumulators stattfinden soll, wie bspw. auch den Zeitplan für die Aufladung des Akkumulators, über das vorher beschriebene Kommunikationsmodul zur AFF-AFF-Kommunikation an andere AFF übertragen. Diese integrieren die Verfügbarkeit einer Ladestation als Kostenfunktion in die Bewegungsplanung. In einem alternativen Aspekt wird diese Information an das Managementsystem übertragen und dort bei der Planung der Aufgaben für die AFF berücksichtigt.

In einem weiteren Aspekt ist das AFF so konfiguriert, dass es selbständig erlernen kann, wann und in welchem Bereich mit Transportaufträgen zu rechnen ist: Das AFF ist hierfür so konfiguriert, dass es die zurückgelegten Pfade im Stunden-, Tages-, Wochen-und/oder Monatsrhythmus und/oder nach anderen saisonalen Aspekten (bzw. über eine oder mehrere Schichten) ortsaufgelöst abspeichert und auswertet. Daraus erstellt das AFF für jeden Zeitpunkt eine Wahrscheinlichkeit, mit der es sich in bestimmten Bereichen auf der Karte aufhalten wird, wobei sich diese bspw. aus dem Verhältnis der Summe addierter Transportaufträge über alle möglichen Transportaufträge jeweils über einen bestimmten Zeitraum ergeben können, bspw. als räumliche Schwerpunktberechnung. Das kann beispielhaft so aussehen, dass für die Dienstage der vorangegangenen sechs Monate evaluiert wird, wie oft im Zeitfenster 16-17 Uhr in einem gegebenen Bereich einer Fertigung ein Transportauftrag anfiel. Wenn es dazu 14 Fälle gab, liegt die Wahrscheinlichkeit dafür bei 14/21 Wochen, d.h. bei 66%.

Im Falle eines Wartevorgangs, in dem das AFF keinen Auftrag hat, sich also im Leerlauf befindet, positioniert sich das AFF in den Bereichen auf der Karte, in denen es mit hoher Wahrscheinlichkeit einen Auftrag ausführen muss bzw. dessen Wahrscheinlichkeit über einem Schwellwert liegt. Dadurch reduziert sich die Zeit, um zum jeweiligen Startpunkt oder die nächste freie Ladestation zu fahren, sollte ein Auftrag eintreffen.

Das AFF kann derartige Informationen auch an das Managementsystem übertragen und dadurch anderen AFF verfügbar machen. In einem alternativen Aspekt werden diese Informationen über das Modul für die AFF-AFF-Kommunikation übertragen und damit anderen AFF zugänglich gemacht. Das AFF ist auch in der Lage, eigene diesbezügliche Daten, um Daten anderer AFF zu ergänzen und durch die Kombination dieser Daten eine bessere Prognose über die zu erwartenden Wahrscheinlichkeiten zu erstellen. Hierbei können in einem Aspekt die Art der Aufträge geclustert werden und ggf. als Herat-Maps dargestellt werden.

Sofern das AFF eine Warteposition einnimmt, kann das AFF diese Position auch anderen AFF über eine Drahtlosschnittstelle übermitteln. Sofern andere AFF ebenfalls Leerzeiten aufweisen und für das Areal, in dem sich das AFF bereits in einer Warteposition befindet, eine hohe Wahrscheinlichkeit für einen Auftrag ermitteln, wird den anderen AFF vorzugsweise eine andere Warteposition vorgeschlagen. Dies kann bspw. durch Absenken des Schwellwerts umgesetzt werden.

Das AFF ist ferner so konfiguriert, dass das AFF durch seine Sensorik und/oder über das Kommunikationsmodul für die AFF-AFF-Kommunikation auf der Karte die Bereiche identifiziert, in denen mit beweglichen Hindernissen zu rechnen ist. Dazu werden während des Betriebs und/oder etwaiger Wartezeiten durch die Sensorik und/oder das Kommunikationsmodul für die AFF-AFF-Kommunikation Bewegungen von Objekten im Umfeld des AFF ortsaufgelöst im Stunden-, Tages-, Wochen- und/oder Monatsrhythmus (oder hinsichtlich Schichten) aufgezeichnet und abgespeichert. Das AFF und/oder ein Managementsystem, welches hierzu Daten vom AFF erhält und die Ergebnisse wiederum an das AFF übermittelt, kann auf Basis der abgespeicherten Daten Prognosen erstellen, wann und wo mit beweglichen Hindernissen zu rechnen ist. Dazu werden bspw. wieder Auftretenswahrscheinlichkeiten, wie oben skizziert, ausgewertet. Das AFF kann in einem nächsten Schritt, wenn es keine Transportaufträge zu erledigen hat, eine Warteposition in solchen Bereichen beziehen, in denen die prognostizierte Anzahl an beweglichen Hindernissen zu dem bzw. während der prognostizierten Wartezeit unter einem Schwellwert liegt.

Das AFF ist ferner so konfiguriert, dass es bspw. Transportaufgaben über mehrere AFF verteilen kann. Dazu ist das AFF in einem Aspekt in der Lage, eine Peer-to-Peer-Steuerung einer Flotte von AFF vorzunehmen, die sich bspw. innerhalb eines Standorts, einer Halle, etc. befinden bzw. innerhalb eines auf einer Karte definierten Bereichs. Dabei werden Entscheidungen, die ein AFF auf Basis von in einem Speicher hinterlegten Regeln getroffen hat, an andere AFF über eine Schnittstelle weitergeleitet, entweder das Kommunikationsmodul für die AFF-AFF-Kommunikation, ein WLAN-Modul oder eine andere Funkschnittstelle. Hierbei werden, in einem Aspekt auch die Kriterien bzw. die den Kriterien zugeordneten Werte mit übertragen, welche für die Entscheidungsfindung genutzt wurden, bspw. Informationen über die Verfügbarkeit anderer AFF.

Liegt einem AFF nach Übermittlung der Entscheidung und ggf. der Entscheidungskriterien bzw. Werte der Entscheidungskriterien neue Informationen vor, die bspw. mindestens einen Wert der Entscheidungskriterien betreffen, so kann dieses AFF eine Neuberechnung vornehmen. Die zu treffende Entscheidung betrifft vorzugsweise das gleiche Gebiet wie die vorige Entscheidung. Diese Neuberechnung kann zu einer anderen Einsatzplanung von mindestens einem AFF führen. Wird auf diese Weise eine andere Einsatzplanung errechnet, wird diese, in einem Aspekt, erneut an andere AFF übertragen. Alternativ können derartige Berechnungen auch durch ein mit dem AFF über eine Schnittstelle verbundenes System erfolgen.

### Zeichnungen

Die Erfindung wird nun anhand der der Zeichnungen näher erläutert. Es zeigen:
Fig. 1 Seitenansicht eines AFF
Fig. 2: Frontansicht eines AFF
Fig. 3: AFF von oben
Fig. 4a: AFF mit Sensorik im Umfeld der Ladefläche, mit Fig. 4aA Sensoreinheit zur Detektion einer Ladung auf der Ladefläche und Fig. 4aB rückwärtsgerichteter Sensorik
Fig. 4b: AFF mit rückwärtsgerichteter Sensorik anderer Bauart
Fig. 5 Architektursicht
Fig. 6 Aufnehmen einer Ladung
Fig. 7 Feinnavigation
Fig. 8 Mittel- bzw. Führungslinie vs. Schiene
Fig. 9 a-c) Ladungs- bzw. Rollwagentransport
Fig. 10 Betriebszeiten und Bewegungsplanung
Fig. 11 Kapazitätsmanagement von Ladestationen autonomer Fahrzeuge
Fig. 12 Ermittlung von Wartebereichen und/oder Ort und Zeit von Aufträgen
Fig. 13 Sichtfeldbetrachtung des rückwärtsgerichteten LIDARs mit Ladung auf Ladefläche
Fig. 14 Ablauf Energiemanagement und Robotersteuerung
Fig. 15 Systemsicht
Fig. 16 Steuerung
Fig. 17 Ablauf der Steuerung
Fig. 18 Ladungsauswertung
Fig. 19Position bzw. Überstehen einer Ladung
Fig. 20Überstehen der Ladung - Messung auf Ladefläche
Fig. 21 Mehrebenen-Karten
Fig. 22Flottenmanagement
Fig. 23 Kartierung Energieverbrauch

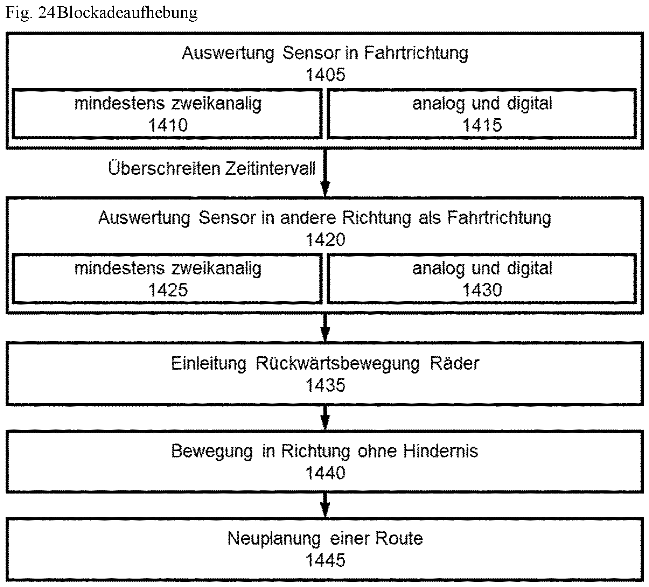

Fig. 24Blockadeaufhebung
Fig. 25 Ablauf Schlupferkennung
Fig. 26 Winkel Schlupferkennung
Fig. 27Ladeprognoseerstellung
Fig. 28 Ablauf Sichtbereich-Beschränkung
Fig. 29Angepasste Belegtheitskartenaktualisierung
Fig. 30Hindernisbefreiung
Fig. 31Kalibrierung der Odometrie-Einheit und/oder der Inertialsensordatenauswertung
Fig. 32Kalibrierung anhand der Kante
Fig. 33 Ablauf Anpassung Fahrverhalten in Abhängigkeit der Ladung
Fig. 34Zylinder und Ladefläche (Seitenansicht)
Fig. 35 gewindebasierter Zylinder
Fig. 36 Antriebsvorrichtung der Zylinder
Fig. 37 Warnungsgenerierungskomponenten
Fig. 38 Ablauf der Warnungsgenerierung

### Detaillierte Beschreibung der Erfindung

Die Erfindung wird nun anhand mehrerer Ausführungsformern erläutert. Bei dieser Ausführungsformen handelt es sich um ein autonomes Flurförderzeug. Die Prinzipien in den Ausführungsformen können auch sonstige autonome Fahrzeuge sein, einschließlich verschiedener, mobiler Roboter, die für unterschiedliche Anwendungen konfiguriert sind.

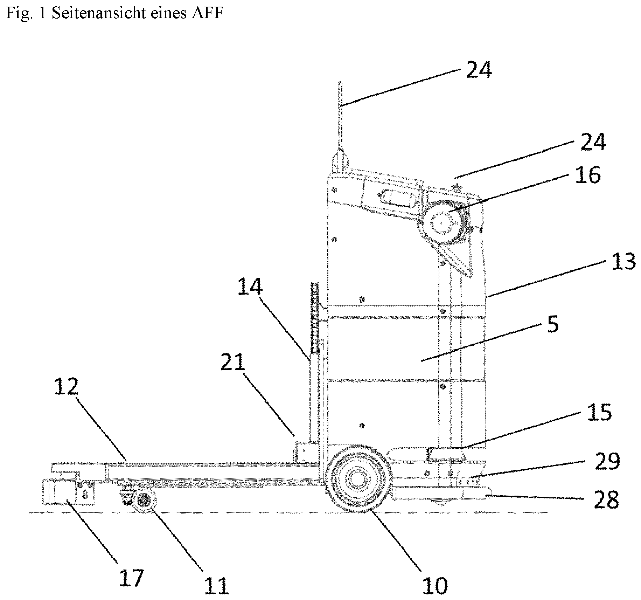

Fig. 1 stellt die Seitenansicht einer Ausführungsform eines AFF 5 dar. Unterhalb des Aufbaus 13, der sich vorne befindet, befinden sich die Antriebsräder 10. Unterhalb der Ladefläche 12, die sich an den Aufbau 13 anschließt und sich hinten befindet, sitzt eine Gelenkrolle 11. Am Ende der Ladefläche 12 und unterhalb von der Ladefläche 12 sitzt eine rückwärtsgerichtete Sensoreinheit 17, die bspw. über einen rückwärts gerichteten Sensoreinheit-LIDAR 18 verfügt, eine rückwärtsgerichtete Sensoreinheit-Kamera 20 und mindestens eine rückwärtsgerichtete Sensoreinheit-Leuchte 19. Die mindestens eine Leuchte kann direkt in der rückwärtsgerichteten Sensoreinheit 17 integriert sein oder an einer anderen, rückwärtsgerichteten Position, die es bspw. ebenfalls ermöglicht, das Sichtfeld der Sensoreinheit-Kamera 20 auszuleuchten. Oberhalb der Ladefläche 12 und am Aufbau 13 anschließend sitzt eine Ladefläche-Ladungssensor 21 zur Detektion einer Ladung 143 auf der Ladefläche 12. Die Ladefläche 12 selbst ist durch einen Ladeflächen-Höhenverstellantrieb 14 in ihrer Höhe verstellbar, z.B. um mindestens 20-30 mm, wobei die Höhenverstellung durch einen Höhenverstellungssensor 39 kontrolliert wird. Vorne an den Seiten befindet sich jeweils ein im Wesentlichen vertikaler LIDAR 16. Oben auf dem Aufbau 13 und nach vorne gerichtet sitzen Bedienelemente 24, und oben auf dem Aufbau 13 sitzt ebenfalls noch mindestens eine Antenne 27 für die ZigBee^{®}, Bluetooth, WLAN, oder ISM/ 433/ 868 MHz (Sub-1-GHz)-Übertragung.

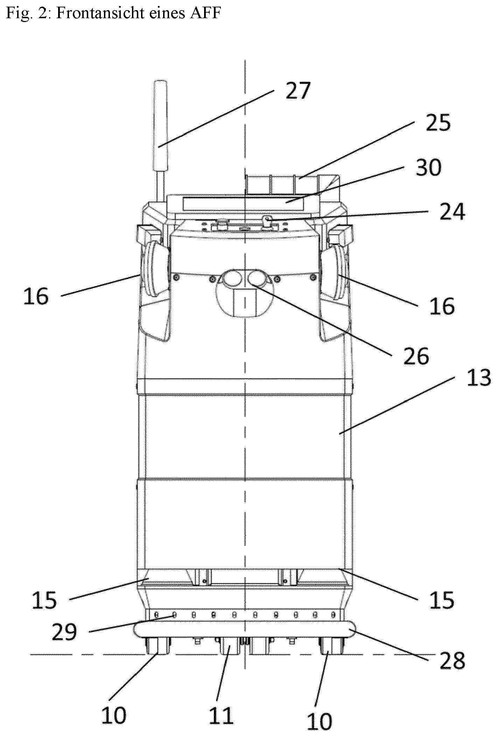

Fig. 2 stellt eine zweite Ausführungsform eines AFF 5 von vorne dar. Der Aufbau 13 ist auf zwei Antriebsrädern 10 gelagert und einer Gelenkrolle 11, in diesem Fall einer Doppel-Gelenkrolle. Vorne befinden sich ebenfalls eine druckempfindliche Stoßstange 28 und zudem Infrarot-ToF-Sensoren 29 für eine Kollisionsdetektion. Zwei bspw. horizontal orientierte LIDAR 15 tasten den vorderen Bereich ebenfalls ab, während zwei im Wesentlichen vertikal orientierte LIDAR 16 oben am AFF 5 angebracht sind. Vorne zentriert befindet sich eine Projektionseinheit 26, um Lichtsignale auf den Boden zu projizieren und Menschen im Umfeld des AFFs 5 auf die Fahrtrichtung des AFF 5 aufmerksam zu machen. Oben auf dem Aufbau 13 befindet sich vorne ein Feld mit Bedienelementen 24, dahinter ein Display 30. Oben auf dem AFF 5 finden sich ferner mindestens eine Antenne 27 sowie Alarmleuchten 25, die als Ampel ausgestaltet sind.

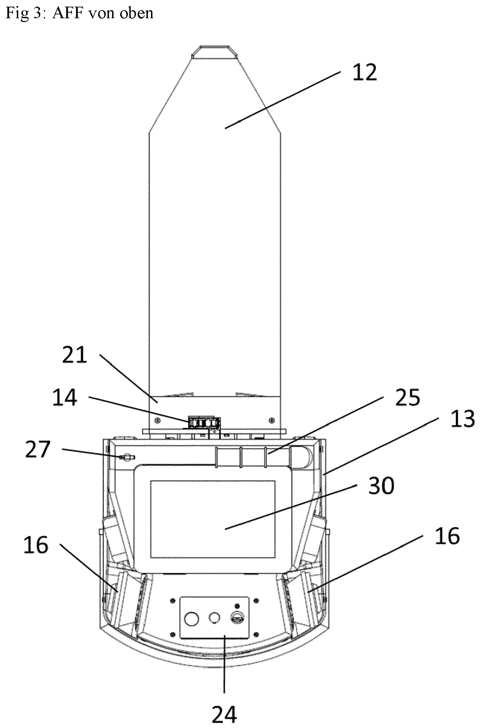

Fig. 3 stellt eine Sicht von oben auf eine Ausführungsform des AFF 5 dar. Oben auf dem Aufbau 13 befindet sich das Display 30, darunter das Feld mit Bedienelementen 24. Die im Wesentlichen vertikal ausgerichteten beiden LIDAR 16 sind seitlich angebracht. Ferner befindet sich oben die Antenne 27 sowie die Alarmleuchten 25 in Form einer Ampel. Hin zur Ladefläche 12 ist der Ladeflächen-Höhenverstellantrieb 14 angebracht. Weiter hin zur Ladefläche 12 befindet sich die Ladefläche-Ladungssensor 21 zur Detektion einer Ladung 143 auf der Ladefläche 12.

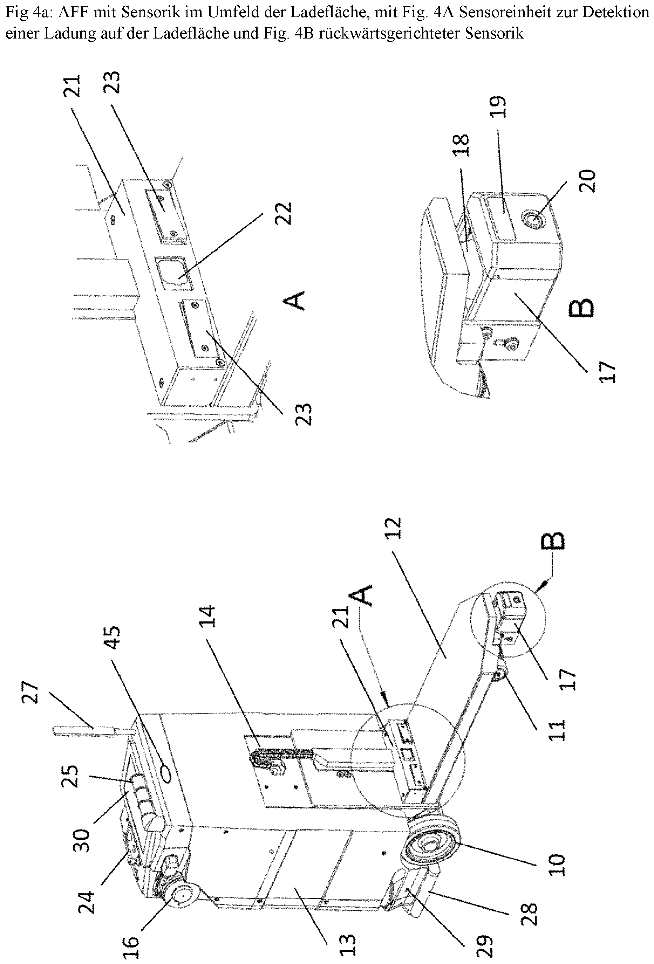

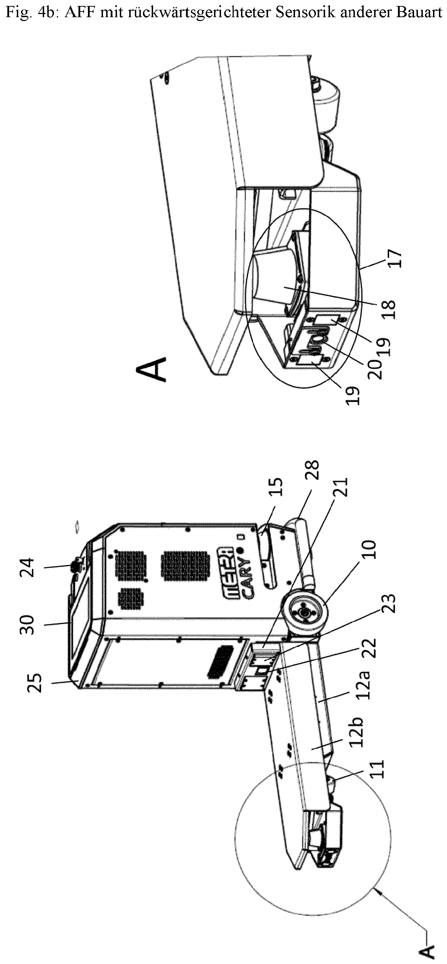

Fig. 4 stellt eine Sicht von schräg hinten auf die eine Ausführungsform des AFF 5 dar. Die Antriebsräder 10 sind unten auf Aufbau 13 hin zur Ladefläche 12 positioniert. Nach vorne und auch seitlich sind die druckempfindliche Stoßstange 28 sowie die Infrarot-ToF (Time-of-Flight) - Sensoren 29 angebracht. Seitlich oben befinden sich die im Wesentlichen vertikal angebrachten LIDAR 16. Oben auf dem Aufbau befindet sich das Feld mit Bedienelementen 24, Alarmleuchten 25 in Form einer Ampel sowie mindestens eine Antenne 27. Auf der Seite des Aufbaus 13 hin zur Ladefläche 12 sitzt der Ladeflächen-Höhenverstellantrieb 14 zum Höhenverstellen der Ladefläche 12. Darunter bzw. davor ist die Ladefläche-Ladungssensor 21 zur Detektion einer Ladung 143 auf der Ladefläche 12 angebracht, die in Fig. 4A näher beschrieben ist. Unter der Ladefläche 12 sitzt ferner eine Gelenkrolle 11 sowie eine rückwärtsgerichtete Sensoreinheit 17. Fig. 4aA stellt die Ladefläche-Ladungssensor 21 zur Detektion einer Ladung 143 auf der Ladefläche 12 näher dar. Mittig befindet sich ein Laser-Abstandsmesser 22 und seitlich davon jeweils ein Kontaktsensor 23, hier ein Endlagenschalter. Alternativ und/oder ergänzend kann die Ladefläche-Ladungssensor 21 auch in die Ladefläche eingelassen sein (bspw. ein integrierter Ladeflächensensor 44) und die Ladung 143 in vertikaler Richtung erfassen. Ein optionaler Ladehöhensensor 45, bspw. ein vertikal ausgerichteter LIDAR, eine Kamera oder ein lichtbasierter Entfernungsmesser, erlaubt es, die Höhe einer Ladung zu erfassen, bspw. um eine Ladung 143 zu validieren oder das Fahrverhalten entsprechend anzupassen. Fig. 4aB stellt die rückwärtsgerichtete Sensoreinheit 17 heraus, mit einer rückwärtsgerichteten Sensoreinheit-Kamera 20 in der rückwärtsgerichteten Sensoreinheit 17 unten, darüber eine Sensoreinheits-Leuchte 17 in der rückwärts gerichteten Sensoreinheit 17 sowie dem Sensoreinheits-LIDAR 18 in der rückwärts gerichteten Sensoreinheit 17. Alternativ kann auch die Sensoreinheit-Kamera 20 zwischen zwei Sensoreinheit-Leuchten 17 positioniert sein, wie in Fig. 4bA dargestellt. Hier sind auch die einzelnen Komponenten nicht notwendigerweise miteinander verbunden, insbesondere der Sensoreinheits-LIDAR 18 nicht mit der Sensoreinheits-Leuchten 17 bzw. der Sensoreinheits-Kamera 20. Damit bedeutet der Begriff Sensoreinheit an dieser Stelle nicht notwendigerweise, dass alle ihre Komponenten im Eingriff stehen müssen. Vielmehr sind diese räumlich nahe beieinander angeordnet und verfolgen hier ein gemeinsames Ziel, nämlich das der rückwärtsgerichteten Umfelderfassung. Bei der Sensoreinheit-Kamera 20 handelt es sich bspw. um eine Weitwinkelkamera mit einem CMOS-Sensor, der eine Auflösung von mehreren Megapixeln vorweist (Größe des Chips z.B. 1 x 2,5 Zoll) und eine Brennweite von mehreren Millimetern.

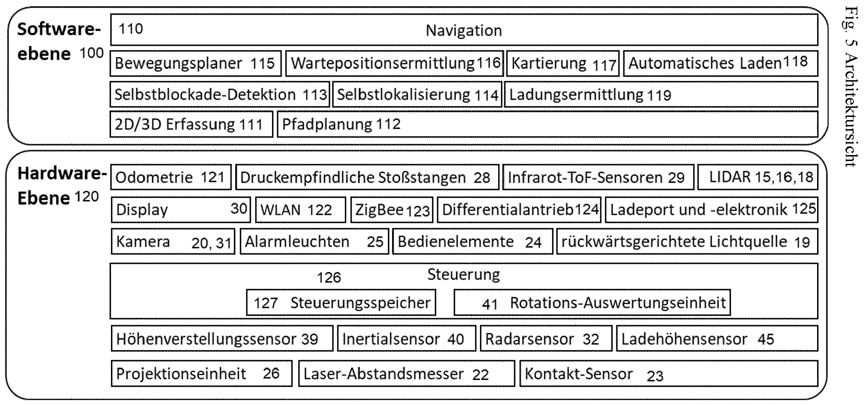

Fig. 5 stellt eine Architektursicht dar. Es gibt zwei Ebenen, die Hardwareebene 120 und die Ebene der AFF-Fähigkeiten 100. Auf der Hardwareebene 120 findet sich ein Odometrie-Modul 121, mittels der die vom AFF 5 zurückgelegte Wegstrecke über das Messen der von den Antriebsrädern 10 zurückgelegten Distanz ermittelt wird. Druckempfindliche Stoßstangen 28 und Infrarot-ToF-Sensoren 29 (ToF = Time of Flight) sind hardwarenahe Mechanismen zur Kollisionsdetektion, wie auch die implementierten LIDAR 15, 16, 18, die jedoch auch zur Navigation eingesetzt werden, wofür auch die Sensoreinheit-Kamera 20 genutzt wird. Alarmleuchten 25 können Menschen im Umfeld des AFF 5 warnen, wie auch die Projektionseinheit 26 für die Projektion von Lichtsignalen auf den Boden, welche in Fahrtrichtung projiziert werden. Ein Display 30 sowie Bedienelemente 24 erlauben die Bedienung des AFF 5, welches ferner mit einem Drahtlosnetzwerk wie WLAN 122 ausgestattet ist sowie mit einem AFF-AFF-Kommunikationsmodul 123, in Fig. 5 der Kürze wegen als ZigBee bezeichnet, wobei hier auch andere Übertragungsstandard genutzt werden können. Ein Differentialantrieb 124 mit mindestens einem Motor 6 und ggf. einem Getriebe 7 sorgt für die Bewegung der Antriebsräder 10. Ein Ladeport und -elektronik 125 sind für das Aufladen des internen Akkumulators 4 konfiguriert, wobei der Ladeport für galvanisches oder induktives Laden ausgelegt ist. Eine Steuerung 126 bringt die Sensorelemente mit dem Differentialantrieb 124 zusammen und sorgt dafür, dass im Falle einer Hindernisdetektion eine Anpassung der Geschwindigkeit vorgenommen wird. Weiterhin verfügt das AFF 5 über mindestens eine rückwärtsgerichtete Sensoreinheit-Leuchte 19, um das Sichtfeld der Sensoreinheit-Kamera 20 auszuleuchten. Diese rückwärtsgerichtete Sensoreinheit-Leuchte 19 emittiert vorzugsweise diffuses Licht, um Reflexionen zu vermeiden. Weiterhin erlauben ein Laser-Abstandsmesser 22 und ein Kontaktsensor 23 die Detektion der Position einer Ladung 143 auf der Ladefläche 12.

Auf der Ebene der AFF-Fähigkeiten (Software) 100 befindet sich ein Navigationsmodul 110, ein 2D/3D-Umfelderfassungsmodul 111, ein Pfadplanungsmodul 112, ein Selbstblockadedetektionsmodul 113, ein Selbstlokalisierungsmodul 114 zur eigenständigen Lokalisierung des AFF 5 in seinem Umfeld, ein Bewegungsplaner 115, ein Wartepositionsmodul 116 für die Ermittlung der Warteposition, das Kartierungsmodul 117, d.h. die Kartierung des Umfelds sowie das Lademodul 118 für das automatische Aufladen, bspw. wenn die Spannung des Akkumulators unter einen definierten Schwellwert fällt. Weiterhin befindet sich hier ein optionales Ladungsermittlungsmodul 119, welches in einem Beispiel weiter hinten näher dargestellt wird.

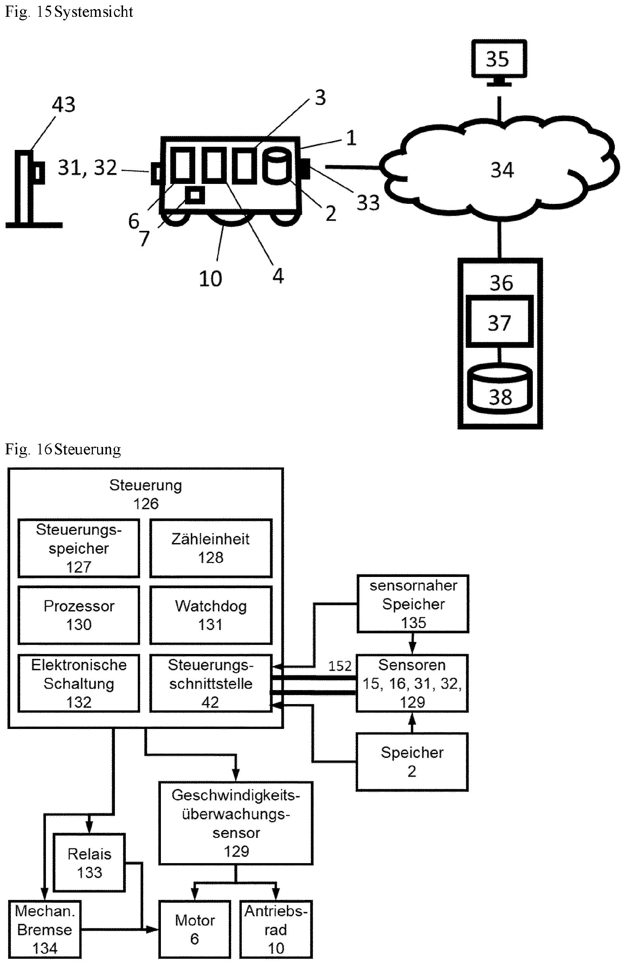

Fig. 15 illustriert eine Systemsicht. Dabei wird aus Vereinfachungsgründen von einer mobilen Basis 1 ausgegangen, die über einen Speicher 2, einen Rechner 3 und einen Akkumulator 4 verfügt. Weiterhin weist die mobile Basis eine Kamera 31 und/oder einen Radar auf 32, ggf. auch ein LIDAR (z.B. 15 oder 16). Die mobile Basis 1 ist über die Cloud 34 mit einem Terminal 35 und einem externen System 36 verbunden, das über einen externen Rechner 37 und einen externen Speicher 38 verfügt. Weiterhin verfügt die mobile Basis 1 über eine Ladeschnittstelle 33 zum Andocken an einer Ladestation 43.

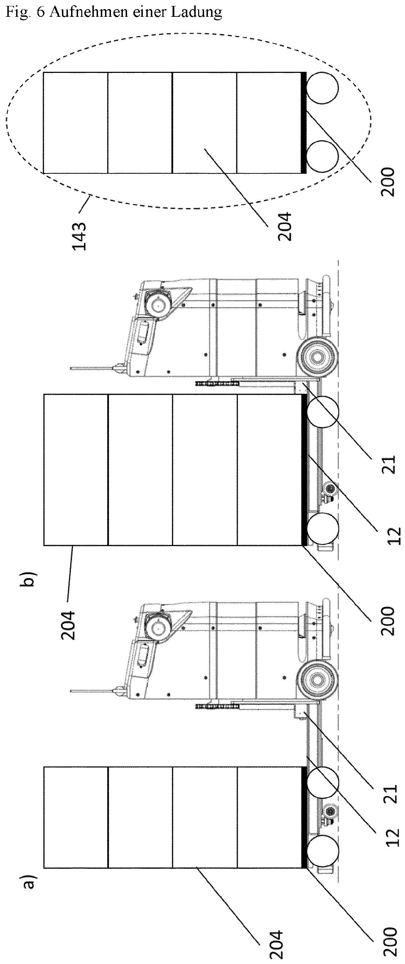

Fig. 6 zeigt das Aufnehmen einer Ladung 143 bzw. dessen Positionierung auf der Ladefläche 12. Dabei wird in a), wenn die Länge des Rollwagens 200 mit den darauf gestapelten Warenträger 204 kürzer ist als die Länge der Ladefläche 12, der Rollwagen im vorderen Bereich der Ladefläche 12 positioniert. Diese Länge wird durch den Ladefläche-Ladungssensor 21 zur Detektion einer Ladung 143 auf der Ladefläche 12 ermittelt, z.B. durch den Laser-Abstandsmesser 22. Ist dagegen wie in b) dargestellt die Länge der Ladefläche 12 ähnlich lang wie die des Rollwagens 200, wird der Rollwagen 200 bis dicht an den Ladefläche-Ladungssensor 21 zur Detektion einer Ladung 143 auf der Ladefläche 12 positioniert, so dass auch die Kontaktsensoren, hier Endlagenschalter 22 auslösen. Dieser Vorgang sorgt für eine bessere Stabilität beim Transport. Anschließend wird die Ladefläche 12 angehoben.

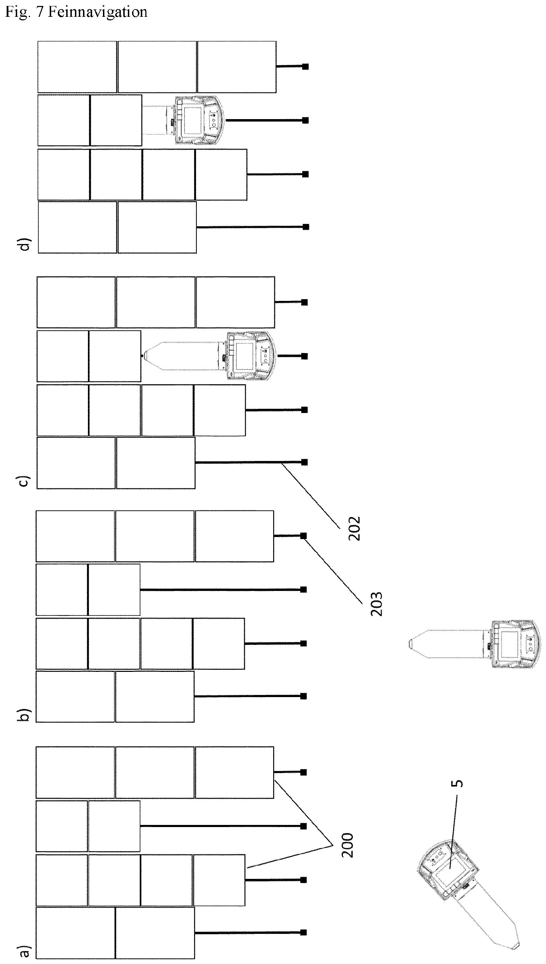

Fig. 7 zeigt die Feinnavigation eines AFF 5, d.h. dessen Positionierung vor einer Reihe mit Rollwagen 200 und die Aufnahme einer Ladung 143. In Schritt a) nähert sich das AFF 5 den Ladungen 143 im Rahmen der Grobnavigation. Bei den Ladungen 143 handelt es sich um mehrere Reihen mit Rollwagen 200, die hintereinander und parallel zueinander positioniert sind. Mittig unter den Rollwagen 200 verläuft eine Markierungs- oder Führungslinie 202, an deren Anfang sich eine Rollwagen-Reihe-Identifizierungsvorrichtung 203 zum Identifizieren einer Rollwagen-Reihe befindet, bspw. ein 1D-, 3D oder 2D-Identifizierungscode (z.B. ein Aruco-Marker). Im Schritt b) wendet das AFF 5 und richtet die Sensoreinheit-Kamera 20 in der rückwärtsgerichteter Sensoreinheit 17 auf die Rollwagen-Reihe-Identifizierungsvorrichtung 203 zum Identifizieren einer Rollwagen-Reihe aus, liest die Identifikationsangaben aus der Rollwagen-Reihe-Identifizierungsvorrichtung 203 aus (wozu Standard-Bildverarbeitungsalgorithmen/ Bibliotheken zum Einsatz kommen), vergleicht die Angaben mit einem im Speicher 2 abgespeicherten Wert, um seine AFF-Position zu bestimmen. Dabei kann, in einem Aspekt, visualSLAM zum Einsatz kommen. In dem hier beschriebenen Fall bezieht sich der Transportauftrag aber nicht auf eine Ladung 143 in der zweiten Rollwagenreihe wie in b) dargestellt, sondern auf einen Rollwagen 200 in der dritten Reihe. In c) hat sich das AFF 5 durch ein Wendemanöver direkt vor die dritte Reihe positioniert und ist parallel und zentriert in die dritte Reihe hineingefahren, bis es den Rollwagen 200 erreichte. Aus einem Speicher (2, 38) (und/oder aus einer vorgenommenen Längenmessung) ergibt sich, dass die zu transportierenden Rollwagen 200 eine Tiefe aufweisen, die kürzer als die Tiefe der Ladefläche 12 ist. Daher fährt das AFF 5in d) nur so weit unter den Rollwagen 200, dass das hintere Ende der Ladefläche sich gerade noch unter dem Rollwagen 200 befindet, was mittels Differenzbetrachtungen mittels des Laser-Abstandsmessers 22 geschieht. Anschließend wird der Rollwagen 200 über die Ladefläche 12 angehoben und das AFF 5 fährt vorwärts aus der Reihe hinaus.

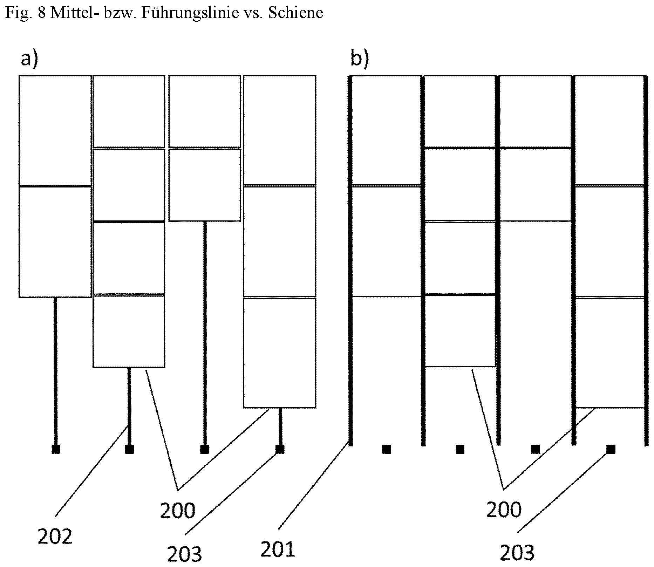

Fig. 8 zeigt den Einsatz einer Mittel- bzw. Führungslinie 202 vs. einer Schiene 201, in der die Rollen der Rollwagen 200 gelagert sind. In beiden Fällen befinden sich die Rollwagen-Reihe-Identifizierungsvorrichtung 203 zum Identifizieren einer Rollwagen-Reihe mittelzentriert in den Reihen. Es ist auch denkbar, dass die Rollwagen-Reihe-Identifizierungsvorrichtung 203 im Falle der Schienen 201 an einer der Schienen 201 angebracht ist.

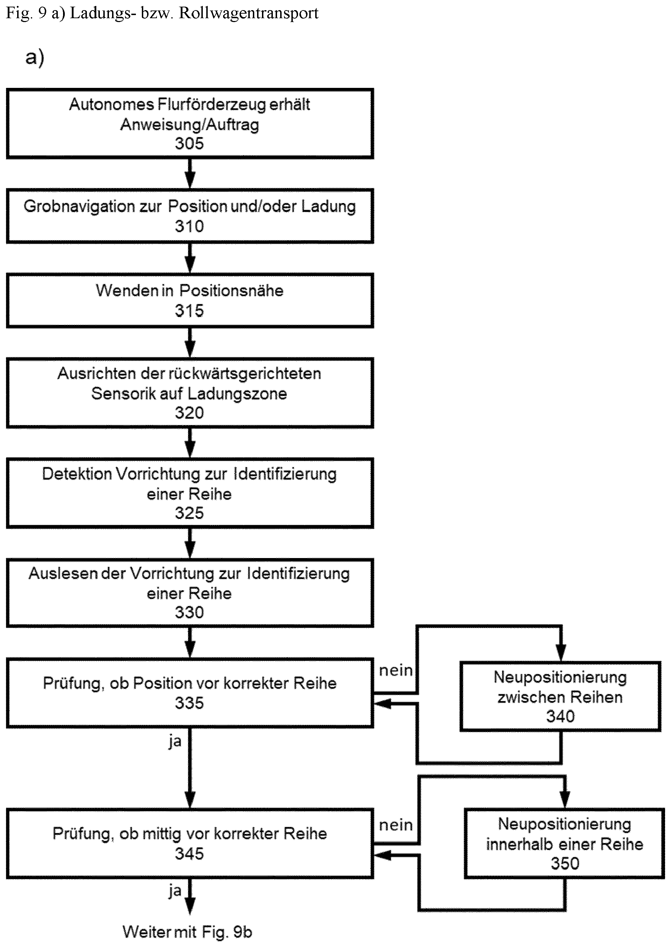

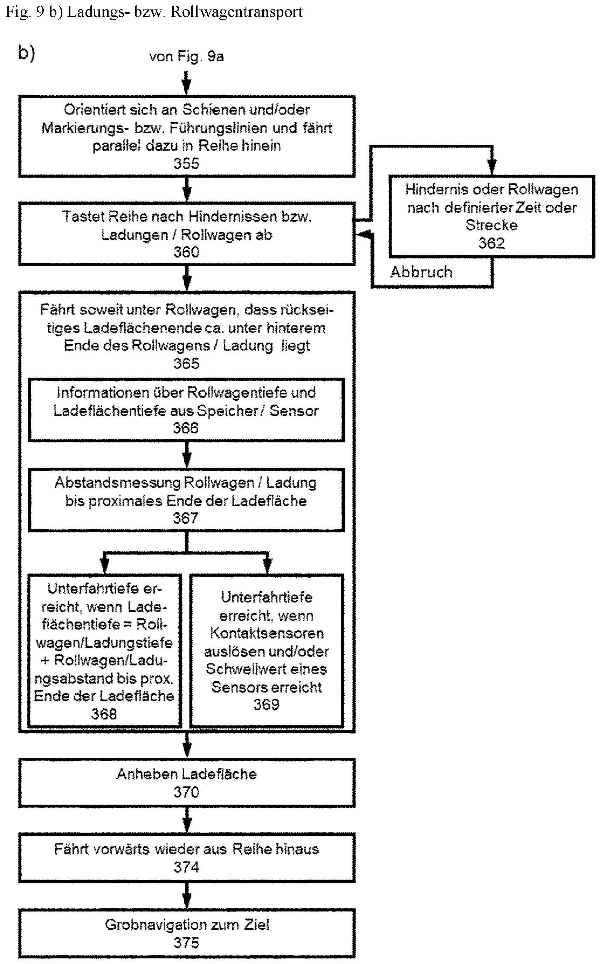

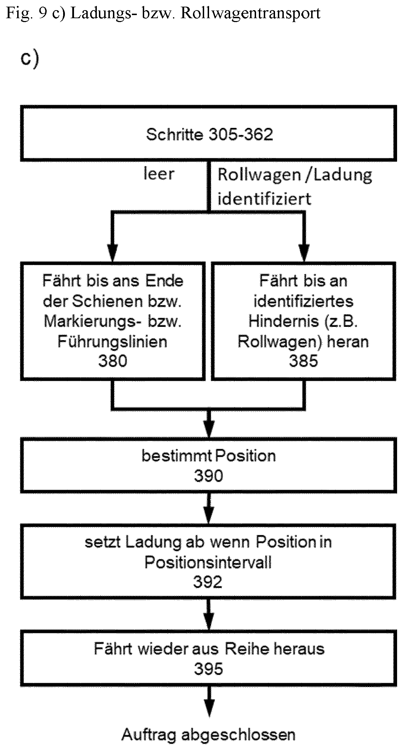

Fig. 9 zeigt den Ablauf, wie das AFF 5 nebeneinander und/oder hintereinander positionierte Ladungen (143) wie bspw. Rollwagen 200 aufnimmt bzw. absetzt. Dabei handelt es sich weitestgehend um das in Fig. 7 beschriebene Szenario. In Fig. 9a erhält das AFF 5 zunächst eine Anweisung 305, bspw. einen Rollwagen 200 mit mehreren Warenträgern von einem Lager ins nächste zu transportieren. Mit diesem Auftrag ist eine Position auf der Karte des AFF 5 assoziiert, so dass das AFF 5 zu dieser Position navigiert - in der in den Fig. 1-4 beschriebenen Ausführungsform geschieht diese Positionierung vorzugsweise in Vorwärtsrichtung. Dabei handelt es sich um eine Grobnavigation zur Position und/oder Ladung 310. Ist das AFF 5 dort angekommen, wendet das AFF 5 in Positionsnähe 315 und richtet die rückwärtsgerichtete Sensorik auf die Ladungszone aus 320, in der üblicherweise mehrere Rollwagen 200 parallel und hintereinanderstehen. Das AFF 5 detektiert im Schritt 325, z.B. über die Sensoreinheit-Kamera 20 in der rückwärtsgerichteten Sensoreinheit 17, die Rollwagen-Reihe-Identifizierungsvorrichtung 203 zum Identifizieren einer Rollwagen-Reihe. Hierfür können übliche Bildklassifizierungsverfahren aus dem Stand der Technik zum Einsatz kommen.

Der Identifizierungscode aus der Rollwagen-Reihe-Identifizierungsvorrichtung 203 zum Identifizieren einer Rollwagen-Reihe wird ausgelesen 330 und das AFF 5 nimmt einen Positionsabgleich vor. Dies bedeutet, es wird im ersten Schritt geprüft, ob der Identifizierungscode, der aus der Rollwagen-Reihe-Identifizierungsvorrichtung 203 zum Identifizieren einer Rollwagen-Reihe mit dem Identifizierungscode der Rollwagenreihe übereinstimmt, in der sich die abzuholende Ladung 143 befindet. Ist dies nicht der Fall, gleicht das AFF 5 mittels von in einem Speicher (2, 38) hinterlegten Positionsdaten ab, wo sich relativ zur ausgelesenen Rollwagen-Reihe-Identifizierungsvorrichtung 203 zum Identifizieren einer Rollwagen-Reihe die gesuchte Reihe befindet und navigiert dorthin, d.h. es findet eine Neupositionierung zwischen den Reihen 340 statt, die die entsprechende Reihe betrifft. Die Neupositionierung beinhaltet bspw. neue Koordinaten, in einem Aspekt auch eine andere Orientierung in der horizontalen Ebene. Befindet sich das AFF 5 vor der richtigen Reihe, prüft das AFF 5 anhand der Position der Schienen 201 und/oder Markierungs- bzw. Führungslinien 202, ob das AFF 5 sich mittig in der Reihe befindet 345, um anschließend rückwärts in die Reihe zu fahren. Dabei werden bspw. durch Mustererkennung die Reihen detektiert und ihr Abstand zum Bildrand ausgewertet. Andernfalls findet eine Neupositionierung innerhalb der Reihe 350 statt. Alternativ kann das AFF 5 wieder aus der Reihe herausfahren und sich vor der Reihe so positionieren, dass es mittig ausgerichtet ist, um dann wieder in die Reihe rückwärts hineinzufahren. Ist das AFF 5 anschließend mittig ausgerichtet, orientiert das AFF 5 sich nach Fig. 9b an den Schienen 201 und/der den Markierungs- bzw. Führungslinien 202 bzw. alternativ bspw. an sich parallel befindlichen Ladungen 143 wie Rollwagen 200 und fährt parallel zu diesen Schienen 201 bzw. den Markierungs- bzw. Führungslinien 202 oder Ladungen 143/Rollwagen 200 (rückwärts) in die Reihe hinein 355. Das AFF 5 tastet die Reihe nach Hindernissen bzw. Rollwagen ab 360. Dieser Schritt kann bspw. auch vorher bereits geschehen sein. Wird dabei kein Hindernis bzw. Rollwagen 200 nach einer (bspw. im Speicher 2) definierten Zeit oder Strecke ermittelt (Schritt 362), erfolgt ein Abbruch des Aufladevorgangs. Erfolgt kein Abbruch, fährt das AFF 5 anschließend soweit unter die Ladung (143) wie bspw. den Rollwagen 200, so dass das rückseitige Ende der Ladefläche 12 in etwa unter dem hinteren Ende des Rollwagens 200 liegt im Schritt 365. Dazu nutzt das AFF 5 Informationen über die Rollwagentiefe und die Ladeflächentiefe aus einem Speicher 2, 38 oder einem Sensor wie der Kamera und/oder einem LIDAR (15, 18, 20, 31) (Schritt 366). Es findet währenddessen eine kontinuierliche oder zeitdiskrete Messung während des Fahrvorgangs statt, um den Abstand des Rollwagens 200 bis zum proximalen Ende der Ladefläche 12 (also der mit der Ladefläche-Ladung-Sensoreinheit zur Detektion einer Ladung 143 auf der Ladefläche 12) zu detektieren 367. Die maximale Unterfahrtiefe ist erreicht, wenn die Ladeflächentiefe gleich der Rollwagentiefe plus des Rollwagenabstands bis zum proximalen Ende der Ladefläche 12 beträgt (Schritt 368). Anstelle der Rollwagentiefe kann auch eine Ladungstiefe äquivalent herangezogen werden.

Diese Messungen können durch den Laser-Abstandsmesser 22 oder einen alternativen Entfernungssensor wie Ultraschall, Radar 32, etc. vorgenommen werden. Alternativ kann auch mindestens einer der Kontaktsensoren 23 auslösen und/oder allgemein ein gemessener Schwellwert eines Sensors ausgelöst wird 369. Dies kann bspw. der Fall sein, wenn der Laser-Abstandsmesser 22 oder einen alternativen Entfernungssensor wie Ultraschall, Radar 32, etc. einen Abstandswert ermittelt hat, der unter Abständen liegt, die in einem Speicher (z.B. 2) abgelegt sind. Ein Auslösen der der Kontaktsensoren 23 ist insbesondere bei langen Rollwagen 200 der Fall, die ähnlich lang oder länger als die Ladefläche 12 des AFF 5 sind. Im nächsten Schritt wird die Ladefläche 12 angehoben 370, das AFF 5 fährt vorwärts wieder aus der Reihe heraus 374 und navigiert im Rahmen der Grobnavigation zum Ziel 375.

Zum Absetzen der Ladung 143 absolviert das AFF 5 im Wesentlichen die Schritte 305-362. Beim Abtasten der Reihe nach Hindernissen bzw. Ladungen 143/Rollwagen 200 im Schritt 360 ermittelt das AFF 5, ob die Reihe leer ist oder dort bereits Rollwagen 200 stehen. Hierzu kann das AFF 5 bspw. die im Speicher (2, 38) hinterlegte Länge der Reihe vergleichen mit der hindernisfreien Tiefe, die mittels mindestens eines Sensors des AFF 5 innerhalb der Reihe ermittelt wurde und, sofern die ermittelte Tiefe geringer ist als die im Speicher (2, 38) hinterlegte Tiefe, in der Reihe abgestellte Rollwagen 200 erkennen. Alternativ und/oder ergänzend können Rollwagen 200 auch direkt oder indirekt erkannt werden, bspw. durch Verfahren der Mustererkennung, durch 1D-, 2D- oder 3D-Identifizierungscodes wie Barcodes, QR-Codes, etc. (derartige Verfahren kommen bspw. auch im Schritt 330 zum Tragen.) Ist die Reihe leer, fährt das AFF 5 bis ans Ende Schienen 201 und/oder Markierungs- bzw. Führungslinien 202 im Schritt 380. Ist die Reihe nicht leer, weil bspw. Hindernisse, Ladungen 143 bzw. Rollwagen 200 in der Reihe identifiziert wurden, fährt im Schritt 385 das AFF 5 bis an ein als solches identifizierte Hindernis, bspw. einen Rollwagen 200, heran, bspw. unter Einhalten eines im Speicher (2, 38) hinterlegten Abstands. Dazu kann das AFF 5 bspw. seine Position 390 bestimmen, setzt jeweils die Ladung 143 ab, wenn es sich in einem Positionsintervall befindet (Schritt 392), und navigiert aus der Reihe im Schritt 395 heraus. Damit ist der Auftrag für das AFF 5 abgeschlossen. Unter Positionsintervall wird verstanden, dass das AFF 5 die Ladung 143 bspw. in Abhängigkeit von der Position absetzen kann, bspw. beim Hineinfahren in die Reihe innerhalb einer Strecke, die einen definierten Schwellwert von der Position abweicht. In einem Aspekt kann das AFF 5 auch in der Literatur bekannte Sortieralgorithmen implementiert haben, nach denen bspw. ein zwischen mehreren Rollwagen 200 positionierter Rollwagen 200 einer Rollwagenreihe entnommen und transportiert wird, oder es wird eine Rollwagenreihe umsortiert. Abstände zu Rollwagen können über einen LIDAR (15, 16, 18), Radar (32) oder eine Kamera (30) ermittelt werden.

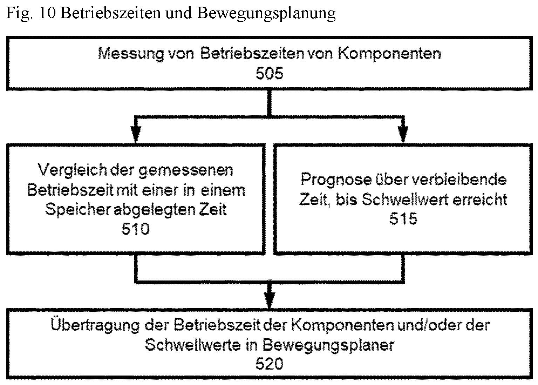

In Fig. 10 ist beschrieben, wie die Ermittlung von Betriebszeiten eines AFF 5 in der Bewegungsplanung berücksichtigt werden kann. Das AFF 5 misst in einem Schritt 505 die Betriebszeit von Komponenten und speichert diese Betriebszeit in einem Aspekt ab. Das AFF 5 vergleicht die gemessene Betriebszeit mit einer in einem Speicher (2, 38) abgelegten Zeit und erstellt einen Schwellwertvergleich im Schritt 510. Dies kann in einem Aspekt bedeuten, dass bspw. die ermittelte Betriebszeit 2000 Stunden beträgt, eine im Speicher (2, 38) hinterlegte Zeit beträgt 2100 Stunden, und im Schwellwertvergleich wird verglichen, dass die 2000 Stunden unter dem Schwellwert von 2100 Stunden liegen.

In einem alternativen Aspekt wird bspw. eine Differenz aus diesen Schwellwerten gebildet (100 Stunden) und diese mit einem Schwellwert verglichen, der in dem Speicher (2, 38) abgelegt ist. Alternativ zu diesem Vergleich kann das AFF 5 oder ein anderes System (z.B. 36), in das die Messwerte übertragen wurden, eine Prognose im Schritt 515 erstellen, wann ein Schwellwert erreicht wird, was auf Basis des Abspeicherns der Messwerte im Zeitverlauf und deren Auswertung nach dem Zeitverlauf erfolgen kann, wobei Standard-Regressionsverfahren zum Einsatz kommen können. Die durch die Schritte 510 und/oder 515 ermittelten Werte können an den Bewegungsplaner 115 übertragen werden 520, der diese im Rahmen der Bewegungsplanung berücksichtigt.

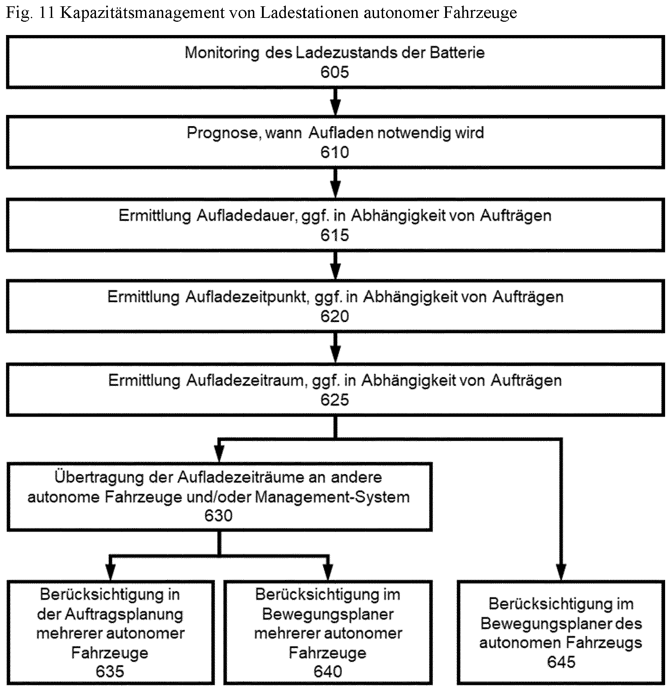

In Fig. 11 wird dargestellt, wie ein Kapazitätsmanagement von Ladestationen 43 autonomer Fahrzeuge wie eines AFF 5 realisiert wird. Das autonome Fahrzeug wie das AFF 5 überwacht den Ladezustand seines Akkumulators 4 (Schritt 605). Das autonome Fahrzeug erfasst im Schritt 610 dabei die Verbräuche und erstellt eine Prognose, wann ein erneutes Aufladen notwendig ist. Dazu greift das autonome Fahrzeug auf historische Daten aus vorangegangenen Operationszeiten zurück, die in einem Aspekt über eine Schnittstelle (z.B. 122, 123) zur Verfügung gestellt werden. In einem alternativen Aspekt können auch die Verbrauchsdaten an ein anderes System (z.B. 36) über eine Schnittstelle (122, 123) übertragen werden, welche die Prognose erstellt. Es wird anschließend im Schritt 615 ermittelt, wie lange die Aufladedauer betragen muss, um einen gewünschten Ladezustand zu erreichen. Dieser gewünschte Ladezustand kann sich aus zu absolvierenden Aufträgen ergeben. Es wird anschließend mindestens ein Aufladezeitpunkt im Schritt 620 ermittelt, ab wann vorzugsweise mit dem Aufladevorgang begonnen wird, ggf. auch unter Berücksichtigung einer bis zu einer Ladestation 43 zurückzulegenden Wegstrecke. Dieser Zeitpunkt kann vom verbliebenen Ladezustand abhängen und/oder von Aufträgen, die das autonome Fahrzeug absolvieren soll. Es werden anschließend auf Basis der Werte aus den Schritten 615 und 620 Aufladezeiträume ermittelt, die sich über einen Startzeitpunkt, ggf. ein Startzeitintervall, und eine sich daran anschließende Ladedauer definieren. In einem Aspekt können diese im Bewegungsplaner 115 des autonomen Fahrzeugs Berücksichtigung finden. In einem weiteren Aspekt werden diese Aufladezeiträume über eine Schnittstelle an andere autonome Fahrzeuge oder ein Management-System (z.B. 36) im Schritt 630 übertragen. Hierbei kann z.B. ein Übertragungssystem wie das AFF-AFF-Kommunikationsmodul 123 (oder WLAN 122) zum Einsatz kommen. Anschließend werden im Schritt 635 die Ladezeiträume in der Auftragsplanung mehrerer autonomer Fahrzeuge berücksichtigt, insbesondere vom Management-System (z.B. 36). Die Ladezeiträume können auch im Bewegungsplaner 115 von mindestens einem weiteren autonomen Fahrzeug im Schritt 640 zum Einsatz kommen, insbesondere für die Planung eigener Routen und eigener Aufladezeiträume. So kann bspw. ein autonomes Fahrzeug wie das AFF 5 eigene Ladezeiträume umplanen, sofern das autonome Fahrzeug übermittelt bekommt, dass die Ladestation 43 zu einem bestimmten Zeitpunkt durch ein anderes AFF 5 belegt sein wird. Zu guter Letzt finden die ermittelten Ladezeiträume auch im Bewegungsplaner 115 des autonomen Fahrzeugs Berücksichtigung.

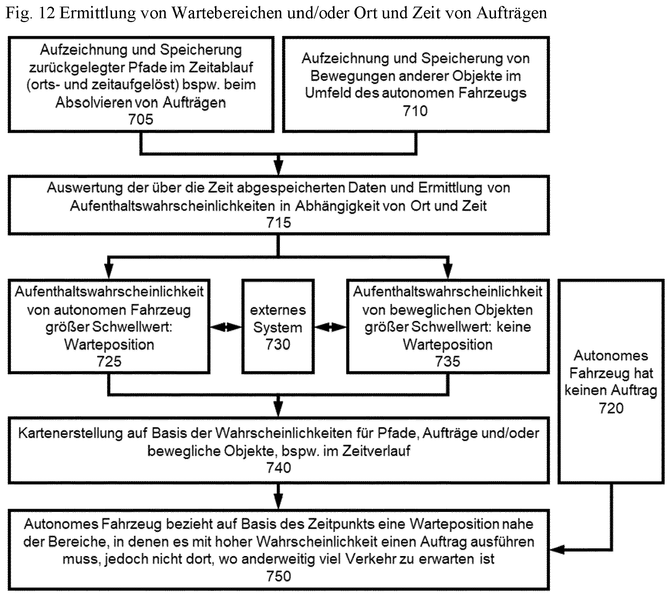

In Fig. 12 ist beschrieben, wie ein System wie bspw. ein autonomes Fahrzeug wie ein AFF5 eine Ermittlung von Wartebereichen vornehmen kann. Dabei wird im Schritt 705 von einem autonomen Fahrzeug der zurückgelegte Pfad im Zeitablauf orts- und zeitabhängig aufgezeichnet, wobei der Pfad bspw. im Rahmen des Absolvierens von Aufträgen zurückgelegt wurden. Bei den Aufträgen kann es sich allgemein um einen Transportauftrag, einen Inventurauftrag, einen Desinfektionsauftrag oder einen anderen gearteten Auftrag handeln. In einem alternativen Aspekt kann die Lokalisierung der autonomen Fahrzeuge wie bspw. eines AFF 5 auch über von diesen AFF 5 emittierte Funksignale, die durch mindestens eine Antenne 27 detektiert werden, vorgenommen werden. Es sind auch Kombinationen dieser Ansätze realisierbar. In einem weiteren, optionalen Aspekt werden durch das autonome Fahrzeug sich in dessen Umfeld bewegende Objekte orts-und zeitaufgelöst im Schritt 710 erfasst. Diese Informationen werden jeweils abgespeichert und durch das System, ein autonomes Fahrzeug wie ein AFF 5 oder eine anders geartete Rechnereinheit, nach Ort und Zeit hin derart im Schritt 715 ausgewertet, dass Häufigkeiten ermittelt werden, wann sich in der Vergangenheit das autonome Fahrzeug wie das AFF 5 und/oder sich in dessen Umfeld bewegende Objekte an welchen Orten aufgehalten haben. Darauf basierend werden im Rahmen einer Prognoserechnung Wahrscheinlichkeiten darüber ermittelt, dass sich das autonome Fahrzeug wie das AFF 5 in den erfassten Bereichen bewegt bzw. dass sich in erfassten Bereichen andere Objekte bewegen. Liegt die Wahrscheinlichkeit bspw. zu einem bestimmten Zeitpunkt, der saisonal abhängig sein kann, für das Zurücklegen eines Pfads über einem Schwellwert, wird dieser Pfad als Warteposition ermittelt 725. Liegt die Wahrscheinlichkeit bspw. zu einem bestimmten Zeitpunkt, der saisonal abhängig sein kann, für das Auftreten beweglicher Objekte über einem Schwellwert, wird dieser Pfad als Warteposition ermittelt 735. Die Informationen aus Schritt 725 und 735 können an externe Systeme (z.B. 5, 36) übertragen werden. Es können aber auch von externen Systemen (z.B. 5, 36) derartige Informationen an das betreffende System wie ein autonomes Fahrzeug übertragen werden. In einem Aspekt kann es sich dabei um die Pfade bzw. Positionen der erfassten Objekte handeln, d.h. der Austausch findet nicht zwischen Schritt 725 und 730 bzw. 735 und 730 statt, sondern zwischen 715 und 730 (nicht in Fig. 12 illustriert). Auf Basis der ermittelten Wahrscheinlichkeiten können im Schritt 740 eine Karte erstellt werden (bspw. eine Heat-Map), die bspw. für Pfade, Aufträge und/oder bewegliche Objekte Wahrscheinlichkeiten beinhaltet, die saisonal abhängig sein können (im Tagesverlauf, Wochenverlauf, Monatsverlauf, Schichtverlauf usw.) und die einander bedingen können (bspw. die Kombination aus Pfad und beweglichen Hindernissen, die sich überlappen, wobei bei einer Überlappung geringere Wahrscheinlichkeit ermittelt wird und damit die Position als Warteposition weniger infrage kommt). Sofern das autonome Fahrzeug wie das AFF 5 keinen Auftrag zu erfüllen hat 720, bezieht das autonome Fahrzeug auf Basis dieses Zeitpunkts ohne Auftrag eine Warteposition nahe den Bereichen, in denen es mit hoher Wahrscheinlichkeit einen Auftrag ausführen muss, jedoch nicht dort, wo anderweitig viel Verkehr zu erwarten ist (Schritt 750), d.h. das autonome Fahrzeug wird sich nicht dort positionieren, wo sich mit hoher Wahrscheinlichkeit andere Objekte bewegen. Der beschriebene Ablauf kann im Wartepositionsmodul 116 implementiert sein, dass bspw. ein Teil des Kartierungsmodul 117 ist. Mit Blick auf der Systemebene kann es sich um ein selbstlernendes System zur Ermittlung von Auftretenswahrscheinlichkeiten für Ort und Zeit von beweglichen Objekten handeln, umfassend ein Wartepositionsmodul 116 zur Auswertung von erfassten Positionsdaten beweglicher Objekte im Zeitverlauf und zur Ermittlung der Auftretenswahrscheinlichkeiten für bewegliche Objekte innerhalb definierter Zeitintervalle, wobei das Wartepositionsmodul 116 abgespeicherte und zurückgelegte Pfade (bspw. im Rahmen der Bearbeitung von Aufträgen), die durch das Pfadplanungsmodul 112 ermittelt und/oder durch das Odometrie-Modul 121 aufgezeichnet wurden, auswertet. Das Kartierungsmodul 117 kann auf Basis der Auswertung des Wartepositionsmoduls 116 eine Karte mit Wartepositionen erstellen. Ein Bewegungsplaner 115 und/oder ein Pfadplanungsmodul 112 nehmen auf Basis von Daten des Kartierungsmodul 117 eine Pfadplanung und/oder Bewegungsplanung für ein System vor. Die erfassten Positionsdaten wurden mittels einer Kamera 31, eines Radarsensors 32, eines Ultraschallsensors oder eines LIDARs (15, 16) erfasst. Beim System (dem selbstlernenden System und/oder das System, für das die Pfadplanung und/oder Bewegungsplanung erfolgt) handelt es sich um ein autonomes Flurförderzeug 5, einen Desinfektionsroboter, einen Reinigungsroboter, einen Serviceroboter oder einen Inventurroboter. Eine Warteposition zeichnet sich durch eine hohe Wahrscheinlichkeit für saisonal oder schichtbedingte Aufträge und eine geringe Wahrscheinlichkeit zum Zusammentreffen mit beweglichen Objekten aus.

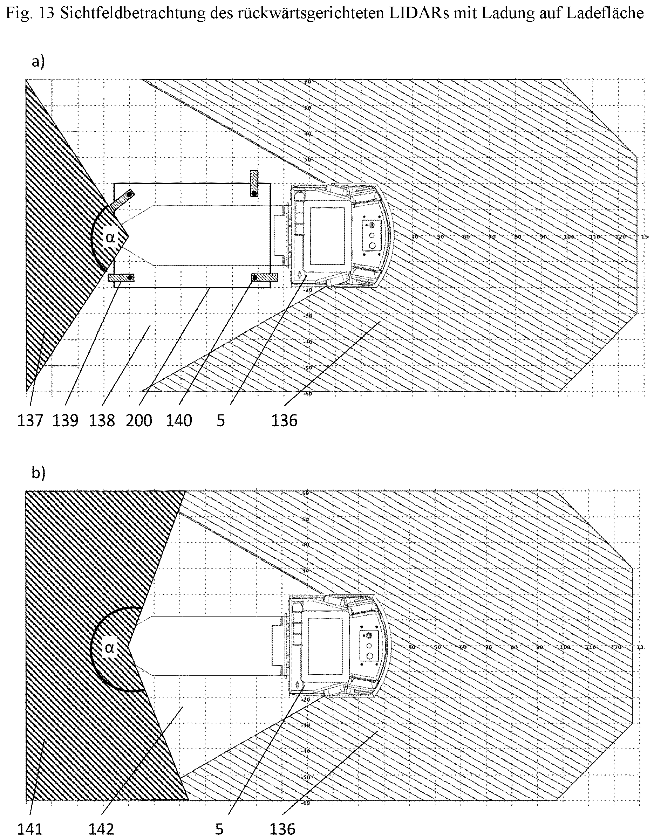

Fig. 13a) und b) beschreiben eine mögliche Beeinträchtigung der Navigationsfähigkeiten des AFF durch die Aufnahme von Ladung 143, welche sich insbesondere auf Wendemöglichkeiten auswirkt. In Fig. 13a) ist eine solche Beeinträchtigung dargestellt. Hier ist das Sichtfeld 137 des Sensoreinheit-LIDAR 18 des autonomen Flurförderzeugs 5 aufgrund der Aufnahme von Ladung 143 eingeschränkt (das Sichtfeld der vorderen LIDAR 136 jedoch nicht). Grund dafür ist, dass bspw. ein aufgenommener Rollwagen 200 über Rollwagenräder 139 verfügt, die an einer vertikalen Drehachse 140 frei drehbar sind und in den Sichtbereich des hinteren LIDAR 137 hineinragen. Daraus ergibt sich, dass der Erfassungswinkel α des hinteren LIDAR im Bereich 90-120° liegt (hier dargestellt ca. 110°), je nach Anordnung der Räder und/oder Positionierung der Rollwagen 200 auf der Ladefläche 12 des AFF 5. Dies impliziert auch, dass die Detektion des Überstehens der Ladung 143 durch mindestens einen der oben erwähnten, nach oben gerichteten Sensoren, dazu beiträgt, die Beeinträchtigung des Sichtfelds zu reduzieren. Fig. 13b) stellt dagegen den Erfassungswinkel α des hinteren LIDAR ohne eine wie in Fig. 13a) beschriebene Beeinträchtigung dar, der zwischen 160 und 240° liegen kann (hier dargestellt: 220°), d.h. Sichtfeld des hinteren LIDAR ohne Beeinträchtigung durch Ladung 143. Die Konsequenz aus dieser Beeinträchtigung ist, dass die Rollwagen-Ladung-LIDAR-Totzone 138 in Fig. 13a), der seitlich gesehen von der Ladefläche des AFF 5 befindlich ist, nicht durch mindestens einen LIDAR des AFF 5 überwacht wird. Dagegen ist die ohne-Ladung-LIDAR-Totzone 142, die bei unbeladenem autonomen Flurförderzeug 5 nicht durch ein LIDAR überwacht wird, in Fig. 13b) deutlich kleiner. Hinzu kommt, dass der Bereich 142 durch mindestens zwei LIDAR-Erfassungsbereiche eingegrenzt wird. Dies impliziert, dass eine Überwachung der beiden LIDAR-Erfassungsbereiche im Zeitverlauf sicherstellen kann, dass in horizontaler Ebene sich kein bewegliches Hindernis in der ohne-Ladung-LIDAR-Totzone 142 positioniert. Dagegen kann dies in Fig. 13) mit in der Rollwagen-Ladung-LIDAR-Totzone 138 nicht sichergestellt werden. Die Wahrscheinlichkeit kann jedoch dadurch reduziert werden, dass sich das AFF im Zeitablauf bewegt, bspw. in Fahrrichtung, so dass, in Abhängigkeit von der Fahrgeschwindigkeit, es sehr unwahrscheinlich ist, dass sich ein bewegliches Hindernis in die Rollwagen-Ladung-LIDAR-Totzone 138 hineinbewegt.

Bei einer Bewegung in Fahrtrichtung oder entgegen der Fahrtrichtung ist auch die Kollisionsgefahr gering, sollte sich in der Rollwagen-Ladung-LIDAR-Totzone 304 ein bewegliches Hindernis befinden. Kritischer könnte dies im Falle einer Drehbewegung bzw. beim Wenden des AFF 5 sein. Hier können verschiedene Vorrichtungen und/oder Maßnahmen implementiert sein, um eine Dreh- Wende- oder Schwenkbewegung des AFF 5 die Seiten zu überwachen und/oder die Wahrscheinlichkeit zu reduzieren, dass sich ein Hindernis, insbesondere ein bewegliches Hindernis, im nicht vom hinteren und den vorderen LIDAR erfassten Bereich befindet. In einem Aspekt verfügt das AFF 5 über mindestens einen Sensor, der die Seiten des AFF 5 überwacht. Dieser Sensor kann ein weiterer LIDAR, Ultraschall-, Radar- 32, Infrarot- 29 oder Kamerasensoren 20 sein, vorzugsweise mit jeweils einen Sensor an der Seite. Dieser mindestens einen Sensor ist so konfiguriert, dass der Sensor die Rollwagen-Ladung-LIDAR-Totzone 304 mindestens anteilig erfasst und die Rollwagen-Ladung-LIDAR-Totzone 304 vorzugsweise stark minimiert, in einem Aspekt bis auf eine Fläche von 0.

In einem alternativen und/oder ergänzenden Aspekt erfolgt quasi eine dynamische Erfassung der Totzone 304 im Zeitablauf, d.h. es wird durch eine Bewegung der sich seitlich vom AFF 5 befindliche Bereich sensorisch erfasst, wodurch die eigentliche Totzone 304, statisch betrachtet, jeweils nur kurz sensorisch nicht ausgewertet werden kann. Dazu bewegt sich das AFF 5, vorzugweise mit einer Geschwindigkeit, die über einem Schwellwert liegt, vorwärts oder rückwärts, vorzugsweise vorwärts, wobei der Schwellwert der Geschwindigkeit bei 0,5 m pro Sekunde liegt, z.B. bei mindestens 1 m pro Sekunde. Alternativ und/oder ergänzend vergisst das AFF 5 mit den Sensoren detektierte Hindernisse langsamer. Im Stand der Technik werden üblicherweise mittels der Sensoren wie den LIDAR detektierte Hindernisse, die in Belegtheitskarten (occupancy grid maps) einfließen und dort als belegte Koordinatenfelder über Wahrscheinlichkeiten Hindernisse definieren, mit einer relativ schnell abnehmenden Wahrscheinlichkeit ausgestattet (als "Vergessen" bezeichnet), insbesondere dann, wenn es sich um bewegliche Hindernisse handelt. Dies ist auch sinnvoll, um bspw. nicht für ein die Fahrtrichtung kreuzendendes Hindernis abzubremsen, wenn dies gar nicht mehr vorhanden ist. Das AFF 5 kann nun insbesondere für die Bereiche, die sich seitlich vom AFF 5 befinden, die von den LIDAR (15, 16) und/oder weiteren Sensoren erfassten Hindernisse, insbesondere dynamische Hindernisse, mit einem geringeren Wahrscheinlichkeiten-Abfall in den Belegtheitskarten ausstatten. So kann hier die Halbwertszeit des Wahrscheinlichkeits-Abfalls bspw. mehr als verdoppelt werden. Alternativ und/oder ergänzend kann ein solches Hindernis in der Belegtheitskarte erst dann nicht mehr berücksichtigt werden, wenn das AFF 5 sich eine Mindestdistanz von diesem entfernt hat. Darüber werden diese Hindernisse länger erfasst, was insbesondere in Kombination mit der zuvor erwähnten Mindestfahrgeschwindigkeit die Wahrscheinlichkeit der Hindernisdetektion erhöht. In einem Aspekt wird bereits vor der Wende-, Schwenk- und/oder Drehbewegung das Vergessen aktiviert, wobei der Zeitraum, in dem das Vergessen aktiviert wird, geschwindigkeitsabhängig ist. Alternativ und/oder ergänzend ist das AFF 5 so konfiguriert, dass der Bereich, in dem die Rollwagenräder 305 das Sichtfeld eingrenzen, in der Auswertung der vom hinteren LIDAR 18 erfassten Daten ausgeblendet wird, d.h. der Erfassungswinkel des hinteren LIDAR 18 wird variiert und, wenn das AFF 5 eine Ladung 143 aufgenommen hat, auf den engeren Sichtbereich umgeschaltet. Alternativ und/oder ergänzend nutzt das AFF 5 bei einer Dreh- Wende- oder Schwenkbewegung integrierte Warnvorrichtungen wie die Alarmleuchten (Ampel) 25 und/oder einen Warntongeber, um Personen, die sich seitlich vom AFF 5 befinden, zu warnen.

Insbesondere bei schweren Ladungen 143 kann es bei Wende- oder Drehvorgängen des AFF 5, insbesondere bei gegensätzlicher Ansteuerung der Antriebsräder 10, zu verstärktem Schlupf kommen, der nicht nur die Navigationsfähigkeiten des AFF 5 beeinträchtigen kann, sondern auch den Transport der Ladung 143 erschwert, da der Schlupf in einigen Fällen sich durch Durchdrehen der Antriebsräder 10 äußern kann, womit ein Wende- und/oder Drehvorgang des AFF 5 unmöglich wird. Ursächlich dafür ist, dass sich die Antriebsräder 10 relativ weit weg vom Schwerpunkt des beladenen AFF 5 befinden, welcher dann vor allem unter der Ladefläche 12 liegt. So kann, in einem Aspekt, der Schwerpunkt mehr als 20 cm von der Achse entfernt liegen, die (virtuell) zwischen beiden Antriebsrädern 10 liegt. Die Effekte dieser Problematik können dadurch abgemildert werden, dass bei einem Wende- oder Drehvorgang vorzugweise nur eines der Antriebsräder 10 angesteuert wird. Dabei kann, in einem Aspekt, das andere Antriebsrad 10 blockiert werden. In einem alternativen Aspekt werden beide Antriebsräder 10 angesteuert, wobei eines jedoch eine Drehbewegung aufweist, die mehr als doppelt so groß ist die des anderen Antriebsrads 10, bevorzugt mehr als zehnmal so groß. In einem Aspekt kann es sich dabei auch um gegenläufige Bewegungen handeln. Auf diese Weise verlagert sich der Drehpunkt weiter unter den Schwerpunkt der Ladung 143, was es ermöglicht, das beladene AFF 5 leichter zu wenden/drehen, insbesondere bei schweren Ladungen 143. Schwere Ladungen 143 zeichnen sich in einem Aspekt dadurch aus, dass die aufgenommene Ladung 143 mehr das Eigengewicht des AFF 5 beträgt.

In Fig. 16 ist die Funktionsweise der Steuerung 126 näher dargestellt, die über mindestens eine Steuerungsschnittstelle 42 mit einem Drehwinkelsensor 129 verbunden ist, einen Steuerungsspeicher 127 aufweist und die Beschleunigung und/oder Geschwindigkeit eines autonomen Fahrzeugs (z.B. 1, 5) direkt oder indirekt überwacht und eine Geschwindigkeitsreduktion erzwingen kann. Im Steuerungsspeicher 127 sind ein Zeitintervall (das bspw. geschwindigkeitsabhängig und/oder masseabhängig ist) und eine Zielgeschwindigkeit hinterlegt, wobei die Steuerung 126 die Beschleunigungszeit des Motors 6 überwacht und das Abbrechen einer Motorbewegung erzwingt, wenn die Zielgeschwindigkeit nicht innerhalb des hinterlegten Zeitintervalls erreicht wurde. Weiterhin umfasst die Steuerung 126 eine Zähleinheit 128 zur Ermittlung der Zeitdauer der Beschleunigung.

In einem Speicher (2, 127, 135) kann wiederum mindestens eine definierte Geschwindigkeit hinterlegt sein, auf die das autonome Fahrzeug in Abhängigkeit von der Auswertung eines Sensors (15, 16, 31, 32) abbremst. Diese definierte Geschwindigkeit kann vom Gewicht und/oder der Geometrie des autonomen Fahrzeugs (z.B. 1, 5) abhängen. Durch mindestens einen Sensor (15, 16, 31, 32) erfasste Hindernisse werden vom Sensor auf Basis von Distanzschwellwerten aus dem Speicher (2, 127, 135) bewertet, wobei es sich um ineinander geschachtelte Distanzschwellwerte handeln kann, welche bspw. im zweidimensionalen Raum definiert sind. Liegen die Distanzen zu den vom Sensor (15, 16, 31, 32) erfassten Hindernissen unter mindestens einem Distanzschwellwert, bremst die Steuerung 126 das autonome Fahrzeug (z.B. 1, 5) auf eine definierte Geschwindigkeit ab. Die Distanzschwellwerte ergeben sich wiederum aus dem Gewicht und/oder der Maximalgeschwindigkeit des autonomen Fahrzeugs (z.B. 1, 5). Je höher bspw. Gewicht und Maximalgeschwindigkeit des autonomen Fahrzeugs (z.B. 1, 5) sind, desto größer sind die Distanzschwellwerte, da innerhalb dieser Schwellwerte durch die Steuerung 126 auf die definierte Geschwindigkeit abgebremst werden muss.

Die Erfassung der Geschwindigkeit und/oder Beschleunigung erfolgt auf mindestens zwei Wegen und/oder über mindestens zwei unterschiedlichen physikalische Messprinzipien. In einem Aspekt erfolgt die Erfassung der Geschwindigkeit und/oder Beschleunigung bspw. durch Auswertung der Ströme und/oder des Drehmoments des Motors 6 und/oder durch Messung des Drehwinkels des Motors 6, eines Getriebebestandteils 7 und/oder eines Rades 10 durch einen Sensor zur Geschwindigkeitsüberwachung. Beim Sensor zur Geschwindigkeitsüberwachung durch Messung des Drehwinkels des Motors 6 handelt es sich um einen Drehwinkelsensor 129 wie bspw. einen Hall-Sensor und/oder einen Encoder bzw. Inkrementalgeber oder einen andersartigen Sensor, der es erlaubt, den Drehwinkel des Motors entsprechend zu erfassen. Weiterhin kann, in einem Aspekt, die Geschwindigkeitsmessung durch optische Sensoren (z.B. 15, 16, 31), Ultraschall und/oder Radar 32 erfolgen, bspw. auf dem Weg der Geschwindigkeitsüberwachung durch Ermittlung der Positionsänderung des autonomen Fahrzeugs (z.B. 1, 5) relativ zu fixen Hindernissen oder Landmarken in seinem Umfeld, wobei die fixen Hindernisse und/oder Landmarken in einer sich im Speicher 2 des autonomen Fahrzeugs (z.B. 1, 5) befindlichen Karte niedergelegt sind. Alternativ und/oder ergänzend kann die Geschwindigkeitsüberwachung durch einen optischen Sensor 32 erfolgen, der auf eine Oberfläche gerichtet ist und auf Basis gemessener Änderungen der Oberflächenstruktur relativ zum autonomen Fahrzeug (z.B. 1, 5) die Geschwindigkeit bestimmt. Die Erfassung der Oberflächenstruktur, bspw. der des Bodens oder einer Zimmerdecke, kann innerhalb eines definierten Sichtfensters erfolgen.

Die Übertragung der Sensordaten (bspw. von den LIDAR 15, 16, der Sicherheitsschaltleiste 28 oder dem Drehwinkelsensor 129) erfolgt zudem zweikanalig und/oder analog und digital, d.h. ein Kanal 152 wird digital ausgewertet (Spannungsteiler auf Digital-Eingangs-Pin) und ein Kanal 152 analog (Spannungsteiler auf Analog-Eingangs-Pin). Die Übertragungskanäle 152 sind in Fig. 16 entsprechend doppelt abgebildet. Ein Prozessor 130 (z.B. ein Mikrocontroller oder Komparator) vergleicht die auf zwei Kanälen und/oder durch zwei unterschiedliche physikalische Messprinzipien erhaltenen Sensordaten miteinander. Der analoge Messwert wird bspw. im Prozessor 130 der Steuerung 126 in ein digitales Signal umgerechnet (dabei werden Gültigkeitsbereiche für High und Low bewertet). Anschließend wird der Wert des digitalen Pins mit dem umgerechneten Logikwert verglichen. Abweichungen zwischen den über beide Kanäle erhaltene Daten und/oder den durch die zwei unterschiedliche physikalische Messprinzipien erhaltene Sensordaten, sofern diese jeweils über einem definierten Schwellwert liegen, triggern die Steuerung 126 zu einer Geschwindigkeitsreduktion des autonomen Fahrzeugs (z.B. 1, 5).

Auch die mindestens eine Sicherheitsschaltleiste 28 wird im weitesten Sinne zweikanalig ausgewertet, da der Widerstand der Schaltleiste gemessen wird. Dafür werden die zwei Anschlussleitungen analog ausgewertet und der Widerstand der Schaltleiste berechnet (wenn die Schaltleiste nicht gedrückt ist, entspricht das dem Abschlusswiderstand der Schaltleiste, ist die Schaltleiste gedrückt, so wird der Widerstand sehr klein). Diese "Berechnung" wird parallel noch durch eine Hardware-Schaltung umgesetzt (z.B. Spannungsteiler) und in ein digitales Signal umgewandelt. Dieses digitale Signal gibt dann im weitesten Sinne wieder, ob der Schaltleistenwiderstand einen Schwellwert überschreitet (d.h. z.B., ob der Schaltleistenwiderstand >= 8kOhm ist). Auch hier wird der in der im Prozessor 126 berechnete Schaltleistenzustand mit dem digitalen Pin verglichen und eine entsprechende Reaktion ausgelöst.

In einem Aspekt wird die Steuerung 126 über einen Watchdog 131 überwacht, welcher eine Geschwindigkeitsreduktion des autonomen Fahrzeugs (z.B. 1, 5) auslöst, wenn die Steuerung 126 nicht mehr mit Strom versorgt wird. Dabei schließt bspw. eine elektronische Schaltung 132 über aktiv gesteuerte Halbleiterbauelemente wie MOSFETs den Motor 6 kurz und/oder ein Relais 133, wobei bspw. das Relais 133 und die elektronische Schaltung 132 parallel geschaltet sind. In einem Aspekt wird eine elektronisch gesteuerte, mechanische Bremse (134) bei Spannungsabfall ausgelöst und das autonome Fahrzeug (z.B. 1, 5) gebremst.

Die Geschwindigkeitsreduktion, welche durch die Steuerung 126 herbeigeführt werden kann, erfolgt unabhängig von Anweisungen, welche Applikationen des autonomen Fahrzeugs (z.B. 5) an die Steuerung 126 übermitteln. Unter Applikationen werden dabei Softwareprogramme verstanden, die bspw. einen Transportauftrag oder einen Reinigungsauftrag darstellen, wobei bspw. eine bestimmte Geschwindigkeit zur Bewegung des autonomen Fahrzeugs vorgegeben ist. Weiterhin kann die Steuerung 126, wenn sich das autonome Fahrzeug (z.B. 1, 5) auf abschüssigem Gelände befindet, eine Drehzahl des Motors 6 von Null halten, um ein Wegrollen des autonomen Fahrzeugs (z. B. 1, 5) zu verhindern. Die Steuerung 126 kann in einem autonomen Fahrzeug wie einem autonomen Flurförderzeug 5, einem Serviceroboter, einem Desinfektionsroboter oder einem Reinigungsroboter eingesetzt werden.

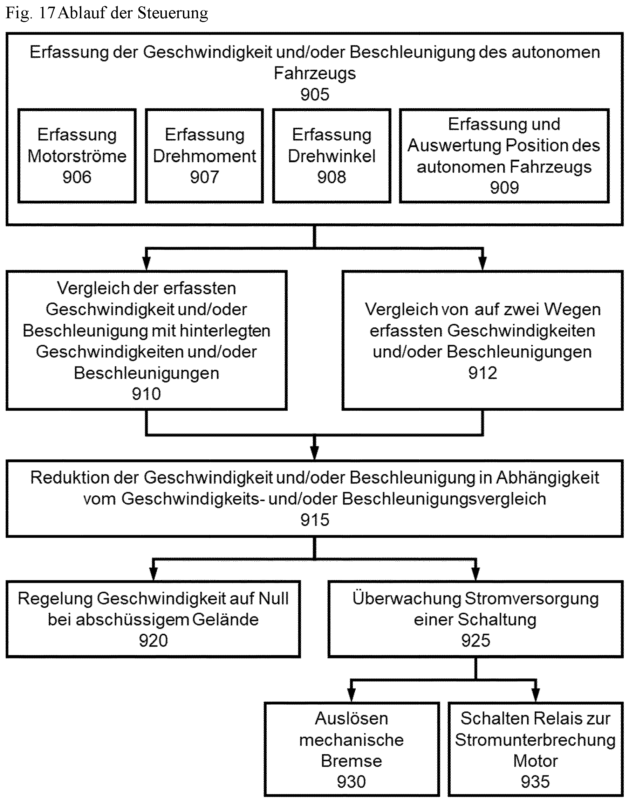

Fig. 17 dagegen stellt den Ablauf in der Steuerung 126 näher dar, welche bspw. die Geschwindigkeitsüberwachung eines autonomen Fahrzeugs (z.B. 1, 5) vornimmt. Der Ablauf des Verfahrens umfasst die Erfassung der Geschwindigkeit und/oder Beschleunigung des autonomen Fahrzeugs (z.B. 1, 5) (Schritt 905), einen Vergleich der erfassten Geschwindigkeit und/oder Beschleunigung mit hinterlegten Geschwindigkeiten und/oder Beschleunigungen (Schritt 910) und eine Reduktion der Geschwindigkeit und/oder Beschleunigung in Abhängigkeit vom Geschwindigkeits- und/oder Beschleunigungsvergleich (Schritt 915). Alternativ und/oder ergänzend umfasst die Steuerung 126 ein Verfahren zur Geschwindigkeitsüberwachung eines autonomen Fahrzeugs (z.B. 1, 5), umfassend die Erfassung der Geschwindigkeit und/oder Beschleunigung des autonomen Fahrzeugs (z.B. 1, 5) auf zwei Wegen, ein Vergleich der auf mindestens zwei Wegen erfassten Geschwindigkeiten und/oder Beschleunigungen (Schritt 912), und eine Reduktion der Geschwindigkeit und/oder Beschleunigung in Abhängigkeit vom Geschwindigkeits- und/oder Beschleunigungsvergleich (Schritt 915). Dabei kann bspw. die Geschwindigkeit und/oder Beschleunigung des autonomen Fahrzeugs (z.B. 1, 5) direkt oder indirekt überwacht werden. Die Übertragung der Erfassungssignale der Geschwindigkeit und/oder Beschleunigung des autonomen Fahrzeugs (z.B. 1, 5) erfolgt zweikanalig und/oder analog und digital. Es erfolgt weiterhin ein Vergleich der zweikanalig und/oder analog und digital erfassten Geschwindigkeit und/oder Beschleunigung und eine Geschwindigkeitsreduktion bei Abweichungen, die über einem Schwellwert liegen.

Die Erfassung der Geschwindigkeit und/oder Beschleunigung des autonomen Fahrzeugs (z.B. 1, 5) erfolgt durch zwei unterschiedliche, physikalische Messprinzipien. In einem Aspekt beinhaltet die Geschwindigkeits- und/oder Beschleunigungsüberwachung eine Erfassung von Motorströmen 906, die Erfassung des Drehmoments 907 eines Motors 6 beinhaltet. In einem alternativen und/oder ergänzenden Aspekt erfolgt die Erfassung der Geschwindigkeit und/oder Beschleunigung durch Messung des Drehwinkels 908 eines Motors 6, eines Getriebebestandteils 7 oder eines Antriebsrads 10, bspw. durch Messung des Drehwinkels durch einen Drehwinkelsensor 129 wie einen Hall-Sensor und/oder einen Encoder bzw. Inkrementalgeber. Der Drehwinkel kann auch durch Auswertung der rückwirkenden Generatorspannung (elektromotorische Kraft) - aus dem Stand der Technik bekannt) über eine entsprechende Schaltung erfolgen. Alternativ und/oder ergänzend erfolgt die Geschwindigkeitsmessung durch Erfassung der Position des autonomen Fahrzeugs (z.B. 1, 5) relativ zu seiner Umgebung und Auswertung der für die Positionsänderung notwendigen Zeit 909.

In einem Aspekt kann das von der Steuerung 126 umgesetzte Verfahren eine Reduktion der Geschwindigkeit und/oder Beschleunigung unabhängig von Instruktionen triggern, die Applikationen des autonomen Fahrzeugs vorgeben. In einem weiteren Aspekt regelt die Steuerung die Geschwindigkeit des autonomen Fahrzeugs (z.B. 1, 5) auf Null, wenn sich das autonome Fahrzeug (z.B. 1, 5) auf abschüssigem Gelände befindet, um ein Wegrollen zu verhindern 920. Nach einer Zeit t wird, in einem Aspekt, die elektronisch gehaltene Bremse 134 ausgelöst (Schritt 930).

In einem Aspekt erfolgt durch die Steuerung 126 eine Überwachung der Stromversorgung 925 einer Steuerung 126 und eine Reduktion der Geschwindigkeit, wenn die Steuerung nicht mehr mit Strom versorgt wird. Dabei kann die Geschwindigkeitsreduktion durch das Auslösen einer elektronisch gehaltenen mechanischen Bremse 134 erfolgen 930, eine elektronische Schaltung und/oder das Schalten eines Relais 133, dass die Energieversorgung eines Motors (6) unterbricht 935, bspw. zusätzlich mittels eines Kurzschlusses der Motorwicklung, was ebenso zu einer verstärkten Bremswirkung führt.

### Beispiele

### Beispiel 1: Doppelrolle

Wie in Fig. 2 erkennbar ist, ist die Gelenkrolle 11 als Doppelrolle ausgestaltet. Anstelle der Doppelrolle unterhalb der Ladefläche werden zwei parallel angeordnete Räder genutzt, welche in einem Beispiel jeweils einzeln so gelagert sind, dass die Räder Unebenheiten im Boden ausgleichen, aber stets in Bodenkontakt stehen, und dies auch bei schweren Ladungen 143, die auf jedem der parallel angeordneten Räder ruhen.

In einem Beispiel wird auf die drehbare Lagerung um die vertikale Achse verzichtet. Stattdessen kommt ein Allseitenrad zum Einsatz, insbesondere ein Schwerlast-Allseitenrad, vorzugsweise in doppelter Ausführungsform, wobei beide Räder um 45° um die Achse versetzt sind.

### Beispiel 2: Anordnung Akkumulatorzellen

In einem Aspekt befinden sich die Akkumulatoren des AFF 5 unterhalb der höhenverstellbaren Ladefläche, was für eine bessere Gewichtsverteilung des AFF 5 sorgt und die Stabilität im Fahrverhalten verbessert, insbesondere bei Schwenk-, Dreh- und Wendebewegungen. Dabei sind die Akkumulatoren 4 vorzugsweise so angeordnet, dass eine Belüftung der Akkumulatoren 4 möglich ist, um deren Erhitzen zu vermeiden. Hierbei sind in einem Aspekt die Akkumulatoren 4 derart angeordnet, dass die Belüftung in Längsrichtung erfolgt, wozu, in einem Aspekt, eine aktive Kühlung durch einen erzeugten Luftstrom realisiert ist. In einem alternativen und/oder ergänzenden Aspekt findet eine Kühlung durch vertikale Thermik statt. Hierzu sind die Akkumulatoren 4 derart angeordnet, dass ein Luftstrom nach oben entweichen kann. Hierzu sind, in einem Aspekt, bei abgesenkter Ladefläche 12, zwischen Auflage der Ladefläche 12 und Oberkante des die Akkumulatoren 4 enthaltenen Raums Rillen (vorzugweise Querrillen) enthalten, durch die aufsteigende Luft bei abgesenkter Ladefläche 12 entweichen kann. In einem alternativen und/oder ergänzenden Aspekt können auch Öffnungen in die Ladefläche 12 eingelassen sein, die mit den sich darunter befindlichen Öffnungen im Bauraum, der die Akkumulatoren 4 umschließt, in Eingriff steht.

In einem alternativen und/oder ergänzenden Aspekt sind die Akkumulatorzellen "schwimmend" gelagert, d.h. innerhalb einer Kühlflüssigkeit wie bspw. einem Öl. Eine derartige Lagerung sorgt u.a. für eine höhere Lebensdauer der Akkumulatoren 4 und weniger temperaturbedingte Ausfälle. Dies rührt daher, dass die Wärme der Akkumulatoren besser verteilt wird und damit eine bessere Kühlung erfolgt. Weiterhin sorgt dies für eine bessere Fahrdynamik, da die Kraft, die auf die Räder gebracht wird, durch die Masse des Öls steigt.

### Beispiel 3: Aufnehmen einer Ladung, bei der es sich nicht um einen Rollwagen handelt

Das AFF 5 in Form eines Gabelstaplers erhält über das Managementsystem (z.B. 36) den Auftrag, eine bestimmte Ladung 143 an einem definierten Ort abzuholen. Das AFF 5 navigiert vorwärts zu dieser Position (Grobnavigation), erkennt mit einer Kamera, die sich innerhalb der Gabeln befindet, eine Palette, wobei im Speicher des AFF 5 Bilderkennungsalgorithmen zum Tragen kommen, die auf Klassifikationen beruhen, die durch das Erlernen typischer Palettenmerkmale erstellt worden sind. An der Palette befindet sich ein RFID-Transponder, der durch das AFF 5 ausgelesen wird (oder aber ein optisch auslesbarer Identifikationscode wie ein Barcode oder ein QR-Code). In einem Aspekt kommt hierbei mindestens eine Antenne 27 zum Einsatz, die eine präzise Ortung des Transponders ermöglichen. Der Code des Transponders wird mit dem Code verglichen, der die zu transportierende Ware beschreibt. Stimmt der Code mit dem Code überein, der dem AFF 5 als die zu transportierende Ladung 143 übermittelt wurde, navigiert das AFF 5 dichter an die Palette heran. Das AFF 5 erkennt mittels der Bildklassifikationsalgorithmen die Bereiche, in die die Gabeln geschoben werden müssen. In einem alternativen Aspekt werden hierzu Daten eines LIDAR klassifiziert. Der Bewegungsplaner 115 ermöglicht eine derartige Positionierung des AFF 5 und seiner Gabeln parallel und der Höhe nach, dass das AFF 5 durch eine Vorwärtsbewegung die Gabeln unter die Palette schieben kann, um diese dann anzuheben. Nach erfolgtem Hub navigiert das AFF 5 zunächst rückwärts und dann zum Ziel. Je nach Höhe, aus der die Palette aufgenommen wurde, kann diese vor dem Transport auch noch weiter abgesenkt werden. In einem Aspekt ist in den Gabeln jeweils ein LIDAR, eine Kamera und eine Beleuchtung integriert.

### Beispiel: 4: Routenplanung in Abhängigkeit des Ladezustands/der Restladung des Akkumulators

Die Restfahrstrecke des AFF 5 ist in erster Näherung abhängig von der im Akkumulator 4 tatsächlich gespeicherten (Rest-)Energiemenge und den Verbräuchen je nach Zuladungsmasse und, in einem Aspekt, dem Reibungskoeffizienten des Fahrbelags/ Anstiegen usw. Das AFF 5 kann, in einem Aspekt, die Reibungskoeffizienten näherungsweise ermitteln, indem bspw. der Energieverbrauch pro gefahrener, definierter Strecke vorzugweise im Leerzustand (und demnach bei bekanntem Eigengewicht des AFF 5) und konstanter Geschwindigkeit ermittelt wird und mit im Speicher hinterlegten Werten für die Bodenbeschaffenheit verglichen wird. Dabei ist die Reibungskraft proportional zur Antriebskraft. Diese kann bspw. darüber ermittelt werden, dass bei konstantem Strom die Welle des Antriebsmotors 6 stärker nacheilt, wenn die Ladung 143 schwerer ist bzw. mehr Strom benötigt wird, um die Welle synchron zu halten (bzw. innerhalb ein max. zulässigem Schwellwerts), wobei die Auswertung der Drehung mittels Hall-Sensoren und/oder Encoder bzw. Inkrementalgeber erfolgt. Damit kann indirekt die Masse des AFF 5 abgeschätzt werden, wenn der Reibungskoeffizient bekannt ist. In einem alternativen und/oder ergänzenden Aspekt ermittelt das AFF 5 auf diese Art und Weise ebenfalls Steigungen in seinem Umfeld. Alternativ und/oder ergänzend kann auch eine Änderung der Drehrate eines Inertialsensors 40 genutzt werden, vorzugsweise die mit dem größten Achsenwert, Darauf basierend kann das AFF 5 eine Karte erstellen, die die Reibungskoeffizienten seines Umfelds und/oder den Energieverbrauch wiedergibt. Damit das AFF 5 nicht jeden Punkt im Raum abfahren muss, kann in einem Aspekt eine Interpolation zwischen verschiedenen räumlichen Positionen, an denen eine Messung stattgefunden hat, vorgenommen werden, um die Karte zu erstellen. Dabei kann, in einem Aspekt, auf optische Sensoren zurückgegriffen werden, um die Interpolationsergebnisse zu verbessern. Dabei wird vorzugsweise eine Kamera 31 genutzt, bspw. eine RGB-D-Kamera, die sowohl ein RGB-Bild als auch Tiefeninformationen verarbeiten kann. Letztere werden genutzt, um Höhenunterschiede der Ebene, auf der sich das AFF 5 bewegt, im Umfeld zu detektieren und diesen Raumkoordinaten zuzuweisen, die wiederum in der XY-Ebene in die zu erstellende Karte einfließen können. Insbesondere mit Blick auf den Reibungskoeffizienten kann auf Farbaufnahmen der Kamera 31 zurückgegriffen werden. Dabei wird die Farbe bzw. Textur der Oberfläche, die dort erfasst wurde, wo das AFF 5 eine Messung des Reibungskoeffizienten vorgenommen hat, mit der Oberfläche/Textur an anderen Stellen der Oberfläche verglichen. Wird eine Übereinstimmung festgestellt, so wird dies im Rahmen der Interpolation zum Anlass genommen, den gemessenen Reibungskoeffizienten auf alle Bereiche zu erstrecken, die eine zumindest ähnliche Textur vorweisen. In einem nächsten Schritt kann das AFF 5 sukzessive mögliche Routen in der Karte mit Blick auf den erwarteten Energieverbrauch gewichten (bspw. unter Berücksichtigung der Zuladung) und diese Informationen für eine energieverbrauchsoptimale Routenplanung nutzen.

### Beispiel 5: Mechanismus zum Aufheben einer Selbstblockade innerhalb der Steuerung

In einem Aspekt ist das AFF 5 bzw. ein autonomes Fahrzeug allgemein (wie ein Serviceroboter, ein Reinigungs- und/oder Desinfektionsroboter) derart konfiguriert, dass es eine Blockade wie bspw. eine Selbstblockade aufheben kann, wobei diese Funktionalität in einem Aspekt hardwarenah implementiert ist. Sensoren sind in diesem Fall bspw. zweikanalig mit einer Steuerung verbunden, die diese hier beschriebene Funktionalität ausführt. Dabei werden diese bspw. analog und/oder digital ausgewertet.

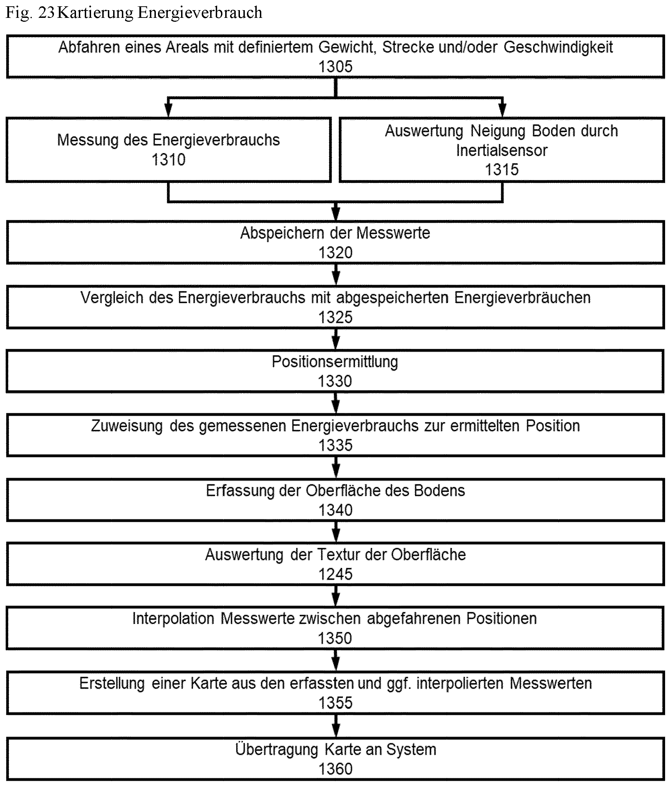

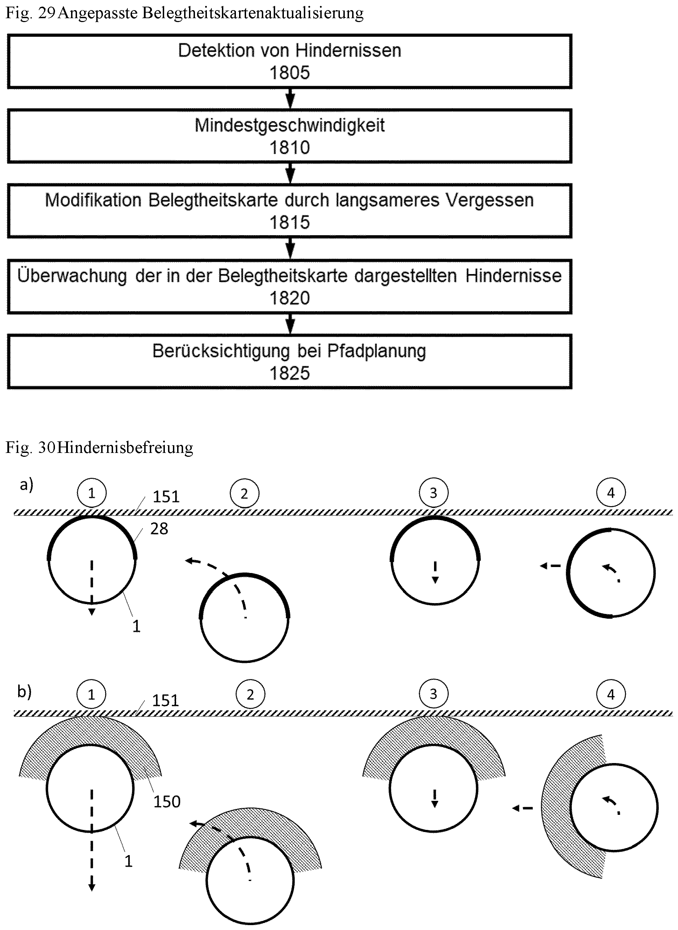

Unter Selbstblockade wird verstanden, dass mindestens einer der Sensoren, die ein Hindernis in unmittelbarer Nähe des AFF 5 bzw. autonomen Fahrzeugs detektieren, ausgelöst wurde und darüber die Bewegung des AFF 5 bzw. autonome Fahrzeug aus Sicherheitsgründen blockiert, wobei dieses stillsteht. Dazu zählt insbesondere das Auslösen der Kontakte in der Stoßstange (d.h. der Sicherheitsschaltleiste), bspw. in Fahrtrichtung. Je nach Ausführung kann diese Funktion der Hinderniserkennung im Nahbereich auch durch andere Sensoren wie ToF-Sensoren 29, Ultraschall, Radar 32, LIDAR 15, 16, etc. wahrgenommen werden. Wenn es sich beim Hindernis nun um ein statisches Hindernis oder temporär statisches Hindernis handelt, dass also nach einem definierten Zeitraum nicht wieder verschwindet und weiterhin den Nahbereichssensor aktiviert bzw. ein Schutzfeld innerhalb dieses Nahbereichssensors. In diesem Fall ist die Steuerung des AFF 5 bzw. autonome Fahrzeug so ausgelegt, dass für eine kurze Zeitspanne das AFF 5 bzw. autonome Fahrzeug die Motoren 6 wieder aktiviert werden und das AFF 5 bzw. autonome Fahrzeug einen Befreiungsversuch startet. Grundlage dafür ist, dass kein weiterer Sensor mit kleinerem Schutzfeld aktiviert ist, also bspw. eine Sicherheitsschaltleiste, die sich bspw. auf der Rückseite des AFF 5 bzw. autonome Fahrzeug befindet, oder ein Schutzfeld eines LIDARs oder anderen Sensors, dass bspw. rückwärtsgerichtet ist. In diesem Fall kann das AFF 5 bzw. autonome Fahrzeug ein Stück zurücksetzen. Dabei entfernt sich das AFF 5 bzw. autonome Fahrzeug vorzugsweise so weit von seiner vorigen Position, dass der betreffende Sensor, der den Stopp ausgelöst hat, nicht mehr auslösen würde, d.h. bspw. die Sicherheitsschaltleiste 28 nicht mehr auslöst und/oder kein Hindernis mehr im kleinsten, nach vorne gerichteten Schutzfenster 150 detektiert wird. In einem Aspekt wird die Sicherheitsschaltleiste 28 ortsaufgelöst ausgewertet, d.h. es wird detektiert, an welcher Position diese auf ein Hindernis getroffen ist, was innerhalb der Sicherheitsschaltleiste für einen Kurzschluss bzw. eine Leitungsdiskontinuität sorgt. Dazu kann, in einem Aspekt, die elektromagnetische Wellenausbreitung bzw. Wellenlaufzeit in den Leitungen der Sicherheitsschaltleiste 28 ausgewertet werden, bspw. auf dem Weg der Reflektionsmessung im Zeitbereich (timedomain reflectometry). Fig. 30 illustriert diesen Ablauf. In Fig. 30 a) wird eine Hindernisbefreiung mit Blick auf eine ausgelöste Sicherheitsschaltleiste 28 gezeigt, die sich an der mobilen Basis 1 befindet und die durch Kontakt mit einer Wand 151 auslöst (siehe (1)). Die mobile Basis setzt dann zurück und leitet eine kurvige Drehbewegung nach links ein, um vorwärts die Fahrt fortzusetzen (siehe (2)). Alternativ kann, wie in (3) dargestellt nach Berührung mit der Wand 151 ein kurzes Zurücksetzen stattfinden und dann eine Drehung der mobilen Basis 1, bspw. auf der Stelle, um dann bspw. vorwärts zu fahren (siehe (4)). In Fig. 30 b) ist ein ähnliches Vorgehen für eine mobile Basis 1 mit einer Schutzzone eines berührungslosen Sensors dargestellt, wobei mit 150 die innere Schutzzone dargestellt ist, die einen Stopp der Bewegungen der mobilen Basis 1 auslöst. Auch hier erfolgt nach Auslösen der Schutzzone 150 ein Zurücksetzen der mobilen Basis 1 (1) und dann gedreht eine Vorwärtsbewegung am Hindernis (d.h. der Wand 151) vorbei. In (3) und (4) ist analog wie unter a) ein kurzes Zurücksetzen und eine Drehbewegung der mobilen Basis 1, bspw. auf der Stelle bzw. um die eigene Achse, dargestellt mit einer darauffolgenden Vorwärtsbewegung. Nach diesen möglichen Schritten navigiert das AFF 5 bzw. autonome Fahrzeug (bzw. die mobile Basis 1) wie gewohnt. Dieses Vorgehen kann, in einem Aspekt, in einer Zustandsmaschine (State Maschine) implementiert sein. Zusammengefasst lässt sich der Sachverhalt wie in Fig. 23 darstellen: Auswertung eines Sensors in Fahrtrichtung im Zeitablauf 1405, bspw. mindestens zweikanalig (Schritt 1410) oder analog und digital (Schritt 1415), Auswertung eines nicht in Fahrtrichtung ausgerichteten Sensors (Schritt 1420), ebenfalls mindestens zweikanalig (Schritt 1425) oder analog und digital (Schritt 1430), Einleitung einer Rückwärtsbewegung der Räder (Schritt 1435), sofern im Schritt 1420 kein Hindernis detektiert wird. Es erfolgt eine Bewegung in die Richtung ohne detektiertes Hindernis (Schritt 1440). Anschließend erfolgt eine Neuplanung einer Route (Schritt 1445), wobei das Pfadplanungsmodul 112 und/oder der Bewegungsplaner 115 genutzt werden.

Der Mechanismus zum Aufheben einer Blockade eines autonomen Fahrzeugs wird hier durch folgende Aspekte AMAB1-AMAB14 charakterisiert:
AMAB1. Verfahren zum Aufheben der Blockade eines autonomen Fahrzeugs, dessen Geschwindigkeit aufgrund einer Detektion eines Hindernisses in Fahrtrichtung im Nahbereich durch mindestens einen Sensor in Fahrrichtung reduziert wurde, umfassend
   - Auswertung eines Sensors, der nicht in Fahrtrichtung gerichtet ist;
   - Einleitung einer Rückwärtsbewegung der Räder.
AMAB2. Verfahren nach AMAB1, umfassend
   - Auswertung des Sensors in Fahrtrichtung im Zeitablauf;
   - Einleitung der Auswertung des Sensors, der nicht in Fahrtrichtung gerichtet ist, nach einem definierten Zeitintervall, währenddessen die Detektion des Hindernisses in Fahrtrichtung erfolgt.
AMAB3. Verfahren nach AMAB1, wobei die Einleitung der Rückwärtsbewegung der Räder dann erfolgt, wenn der Sensor, der nicht in Fahrtrichtung gerichtet ist, kein Hindernis detektiert, das eine Geschwindigkeitsreduktion indiziert.
AMAB4. Verfahren nach AMAB1, weiter umfassend Bewegung des Roboters in die Richtung erfolgt, in der kein Hindernis detektiert wurde.
AMAB5. Verfahren nach AMAB1, wobei die Hindernisdetektion im kleinsten von mehreren Schutzfeldern erfolgt.
AMAB6. Verfahren nach AMAB1, wobei der mindestens eine Sensor mindestens zweikanalig ausgewertet wird.
AMAB7. Verfahren nach AMAB1, wobei der mindestens eine Sensor analog und digital ausgewertet wird.
AMAB8. Verfahren nach AMAB1 oder AMAB3, wobei die Geschwindigkeitsreduktion eine Reduktion auf null ist.
AMAB9. Verfahren nach AMAB8, wobei die Motoren (6) in diesem Zustand stromlos gestellt sind.
AMAB10. Verfahren nach AMAB4, weiter umfassend eine Neuplanung einer Route.
AMAB11. Verfahren nach AMAB1, wobei es sich beim mindestens einen Sensor um eine Stoßstange bzw. Sicherheitsschaltleiste (28) handelt.
AMAB12. Verfahren nach AMAB12, wobei die Stoßstange bzw. Sicherheitsschaltleise (28) ortsaufgelöst ausgewertet wird.
AMAB13. Verfahren nach AMAB1, wobei es sich beim mindestens einen Sensor um mindestens einen Ultraschallsensor, mindestens einen Radarsensor (32), mindestens einen Time-of-Flight-Sensor (29), eine Kamera (20, 31) und/oder um mindestens einen LIDAR (15, 16) handelt.
AMAB14. Vorrichtung nach AMAB1, wobei das autonome Fahrzeug ein Serviceroboter, ein Inventurroboter, ein autonomes Flurförderzeug (5), ein Reinigungsroboter oder ein Desinfektionsroboter ist.
AMAB15. Vorrichtung zur Durchführung des Verfahrens nach AMAB1-14.
AMAB16. Vorrichtung nach AMAB15, wobei es sich um eine hardwarenahe Steuerung handelt.
AMAB17. Zustandsmaschine (State Maschine) zur Durchführung des Verfahrens nach AMAB 1-9.

### Beispiel 6: Schlupfermittlung und -korrektur

In einem Aspekt ist das AFF 5 (stellvertretend genannt für ein autonomes Fahrzeug wie bspw. einen Serviceroboter, einen Reinigungs- und/oder Desinfektionsroboter, derart konfiguriert, dass es den Schlupf ermitteln kann und auf diesem Wege seine Navigationsfähigkeiten verbessert. Dazu sind, vorzugsweise innerhalb des Odometrie-Moduls 121, entweder an einem Motor 6 (und hier vorzugsweise der Achse) und/oder an den Antriebsrädern 10 bzw. einem eventuell vorhandenen Getriebe Drehwinkelsensoren 129 zur Ermittlung des Drehwinkels vorhanden. Das System ist ferner so konfiguriert, dass über die Winkelermittlung in Zusammenhang mit dem Durchmesser der Antriebsräder 10 und etwaiger, zwischengeschalteten Getriebeübersetzungen die zurückgelegte Wegstrecke ermittelt werden kann. Hierbei kann es sich bspw. um Hall-Sensoren, Encoder bzw. Inkrementalgeber, etc. handeln (siehe auch das oben beschriebene Odometrie-Modul 121). In einem Beispiel können die Encoder bzw. Inkrementalgeber (per Lichtschranke) mehr als 1024 Schritte auslesen, die Hall-Sensoren 24.Wenn jedoch ein Antriebsrad 10 durchdreht, ist die von den Sensoren ermittelte Wegstrecke länger als die tatsächlich zurückgelegte. Diese Differenz aus der von den Radsensoren ermittelten Distanz und der tatsächlich zurückgelegten Distanz wird als Schlupf bezeichnet.

Das System ist in der Steuerung 126 implementiert und verfügt über Latenzzeiten von weniger als 100 ms (bspw. 10 ms) und eine hohe Regelgüte, womit sehr rasche Korrekturen vorgenommen werden können. Es verfügt zudem über mindestens einen Inertialsensor 40 (bspw. IMU mit (3D)-Beschleunigungssensoren, (3D)-Gyroskop(Drehrate)-Sensoren und ggf. (3D) Kompass-Sensoren), der Beschleunigungen und Drehraten ermittelt. Es wird zunächst die Achse mit der größten Beschleunigung (Gravitation) ermittelt, welche die vertikale Achse (z) angibt. Die beiden anderen Achsen spannen die XY-Ebene auf, innerhalb sich das AFF 5 bewegt (aus Vereinfachungsgründen wird ein Fortbewegen auf schiefen Ebenen in dieser Beschreibung vernachlässigt). Über die Drehraten der z-Achse wird die Orientierung des AFF 5 im Raum ermittelt, relativ zum Koordinatensystem aus dem Navigationsmodul 110, welches das Umfeld des AFF 5 abdeckt. Gibt die Steuerung 126 nun bspw. eine konstante Geschwindigkeit beider Antriebsräder 10 vor, was eine Bewegung parallel zum Richtungsvektor entspricht, der über die Drehraten ermittelt wurde, aber weicht nun die auf diesem Weg ermittelte Orientierung des AFF 5 ab, bedeutet dies, dass mindestens ein Antriebsrad 10 des AFF 5 nicht die vorgegebene Winkelgeschwindigkeit vorweist. Messen jedoch die Drehwinkelsensoren 129 jeweils die vorgegebenen Drehwinkel (auf Basis der vorgegebenen Geschwindigkeit), dreht eines der Antriebsräder 10 durch. Die Änderung der Orientierung gibt vor, um welches Antriebsrad 10 es sich handelt (orientiert sich das AFF 5 bspw. nach links, ist das linke Antriebsrad 10 betroffen). Die Steuerung 126 reduziert nun die Geschwindigkeit mindestens eines Antriebsrads 10, bspw. beider Antriebsräder 10, um den Schlupf zu reduzieren bzw. bspw. wieder Bodenhaftung zu gewinnen, misst dabei die Orientierung des AFFs 5, und passt die Radgeschwindigkeiten der Antriebsräder 10 jeweils soweit an, dass das AFF 5 sich wieder in die vorgegebene Trajektorie bewegt. Wird bspw. beim rechten Antriebsrad 10 Schlupf detektiert, kann durch Geschwindigkeitsreduktion des linken Antriebsrads die Drehbewegung des AFF 5 ausgeglichen werden. Bei der Abweichung der ermittelten Winkel können insgesamt Schwellwerte zum Einsatz kommen, die im Steuerungsspeicher 127 abgelegt sind.

In einem alternativen und/oder ergänzenden Aspekt werden LIDAR-, Radar-und/oder Kamera-Daten, die zur Positionsermittlung auf Basis aufgezeichneter Karten des Umfelds des AFF 5 und/oder zur Ermittlung der Fahrgeschwindigkeit genutzt werden, dafür herangezogen, Differenzen zwischen gemessenen Odometrie-Werten und der tatsächlich zurückgelegten Wegstecke zu ermitteln. In einem Aspekt können hierbei auch erfasste und in einem Speicher 2 abgelegte Wegmarken genutzt werden bzw. das durch Hindernischarakteristika definierte Umfeld des AFF 5 (wie z.B. bestimmte, vorzugsweise feste Hindernisse und deren Orientierung im Raum). Mittels der Positionsermittlung auf den Karten lassen sich zudem die Odometrie-Werte und Inertialsensor-Werte korrigieren, wobei dieser Vorgang kontinuierlich oder in definierten Intervallen vorgenommen wird, da die Latenzzeiten für diese Auswertung deutlich größer sind als die hardwarenahe Implementierung über mindestens einen Inertialsensor 40.

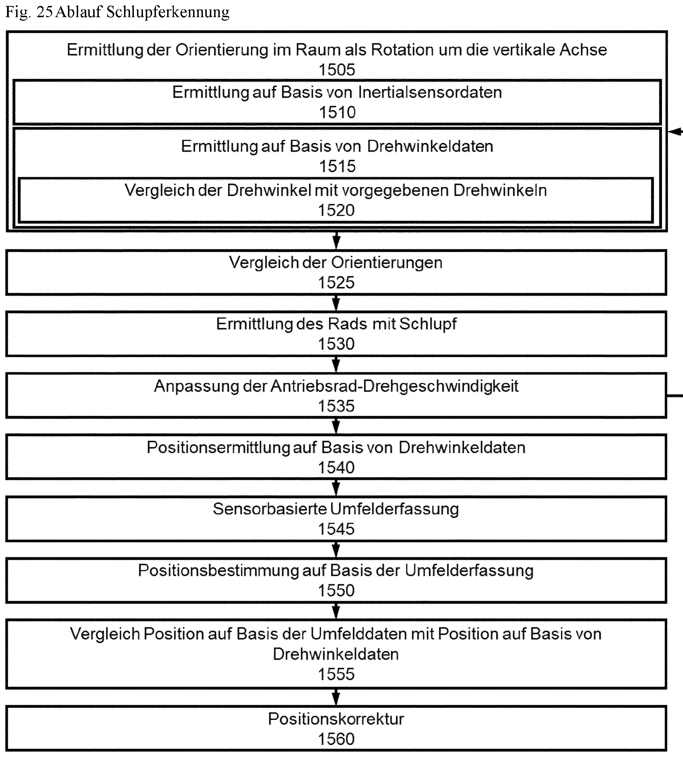

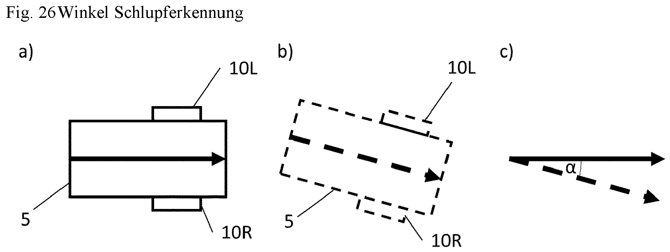

Zusammengefasst lässt sich der Ablauf, wie in Fig. 25 dargestellt, beschreiben, der eine Schlupferfassung in Echtzeit darstellt: Das Verfahren zur Reduktion von Schlupf eines autonomen Fahrzeugs (bspw. ein Inventurroboter, ein Flurförderzeug 5, ein Serviceroboter, ein Reinigungsroboter oder ein Desinfektionsroboter) umfasst die Ermittlung der Orientierung im Raum als Rotation um die vertikale Achse (Schritt 1505), bspw. auf zwei verschiedenen Wegen. Dabei erfolgt eine Ermittlung der Rotation des autonomen Fahrzeugs um die vertikale Achse die Auswertung von Inertialsensordaten (Schritt 1510) als erster Weg. Die Daten des ersten Wegs beschreiben dabei die wahre Orientierung des autonomen Fahrzeugs (ground truth). Im Schritt 1515 erfolgt die Ermittlung der Orientierung im Raum als Rotation um die vertikale Achse auf Basis der Auswertung von Drehwinkeldaten als zweiter Weg, die durch Drehwinkelsensoren 129 erfasst werden. Diese Drehwinkeldaten beschreiben die Rotation der Antriebsräder 10 des autonomen Fahrzeugs. Diese kann direkt ermittelt werden, oder aber indirekt über die Drehung eines Motors 6 und/oder Getriebeelements 7 jeweils als Bestandteil bspw. des Differentialantriebs 124. Die Orientierung des autonomen Fahrzeugs auf Basis der Drehwinkeldaten kann durch Schlupf verfälscht sein und muss demnach nicht zwangsweise die wahre Orientierung des autonomen Fahrzeugs beschreiben. Im Schritt 1520 erfolgt ein Vergleich der gemessenen Drehwinkeldaten mit vorgegebenen Drehwinkeldaten. Dies bedeutet, dass bspw. eine bestimmte Distanz vorgegeben wurde, die das autonome Fahrzeug bis zum Messzeitpunkt zurücklegen sollte und welche, basierend auf dem Raddurchmesser, mit einer bestimmten Anzahl an Umdrehungen, die sich in einen Drehwinkel übersetzen lassen, assoziiert ist. Es wird also ermittelt, ob das autonome Fahrzeug diese vorgegebene Distanz auch zurückgelegt hat, umgerechnet in einen vorgegebenen Drehwinkel, der mit einem sensorisch ermittelten Drehwinkel verglichen wird, wobei bei Übereinstimmung der Drehwinkel diese Distanz auch zurückgelegt wurde. Es erfolgt im Schritt 1525 ein Vergleich der Orientierungen, d.h. der auf den mindestens zwei Wegen ermittelten Rotationen um die horizontale Achse (wobei diese horizontale Achse die Achse ist, die bspw. mittig zwischen den Antriebsrädern 10 des autonomen Fahrzeugs verläuft). Bei diesem Vergleich erfolgt eine Ermittlung der Abweichungen, wobei bei einer ermittelten Abweichung der auf mindestens zwei Wegen ermittelten Orientierung und bei Übereinstimmung der gemessenen Drehwinkeldaten mit vorgegebenen Drehwinkeldaten eines Antriebsrads 10 das betreffende Antriebsrad 10 Schlupf aufweist. Unter Schlupf wird das Durchdrehen oder Blockieren eines Antriebsrads 10 verstanden bzw. dass die Relativgeschwindigkeit der in Eingriff stehenden Oberflächen des Antriebsrads 10 und des Bodens ungleich null ist, Die Ermittlung des Antriebsrads 10 mit Schlupf (Schritt 1530) geschieht auf folgende Weise: In Fig. 26 ist hierzu eine Winkelermittlung zwecks Schlupferkennung dargestellt. Fig. 26 a) zeigt das AFF 5 mit dem linken 10L und rechten 10R Antriebsrad. Der durchgezogene Pfeil zeigt die Orientierung der Rotation um die vertikale Achse als Richtungsvektor an, welche durch den Inertialsensor 40 vorgegeben wird. Dagegen zeigt Fig. 26 b) mit dem gestrichelten Pfeil die tatsächliche Orientierung des AFF 5 als Richtungsvektor an, welche durch die Drehwinkeldaten gemessen wurde. In Fig. 26c) wird die Winkeldifferenz α dargestellt, wobei der Richtungsvektor des Inertialsensors als Referenz dient. Dabei liegt eine Drehung des AFF 5 in mathematisch negativer Richtung vor, welche auf ein Durchdrehen des Antriebsrads 10R zurückzuführen ist bzw. einem relativ größeren Durchdrehen des Antriebsrads (10R) im Vergleich zum Antriebsrad (10L). Damit tritt der Schlupf beim Antriebsrad (10R) auf der rechten Seite in Fahrtrichtung auf, wenn der Rotationswinkel zwischen der auf dem ersten oder dritten Weg ermittelten Rotation als Referenz-Richtungsvektor und der auf dem zweiten Weg ermittelten Rotation als Richtungsvektor mathematisch negativ ist. Es erfolgt dann im Schritt 1535 die Anpassung der Geschwindigkeit mindestens eines Antriebsrads 10, bspw. des Antriebsrads 10, bei dem Schlupf nicht auftritt. Dies geschieht so lange, bis kein Schlupf mehr gemessen wird, womit ein Regelkreis vorliegt. Die Anpassung der Antriebsradgeschwindigkeit zur Schlupfreduktion erfolgt bspw. innerhalb einer Zeit von 10 ms.

Diese bspw. im vorangegangenen Absatz genannten Schritte bzw. Aspekte können in einer Steuerung 126, bspw. einer Motorsteuerung, implementiert sein, die bspw. zweikanalig mit mindestens zwei Drehwinkelsensoren 129 verbunden ist, wobei als Drehwinkelsensor 129 ein Hall-Sensor, ein Encoder bzw. Inkrementalgeber, ein Stroboskop-Drehzahlmesser, ein Tachogenerator, ein Induktionsgeber und/oder einen Wiegand-Sensor infrage kommen. Hiervon können die Sensoren zweikanalig angebunden sein, wobei ein Kanal 152 Signale analog und ein Kanal 152 Signale digital überträgt. Die Implementierung der Abläufe wiederum kann in einer Rotations-Auswertungseinheit 41 innerhalb der Steuerung umgesetzt sein, die wiederum mit einer Kamera- 20, einem LIDAR (15, 16) und/oder einem Radarsensor 32 sowie einem Navigationsmodul 110 verbunden sein kann.

Die Drehwinkeldaten werden allgemein genutzt, um durch das Odometrie-Modul 121 die Position des autonomen Fahrzeugs zu ermitteln, aber auch, um die Drehbewegungen des Differentialantriebs 124 zu überwachen. Damit lässt sich durch die Drehwinkeldaten zugleich die Bewegungsrichtung des autonomen Fahrzeugs ermitteln. Die oben genannten Rotationsermittlungen zur Bestimmung der Orientierung des autonomen Fahrzeugs erfolgen relativ zu einem Koordinatensystem einer im Navigationsmoduls 110 abgelegten Karte des autonomen Fahrzeugs.

In einem Aspekt erfolgt in einem weiteren Schritt, der bspw. nicht im Rahmen der Steuerung umgesetzt wird, sondern bspw. im Navigationsmodul 110, eine sensorbasierte Umfelderfassung des autonomen Fahrzeugs bspw. durch Kamera- 20, einem LIDAR (15, 16) und/oder einem Radarsensor 32, eine Positionsbestimmung des autonomen Fahrzeugs auf Basis der Umfelddaten, ein Vergleich der auf Basis der Umfelddaten bestimmten Position mit auf Basis der Drehwinkeldaten bestimmten Position des autonomen Fahrzeugs und/oder der Daten des Inertialsensors (IMU) 40 und eine Korrektur der Position des autonomen Fahrzeugs bei Ermittlung einer Abweichung der Position. Die Positionsbestimmung auf Basis der Umfelddaten kann im Rahmen von SLAM (Simultaneous Localization and Mapping, d.h. Simultane Positionsbestimmung und Kartenerstellung) erfolgen, bspw. im Rahmen eines graph-basierter SLAM-Ansatzes (z.B. siehe DOI: 10.1109/MITS.2010.939925) oder mittels visualSLAM, wobei das autonome Fahrzeug mittels Drehwinkeldaten ermittelte Positionen durch eine Umfelderfassung und -auswertung korrigiert.

System und Verfahren zur Reduktion von Schlupf eines autonomen Fahrzeugs werden hier durch folgende Aspekte ARS1-ARS25 charakterisiert:
ARS1. Verfahren zur Reduktion von Schlupf eines autonomen Fahrzeugs, umfassend
   - Ermittlung der Rotation des autonomen Fahrzeugs um die vertikale Achse auf zwei verschiedenen Wegen;
   - Vergleich der ermittelten Rotationen;
   - Ermittlung der Abweichung;
   - Anpassung der Geschwindigkeit mindestens eines Antriebsrads (10).
ARS2. Verfahren nach ARS 1, wobei ein erster Weg zur Ermittlung der Rotation des autonomen Fahrzeugs um die vertikale Achse die Auswertung von Inertialsensordaten umfasst.
ARS3. Verfahren nach ARS 1, wobei ein zweiter Weg zur Ermittlung der Rotation des autonomen Fahrzeugs um die vertikale Achse die Auswertung von Drehwinkeldaten umfasst.
ARS4. Verfahren nach ARS2, wobei die Inertialsensordaten die wahre Orientierung des autonomen Fahrzeugs beschreiben.
ARS5. Verfahren nach ARS3, wobei die Drehwinkeldaten die nicht-wahre Orientierung des autonomen Fahrzeugs auf Basis von Schlupf beschreiben.
ARS6. Verfahren nach ARS3, wobei die Drehwinkeldaten die Rotation der Antriebsräder (10) des autonomen Fahrzeugs beschreiben.
ARS7. Verfahren nach ARS3, weiter umfassend Vergleich der gemessenen Drehwinkeldaten mit vorgegebenen Drehwinkeldaten.
ARS8. Verfahren nach ARS7, wobei bei einer ermittelten Abweichung der auf mindestens zwei Wegen ermittelten Orientierung und bei Übereinstimmung der gemessenen Drehwinkeldaten mit vorgegebenen Drehwinkeldaten eines Antriebsrads (10) das betreffende Antriebsrad (10) Schlupf aufweist.
ARS9. Verfahren nach ARS8, wobei der Schlupf beim Antriebsrad (10R) auf der rechten Seite in Fahrtrichtung auftritt (und umgekehrt), wenn der Rotationswinkel zwischen der auf dem ersten oder dritten Weg ermittelten Rotation als Referenz-Richtungsvektor und der auf dem zweiten Weg ermittelten Rotation als Richtungsvektor mathematisch negativ (bzw. positiv) ist.
ARS 10. Verfahren nach ARS9, weiter umfassend Anpassung der Geschwindigkeit mindestens eines Antriebsrads (10) so lange, bis kein Schlupf mehr ermittelt wird.
ARS 11. Verfahren nach ARS3, wobei die Drehwinkeldaten die Drehung eines Motors (6), Getriebeelements (7) und/oder eines Antriebsrads (10) darstellen.
ARS12. Verfahren nach ARS3, wobei auf Basis der Drehwinkeldaten eine Bewegungsrichtung des autonomen Fahrzeugs ermittelt wird.
ARS 13. Verfahren nach ARS1, wobei die Rotation relativ zu einem Koordinatensystem einer im Navigationsmoduls 110 und/oder im Speicher (2) abgelegten Karte des autonomen Fahrzeugs ermittelt wird.
ARS14. Verfahren nach ARS1, wobei die Geschwindigkeit innerhalb von unter 100 ms angepasst wird.
ARS 15. Verfahren nach ARS 1, weiter umfassend Ermittlung der Position des autonomen Fahrzeugs auf Basis von Drehwinkeldaten.
ARS 16. Verfahren nach ARS 15, weiter umfassend
   - Sensorbasierte Umfelderfassung des autonomen Fahrzeugs;
   - Positionsbestimmung des autonomen Fahrzeugs auf Basis der Umfelddaten;
   - Vergleich der auf Basis der Umfelddaten bestimmten Position mit auf Basis der Drehwinkeldaten und/oder Inertialsensordaten bestimmten Position des autonomen Fahrzeugs und
   - Korrektur der Position des autonomen Fahrzeugs bei Ermittlung einer Abweichung der Position.
ARS 17. Verfahren nach ARS 16, wobei die durch die Umfelderfassung ermittelten Positionsdaten die wahre Position beschreiben.
ARS18. Verfahren nach ARS1, wobei das autonome Fahrzeug ein Inventurroboter, ein Flurförderzeug (5), ein Serviceroboter, ein Reinigungsroboter oder ein Desinfektionsroboter ist.
ARS19. Vorrichtung zur Durchführung des Verfahrens nach ARS1-ARS18.
ARS20. Vorrichtung nach ARS19, wobei es sich bei der Vorrichtung zumindest anteilig um eine Motorsteuerung handelt.
ARS21. System umfassend eine Steuerung 126; einen Inertialsensor (40); mindestens einen Drehwinkelsensor (129) wie einen Hall-Sensor, einen Encoder bzw. Inkrementalgeber, Stroboskop-Drehzahlmesser, Tachogenerator, Induktionsgeber und/oder einen Wiegand-Sensor; Schaltung zur Auswertung der rückwirkenden Generatorspannung (elektromotorische Kraft);)eine Rotations-Auswertungseinheit (41); eine Kamera- (20, 31), ein LIDAR (15, 16) und/oder ein Radarsensor (32) sowie ein Navigationsmodul (110).
ARS22. System nach ARS21, weiter umfassend eine zweikanalige Verbindung zwischen mindestens zwei Drehwinkelsensoren (129) und der Steuerung (126) vorliegt.
ARS23. System nach ARS22, wobei ein Kanal (152) Signale analog und ein Kanal (152) Signale digital überträgt.

### Beispiel 7: Kostenfunktion im Rahmen der Navigation basierend auf Akkumulatorkennwerten

In einem Aspekt ist das AFF 5 so konfiguriert, dass das AFF 5 eine Kostenfunktion berücksichtigt, welche eine Verknüpfung aus SoH und SoC berücksichtigt, d.h. wird die tatsächlich gespeicherte Energie = U*SoH*SoC, (als Grundlage für die Planung) genutzt, bspw. 2KWh = 20V^{∗}100Ah (Batterierestkapazität)^{∗}100% Ladezustand ("voll") .

### Beispiel 8: Energiemanagement und Auftragsplanung

In einem Aspekt ist das AFF 5 bzw. ein autonomes Fahrzeug, ein anderes AFF 5 bzw. ein anderes autonomes Fahrzeug oder ein mit dem AFF 5 bzw. einem anderen autonomen Fahrzeug verbundenes Managementsystem derart konfiguriert, dass das AFF 5 bzw. das autonome Fahrzeug Aufträge, bspw. Transportaufträge, in Abhängigkeit vom Ladezustand des Akkumulators 4 des bzw. eines AFF 5 bzw. eines autonomen Fahrzeugs verwaltet. Dies heißt bspw., dass, wenn der Ladezustand eines AFF 5 bzw. autonomen Fahrzeugs einen Schwellwert unterschreitet, dieses keinen Transportauftrag annimmt, sondern der Auftrag an ein anderes AFF 5 bzw. autonomes Fahrzeug vergeben wird, wobei die Vergabe durch das AFF 5 bzw. autonome Fahrzeug selbst, ein anderes AFF 5 bzw. autonomes Fahrzeug oder durch ein Management-System (z.B. 36) erfolgen kann. Anstelle des Unterschreitens eines Schwellwerts des Ladezustands ist es auch möglich, dass diese Folgehandlungen vorgenommen werden, wenn das AFF 5 bzw. autonome Fahrzeug, welches den Auftrag durchführen sollte, zum Zeitpunkt des Auftrags bzw. während der Durchführung des Auftrags einen Ladevorgang geplant hat.

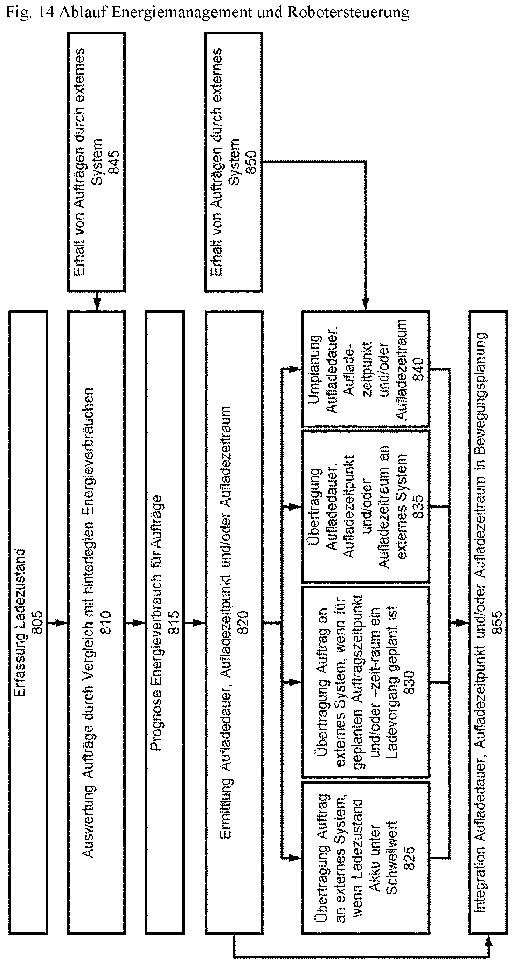

Der Ablauf des Energiemanagements bzw. der AFF-Steuerung kann wie folgt in Fig. 14 zusammengefasst werden: Erfassung des aktuellen Ladezustands des Akkumulators (Schritt 805), bspw. durch Messung der Zellspannung oder durch Impedanzspektroskopie und Vergleich mit hinterlegten Werten. In einem nächsten Schritt erfolgt die Auswertung erhaltener Aufträge durch Vergleich der Aufträge mit hinterlegten Energieverbräuchen (Schritt 810). Bei den Energieverbräuchen kann es sich um Energieverbräuche zwischen zwei Koordinaten handeln bzw. Wegpunkten entlang eines Pfads. Die Aufträge wiederum können durch ein externes System übermittelt werden (Schritt 845). Bei den im Speicher (2, 38) hinterlegten Energieverbräuchen kann es sich bspw. um Werte handeln, die einen Energieverbrauch pro zurückgelegter Distanz umfassen und der bspw. empirisch ermittelt wurde, bspw. auch als Prognose. Weiterhin können solche Energieverbrauchswerte auch für die Distanzen vorliegen, die mit Aufträgen assoziiert sind und/oder es können euklidische Distanzen zwischen den Koordinaten von Aufträgen herangezogen werden, ggf. um einen Korrekturfaktor für das Umfahren von Hindernissen aufgerundet. Es erfolgt dann eine Prognose über die erwarteten Energieverbräuche (Schritt 815), bspw. durch Multiplikation der Anzahl an Aufträgen, der Distanz je Auftrag und dem Energieverbrauch je Distanz. In einem weiteren Schritt erfolgt die Ermittlung der Aufladedauer, des Aufladezeitpunkts und/oder des Aufladezeitraums für den Akkumulator 4 (Schritt 820). Dabei wird, bspw. basierend auf einem Prognosewert des Energieverbrauchs, ermittelt, wann ein Aufladen stattfinden muss. Es wird jedoch dabei bspw. auch berücksichtigt, wie sich Aufträge im Zeitverlauf verhalten, bspw. basierend auf ermittelten Erfahrungswerten. Dabei werden bspw. Auftragslücken berücksichtigt, d.h. Zeitfenster zwischen zwei Aufträgen, denen ein Ladevorgang zugeteilt wird, um den Akkumulator 4 aufzuladen und so die Auslastung des Betriebs des AFFs 5 zu erhöhen. Diese Zeitfenster definieren wiederum eine mögliche Ladedauer bzw. einen Start und/oder Endzeitpunkt bzw. einen Aufladezeitraum. In diesen beschriebenen Szenarien geben die Aufträge die Ladezeiträume vor. In einem Aspekt können die Ladezeiträume auch die Verfügbarkeit für Aufträge repräsentieren. Darüber kann das AFF5 bspw. auch direkt seine Bewegungen im Bewegungsplaner 115 anpassen (Schritt 855), bspw. nur noch kurze Aufträge umsetzen, die eine kurze zurückzulegende Distanz umfassen, um bspw. rechtzeitig den Akkumulator 4 aufladen zu können. Es findet bspw. eine Übertragung der Aufladedauer, des Aufladezeitpunkts und/oder des Aufladezeitraums an ein externes System statt (Schritt 835) wie bspw. ein Flottenmanagementsystem, welches dem betreffenden AFF 5 während des geplanten Aufladevorgangs keine Aufträge zuweist. Anstelle eines Flottenmanagementsystems können aber auch andere AFF 5 eine Information darüber erhalten, dass ein AFF 5 einen Ladevorgang plant oder durchführt und entsprechend ihre Routen im Rahmen einer Bewegungsplanung anpassen und/oder in dem Zeitraum keinen eigenen Ladevorgang planen (z.B. siehe Schritt 855). In einem Aspekt kann das AFF 5 einen Auftrag auch an ein externes System übertragen, wenn der Ladezustand des Akkumulators 4 unter einem Schwellwert fällt (Schritt 825), oder aber, wenn für den Zeitraum, in dem ein Auftrag geplant ist, ein Ladevorgang geplant ist (Schritt 830). Je nach Auftrag kann aber auch eine Umplanung einer ermittelten Aufladedauer, des Aufladezeitpunkts und/oder -zeitraums erfolgen (Schritt 840), bspw. nach Erhalt von Aufträgen durch ein externes System (Schritt 850). Im Ergebnis können sämtliche Übertragungen von Aufträgen oder Ladezeiträumen eine Anpassung der Bewegungsplanung nach sich ziehen (Schritt 855). Beim externen System kann es sich schließlich um ein autonomes Fahrzeug wie bspw. einen Serviceroboter, ein Flurförderzeug (AFF), einen Desinfektionsroboter oder einen Inventurroboter handeln bzw. auch einen externen Server (37, 38).

Das Energiemanagement wird hier durch folgende Aspekte AE1 bis AE11 charakterisiert:
AE1. Computer-implementiertes Verfahren zur Überwachung des Ladezustands eines Akkumulators (4), umfassend
   - Erfassung des aktuellen Ladezustands des Akkumulators (4);
   - Auswertung erhaltener Aufträge durch Vergleich der Aufträge mit im Speicher (2, 38) hinterlegten Energieverbräuchen;
   - Prognose des künftigen Energieverbrauchs auf Basis der erhaltenen Aufträge und
   - Ermittlung der Aufladedauer, des Aufladezeitpunkts und/oder des Aufladezeitraums für den Akkumulator (4).
AE2. Computer-implementiertes Verfahren nach AE1, weiter umfassend Übertragung der ermittelten Aufladedauer, des Aufladezeitpunkts und/oder des Aufladezeitraums an ein externes System (z.B. 5, 36).
AE3. Computer-implementiertes Verfahren nach AE1, weiter umfassend Erhalt von Aufträgen durch ein externes System (z.B. 5, 36).
AE4. Computer-implementiertes Verfahren nach AE1, weiter umfassend
   - Erhalt einer Aufladedauer, eines Aufladezeitpunkts und/oder eines Aufladezeitraums von einem externen System (z.B. 5, 36) und
   - Umplanung der ermittelten Aufladedauer, des Aufladezeitpunkts und/oder des Aufladezeitpunkts.
AE5. Computer-implementiertes Verfahren nach AE1, weiter umfassend die Integration von Aufladezeitpunkt, Aufladedauer und/oder Aufladezeitraum im Rahmen einer Bewegungsplanung.
AE6. Computer-implementiertes Verfahren nach AE1, weiter umfassend eine Übertragung eines erhaltenen Auftrags an ein externes System (z.B. 5, 36), wenn der Ladezustand des Akkumulators 4 unter einem Schwellwert liegt.
AE7. Computer-implementiertes Verfahren nach AE1, weiter umfassend eine Übertragung eines erhaltenen Auftrags an ein externes System (z.B. 5, 36), wenn für den geplanten Auftragszeitpunkt oder -zeitraum ein Ladevorgang geplant ist.
AE8. Computer-implementiertes Verfahren nach AE3, AE4, AE6 oder AE7, wobei es sich beim externen System (z.B. 5, 36) um einen Server (37) oder ein autonomes Fahrzeug handelt.
AE9. Computer-implementiertes Verfahren nach AE1, wobei es sich bei den hinterlegten Energieverbräuchen um Energieverbräuche zwischen zwei Wegpunkten handelt.
AE10. Vorrichtung nach AE8, wobei es sich beim autonomen Fahrzeug um einen Serviceroboter, ein Flurförderzeug (5), einen Desinfektionsroboter oder einen Inventurroboter handelt.
AE11. Vorrichtung zur Durchführung des Verfahrens nach AE1-AE11.
AE12. Vorrichtung nach AE10, wobei es sich bei der Vorrichtung um einen Serviceroboter, Flurförderzeug (5), Desinfektionsroboter oder Inventurroboter handelt.

### Beispiel 9: Autonomes Flurförderzeug mit Sensoren

Das Autonome Flurförderzeug mit Sensoren wird hier durch folgende Aspekte ASNTR1 bis ASNTR16 charakterisiert:
ASNTR1. Autonomes Flurförderzeug (5) mit einer höhenverstellbaren Ladefläche (12), mindestens einem Sensor zum Abtasten des Umfelds in primärer Fahrrichtung, wobei das autonome Flurförderzeug mindestens eine rückwärtsgerichtete Sensoreinheit (17) aufweist.
ASNTR 2. Autonomes Flurförderzeug (5) nach ASNTR1, wobei die rückwärtsgerichtete Sensoreinheit (17) mindestens eine Sensoreinheit-Kamera (20) enthält.
ASNTR3. Autonomes Flurförderzeug (5) nach ASNTR1, umfassend mindestens eine Leuchte (z.B. 19) zur Ausleuchtung des Sichtfelds der Sensoreinheit-Kamera (20).
ASNTR4. Autonomes Flurförderzeug (5) nach ASNTR1, wobei die rückwärtsgerichtete Sensoreinheit (17) über einen ortsauflösenden Entfernungssensor verfügt.
ASNTR5. Autonomes Flurförderzeug (5) nach ASNTR4, wobei der ortsauflösende Sensor ein LIDAR (18) ist.
ASNTR6. Autonomes Flurförderzeug (5) nach ASNTR1, wobei die rückwärtsgerichtete Sensoreinheit (17) sich unterhalb der Ladefläche (12) befindet.
ASNTR7. Autonomes Flurförderzeug (5) nach ASNTR1, weiter umfassend einen Ladeflächen-Ladungssensor (21) zur Positionsermittlung einer Ladung (143) auf und/oder oberhalb der Ladefläche (12).
ASNTR8. Autonomes Flurförderzeug (5) nach ASNTR7wobei der Ladeflächen-Ladungssensor (21) zur Positionsermittlung einer Ladung (143) auf und/oder oberhalb der Ladefläche (12) eine kontaktlose Ermittlung der Ladungsposition vornimmt.
ASNTR9. Autonomes Flurförderzeug (5) nach ASNTR7, wobei der Ladeflächen-Ladungssensor (21) zur Positionsermittlung einer Ladung (143) auf und/oder oberhalb der Ladefläche (12) eine kontaktgebundene Ermittlung der Ladungsposition vornimmt.
ASNTR10. Autonomes Flurförderzeug (5) nach ASNTR7, wobei der Ladefläche-Ladungssensor (21) zur Positionsermittlung einer Ladung (143) auf und/oder oberhalb der Ladefläche über mindestens einen in die Ladefläche eingelassenen Sensor (z.B. 44) und/oder einen parallel zur Ladefläche erfassenden Sensor (z.B. 22) verfügt.
ASNTR11. Autonomes Flurförderzeug (5) nach ASNTR7, wobei der Ladefläche-Ladungssensor (21) zur Positionsermittlung einer Ladung (143) auf und/oder oberhalb der Ladefläche (12) Infrarotsensoren vorweist.
ASNTR12. Autonomes Flurförderzeug (5) nach ASNTR7, wobei der Ladefläche-Ladungssensor (21) zur Positionsermittlung einer Ladung (143) auf und/oder oberhalb der Ladefläche (12) über Dehnungsmessstreifen erfolgt.
ASNTR13. Autonomes Flurförderzeug (5) nach ASNTR7, wobei der Ladefläche-Ladungsensor (21) zur Positionsermittlung einer Ladung (143) auf und/oder oberhalb der Ladefläche (12) einen Laser-Abstandsmesser (22) aufweist.
ASNTR14. Autonomes Flurförderzeug (5) nach ASNTR13, wobei der Laser-Abstandsmesser (22) einen ausgedehnten Messfleck aufweist.
ASNTR15. Autonomes Flurförderzeug nach ASNTR13, wobei sich die Totzone des Laser-Abstandsmessers (22) sich innerhalb des Aufbaus (13) des autonomen Flurförderzeugs (5) befindet.
ASNTR16. Autonomes Flurförderzeug nach ASNTR9, wobei der Ladefläche-Ladungssensor (21) zur Positionsermittlung einer Ladung (143) auf und/oder oberhalb der Ladefläche (12) über mindestens einen Kontaktsensor (23) verfügt.

### Beispiel 10: Navigation zum Transport von Ladungen

Ein Verfahren zur Navigation zum Transport von Ladungen 143 wird hier durch folgende Aspekte ANTL1 bis ANTL16 charakterisiert:
ANTL1. Computer-implementiertes Verfahren zur Steuerung eines autonomen Flurförderzeug (5), umfassend
   - Erfassung des Umfelds des autonomen Flurförderzeugs (5) und
   - Erfassung und Auswertung von Mustern;
   - wobei die Muster eine Erkennung von Markierung (202) und/oder Schiene (201) und/oder Identifikationsvorrichtungen (z.B. 203) beinhalten.
ANTL2. Computer-implementiertes Verfahren nach ANTL1, wobei die Markierung (202), Schiene (201) und/oder Identifikationsvorrichtungen (z.B. 203) sich parallel zu abgestellten Rollwagen (200) befinden.
ANTL3. Computer-implementiertes Verfahren nach ANTL1, weiter umfassend Auslesen einer erkannten Identifikationsvorrichtung (z.B. 203) und Vergleich des Auslesewerts mit einem im Speicher (2, 38) hinterlegten Wert.
ANTL4. Computer-implementiertes Verfahren nach ANTL2, wobei es sich bei der Identifikationsvorrichtung um eine Rollwagen-Reihe-Identifizierungsvorrichtung (203) einer Rollwagenreihe handelt.
ANTL5. Computer-implementiertes Verfahren nach ANTL3, weiter umfassend
   - Auslesen einer Identifikationsvorrichtung (z.B. 203);
   - Positionsermittlung des autonomen Flurförderzeugs (5) und
   - anschließende Neupositionierung des autonomen Flurförderzeugs (5).
ANTL6. Computer-implementiertes Verfahren nach ANTL1, umfassend
   - Auslesen der im Speicher (2, 38) abgelegten Länge eines Rollwagens (200);
   - Rückwärtsbewegung des autonomen Flurförderzeugs (5);
   - Ermittlung des Abstands des autonomen Flurförderzeugs (5) zu Hindernissen oder Rollwagen (200);
   - Unterfahren einer Ladung (143) und
   - Anheben der Ladefläche (12).
ANTL7. Computer-implementiertes Verfahren nach ANTL7, weiter umfassend
   - Ermittlung der Position der Ladung (143) oder der potentiellen Ladung (143) auf der Ladefläche (12),
   wobei das autonome Flurförderzeug (5) nur bis zu einem Schwellwert unter die Ladung (143) fährt.
ANTL8. Computer-implementiertes Verfahren nach ANTL1, umfassend
   - Ermittlung des Abstands zum Endpunkt einer Markierung (202), Schiene (201) Identifikationsvorrichtung (z.B. 203);
   - Absetzen einer Ladung (143);
   wobei sich die Markierung (202), Schiene (201) und/oder Identifikationsvorrichtung (z.B. 203) im Wesentlichen parallel zu dem abzusetzenden Rollwagen (200) befindet.
ANTL9. Computer-implementiertes Verfahren nach ANTL1, umfassend
   - Ermittlung des Abstands zu einem Hindernis oder Rollwagen (200) und
   - Absetzen einer Ladung (143).
ANTL10. Computer-implementiertes Verfahren nach ANTL8-9, wobei die Absetzposition innerhalb eines Schwellwerts von einem ermittelten Hindernis oder einem Rollwagen (200) in Fahrtrichtung erfolgt.
ANTL11. Computer-implementiertes Verfahren nach ANTL8-9, wobei vor dem Absetzen einer Ladung (143) wie folgt eine Ausrichtung des autonomen Flurförderzeugs (5) erfolgt:
   - Ausrichtung parallel zum mindestens einen abgestellten Rollwagen (200) oder einer Markierung (202), Schiene (201) und/oder Identifikationsvorrichtung (z.B. 203);
   - wobei der Abstand ein Seitlicher ist und mindestens 5 mm beträgt, in einem Aspekt mindestens 10mm.
ANTL12. Computer-implementiertes Verfahren nach ANTL8-10, wobei die Abstände zu mindestens einen abgestellten Rollwagen (200) mittels eines LIDARs (18), Kamera (30) oder Radar (32) ermittelt werden.
ANTL13. Computer-implementiertes Verfahren nach ANTL8-11, wobei das Absetzen der Ladung (143) am Endpunkt der Markierung (202), Schiene (201), Identifikationsvorrichtung (z.B. 203) oder im Abstand zu einem Hindernis oder Rollwagen (200) erfolgt.
ANTL14. Vorrichtung zur Durchführung des Verfahrens nach ANTL1-ANTL13.

### Beispiel 11: Warteposition 1

Die Ermittlung eines Warteposition wird hier durch folgende Aspekte AWA1-AWA22 charakterisiert:
AWA1. Computer-implementiertes Verfahren zur Ermittlung von Wahrscheinlichkeiten für Ort und Zeit von Aufträgen, umfassend
   - Aufzeichnung von Daten zu Ort und Zeit von absolvierten Aufträgen;
   - Abspeichern der erfassten Daten orts- und zeitaufgelöst;
   - Ermittlung von Wahrscheinlichkeiten auf Basis der erfassten Daten, für welche Zeit an welchem Ort ein Auftrag zu erwarten ist.
AWA2. Computer-implementiertes Verfahren nach AWA1, wobei es sich beim Auftrag um einen Transportauftrag, einen Inventurauftrag, einen Interaktionsauftrag oder einen Reinigungs- bzw. Desinfektionsauftrag handelt.
AWA3. Computer-implementiertes Verfahren nach AWA1, wobei Orte, für die die Wahrscheinlichkeit über einem Schwellwert liegt, Wartepositionen darstellen.
AWA4. Computer-implementiertes Verfahren nach AWA1, wobei Orte, für die die Wahrscheinlichkeit über einem Schwellwert liegt, in einem Navigationsmodul (110) hinterlegt werden.
AWA5. Computer-implementiertes Verfahren nach AWA1, wobei die zeitliche Auflösung saisonal erfolgt.
AWA6. Computer-implementiertes Verfahren nach AWA1, weiter umfassend Zur-Verfügung-Stellung der erfassten Daten und/oder der ermittelten Wahrscheinlichkeiten über eine Schnittstelle zu anderen Systemen (z.B. 5, 36).
AWA7. Computer-implementiertes Verfahren nach AWA1, wobei die erfassten Daten und/oder ermittelte Wahrscheinlichkeiten über eine Schnittstelle von anderen Systemen (z.B. 5, 36) zur Verfügung gestellt werden.
AWA8. Computer-implementiertes Verfahren nach AWA1, weiter umfassend die Ergänzung aufgezeichneter Daten um die zur Verfügung gestellten Daten und eine Ermittlung der Wahrscheinlichkeiten.
AWA9. Computer-implementiertes Verfahren nach AWA3, weiter umfassend Übertragung der Wartepositionsdaten im Falle, dass kein Auftrag durchgeführt wird, an mindestens ein System (z.B. 5, 36).
AWA10. Computer-implementiertes Verfahren nach AWA2-AWA3, weiter umfassend Veränderung der Schwellwerte, wenn sich an einer Position mit einer hohen Auftragswahrscheinlichkeit ein Objekt befindet.
AWA11. Computer-implementiertes Verfahren nach AWA1, wobei eine Erfassung von beweglichen Objekten orts- und zeitaufgelöst erfolgt und die erfassten Daten abgespeichert werden.
AWA12. Computer-implementiertes Verfahren nach AWA11, weiter umfassend die Ermittlung von Wahrscheinlichkeiten auf Basis der erfassten Daten, für welche Zeit an welchem Ort ein bewegliches Objekt zu erwarten ist.
AWA13. Computer-implementiertes Verfahren nach AWA12, weiter umfassend die Erstellung von mindestens einer orts- und/oder zeitaufgelöste Karte beweglicher Objekte auf Basis der erfassten Daten.
AWA14. Computer-implementiertes Verfahren nach AWA3 und AWA13, wobei eine Warteposition solche Bereiche umfasst, in denen die Dichte beweglicher Objekte unter einem Schwellwert liegt.
AWA15. Computer-implementiertes Verfahren nach AWA3 oder AWA14, weiter umfassend eine Positionierung eines autonomen Fahrzeugs auf einer Warteposition.
AWA16. Computer-implementiertes Verfahren nach AWA15, weiter umfassend Positionierung eines autonomen Fahrzeugs auf einer Warteposition nach AWA15, sofern das autonome Fahrzeug keinen Auftrag durchführt.
AWA17. System zur Durchführung des Verfahrens nach AWA1-AWA16.
AWA18. System nach AWA17, wobei es sich um ein autonomes Fahrzeug handelt.
AWA19. System nach AWA18, wobei es sich beim autonomen Fahrzeug um ein autonomes Flurförderzeug, einen Serviceroboter, einen Inventurroboter oder einen Desinfektionsroboter handelt.
AWA20. System nach AWA18, wobei es sich um ein autonomes Fahrzeug handelt, welches sich in Phasen ohne Auftrag in den Arealen aufhält, in denen die Wahrscheinlichkeit für einen Auftrag über einem Schwellwert liegt.
AWA21. System nach AWA18, wobei andere Systeme ohne Auftrag eine andere Position einnehmen als das autonome Fahrzeug, welches keinen Auftrag durchführt.
AWA22. System nach AWA17, wobei es sich um ein selbstlernendes System handelt.

### Beispiel 12: Warteposition 2

Die Ermittlung eines Warteposition wird hier durch folgende Aspekte AWB1-AWB6 charakterisiert:
AWB1. Selbstlernendes System zur Ermittlung von Auftretenswahrscheinlichkeiten für Ort und Zeit von beweglichen Objekten, umfassend ein Wartepositionsmodul (116) zur Auswertung von erfassten Positionsdaten beweglicher Objekte im Zeitverlauf und zur Ermittlung der Auftretenswahrscheinlichkeiten für bewegliche Objekte innerhalb definierter Zeitintervalle.
AWB2. Selbstlernendes System nach AWB1, wobei das Wartepositionsmodul (116) abgespeicherte und zurückgelegte Pfade, die durch eine Pfadplanungsmodul (112) ermittelt und/oder durch ein Odometrie-Modul (121) aufgezeichnet wurden, auswertet.
AWB3. Selbstlernendes System nach AWB1, wobei in einem Kartierungsmodul (117) auf Basis der Auswertung des Wartepositionsmoduls eine Karte mit Wartepositionen erstellt.
AWB4. Selbstlernendes System nach AWB3, wobei ein Bewegungsplaner (115) und/oder ein Pfadplanungsmodul (112) auf Basis von Daten des Kartierungsmodul (117) eine Pfadplanung und/oder Bewegungsplanung für ein System (z.B. 5) vornehmen.
AWB5. Selbstlernendes System nach AWB1, wobei die erfassten Positionsdaten mittels einer Kamera (31), eines Radarsensors (32), eines Ultraschallsensors oder eines LIDARs (15, 16) erfasst wurden.
AWB6. System nach AWB1 oder AWB4, wobei es sich beim System um ein autonomes Flurförderzeug (5), einen Desinfektionsroboter, einen Reinigungsroboter, einen Serviceroboter oder einen Inventurroboter handelt.
AWB7. System nach AWB2, wobei die Pfade beim Absolvieren eines Auftrags ermittelt wurden.
AWB8. System nach AWB7, wobei es sich beim Auftrag um einen Transportauftrag, einen Inventurauftrag, einen Reinigungsauftrag oder einen Desinfektionsauftrag handelt.
AWB9. System nach AWB3, wobei eine Warteposition sich durch eine hohe Wahrscheinlichkeit für saison- oder schichtbedingte Aufträge und eine geringe Wahrscheinlichkeit zum Zusammentreffen mit beweglichen Objekten auszeichnet.

### Beispiel 13: Schutzmechanismen

Schutzmechanismen werden hier durch folgende Aspekte AS1-AS52 charakterisiert:
AS1. Steuerung (126) für ein autonomes Fahrzeug (z.B. 5), mit mindestens einem über eine Schnittstelle verbundenen Drehwinkelsensor (129), mit mindestens einem Steuerungsspeicher (127), wobei die Steuerung (126) die Beschleunigung und/oder Geschwindigkeit des autonomen Fahrzeugs (z.B. 1, 5) direkt oder indirekt überwacht und eine Geschwindigkeitsreduktion erzwingen kann.
AS2. Steuerung nach AS1, wobei die Steuerung (126) im Steuerungsspeicher (127) ein hinterlegtes Zeitintervall und eine Zielgeschwindigkeit aufweist, wobei die Steuerung (126) die Beschleunigungszeit des Motors (6) überwacht und das Abbrechen einer Motorbewegung erzwingt, wenn die Zielgeschwindigkeit nicht innerhalb des im Steuerungsspeicher (127) hinterlegten Zeitintervalls erreicht wurde.
AS3. Steuerung nach AS1, wobei die Überwachung die Erfassung und Auswertung der Ströme und/oder des Drehmoments des Motors (6) umfasst.
AS4. Steuerung nach AS2, weiter umfassend eine Zähleinheit (128) zur Ermittlung der Zeitdauer der Beschleunigung.
AS5. Steuerung nach AS2, wobei das Zeitintervall geschwindigkeitsabhängig ist.
AS6. Steuerung nach AS2, wobei das Zeitintervall masseabhängig ist.
AS7. Steuerung nach AS2, wobei das Zeitintervall abhängig von den Puffereigenschaften einer Stoßstange oder Sicherheitsschaltleiste (28) ist.
AS8. Steuerung nach AS1, wobei das autonome Fahrzeug (z.B. 1) ein autonomes Flurförderzeug (5), ein Serviceroboter, ein Desinfektionsroboter oder ein Reinigungsroboter ist.
AS9. Steuerung nach AS1, wobei die Geschwindigkeitsreduktion unabhängig von Anweisungen erfolgt, welche Applikationen des autonomen Fahrzeugs (z.B. 5) an die Steuerung (126) übermitteln.
AS10. Steuerung nach AS1, wobei im Speicher (2, 127, 135) eine definierte Geschwindigkeit hinterlegt ist.
AS11. Steuerung nach AS10, wobei die definierte Geschwindigkeit vom Gewicht und/oder der Geometrie des autonomen Fahrzeugs (z.B. 1, 5) abhängen.
AS12. Steuerung nach AS1, wobei im Speicher (2, 135) Distanzschwellwerte im mindestens zweidimensionalen Raum hinterlegt sind.
AS13. Steuerung nach AS12, wobei sich die Distanzschwellwerte aus der Maximalgeschwindigkeit des autonomen Fahrzeugs (z.B. 1, 5) und der definierten Geschwindigkeit ergeben.
AS14. Steuerung nach AS12, wobei die Distanzschwellwerte ineinander geschachtelt sein können.
AS15. Steuerung nach AS12, wobei die Distanzschwellwerte mit von Sensoren (z.B. 15, 16, 31, 32) gemessenen Distanzen verglichen werden.
AS16. Steuerung nach AS15, wobei die Sensoren (z.B. 15, 16, 31, 32) Hindernisse erkennen und die Distanzen sich aus dem Abstand der Hindernisse zum Sensor (z.B. 15, 16, 31, 32) ergeben.
AS17. Steuerung nach AS1, wobei die Steuerung (126), wenn sich das autonome Fahrzeug (z.B. 5) auf abschüssigem Gelände befindet, eine Drehzahl von Null gehalten wird, um ein Wegrollen des autonomen Fahrzeugs (z. B. 1, 5) zu verhindern.
AS18. Steuerung nach AS1, wobei die Übertragung der Sensordaten mindestens zweikanalig erfolgt.
AS19. Steuerung nach AS1, wobei die Übertragung der Sensordaten digital und analog erfolgt.
AS20. Steuerung nach AS1, wobei die Geschwindigkeitsüberwachung auf Basis zweier unterschiedlicher, physikalischer Messprinzipien erfolgt.
AS21. Steuerung nach AS1, wobei die Geschwindigkeitsüberwachung durch Messung des Drehwinkels des Motors (6), eines Getriebebestandteils (7) und/oder eines Antriebsrades (10) erfolgt.
AS22. Steuerung nach AS1, wobei der Drehwinkelsensor (129) ein Hall-Sensor und/oder ein Encoder bzw. Inkrementalgeber ist.
AS23. Steuerung nach AS1, wobei die Geschwindigkeitsmessung durch optische Sensoren (z.B. 15, 16, 31), Ultraschall und/oder Radar (32) erfolgt.
AS24. Steuerung nach AS1, wobei die Geschwindigkeitsüberwachung durch Ermittlung der Positionsänderung des autonomen Fahrzeugs (z.B. 1, 5) relativ zu fixen Hindernissen oder Landmarken in seinem Umfeld ermittelt wird.
AS25. Steuerung nach AS24, wobei die fixen Hindernisse und/oder Landmarken in einer sich im Speicher (2) des autonomen Fahrzeugs (z.B. 1, 5) befindlichen Karte niedergelegt sind.
AS26. Steuerung nach AS1, wobei die Geschwindigkeitsüberwachung durch einen optischen Sensor (32) erfolgt, der auf eine Oberfläche gerichtet ist und auf Basis gemessener Änderungen der Oberflächenstruktur relativ zum autonomen Fahrzeug (z.B. 5) die Geschwindigkeit bestimmt.
AS27. Steuerung nach AS26, wobei hierfür eine definiertes Sichtfenster genutzt wird.
AS28. Steuerung nach AS1, wobei ein Prozessor (130) die auf mindestens zwei Kanälen und/oder durch mindestens zwei unterschiedliche physikalische Messprinzipien erhaltene Sensordaten miteinander vergleicht.
AS29. Steuerung nach AS28, wobei Abweichungen zwischen den über mindestens beide Kanäle erhaltene Daten und/oder den durch die mindestens zwei unterschiedliche physikalische Messprinzipien erhaltene Sensordaten, sofern diese jeweils über einem definierten Schwellwert liegen, eine Geschwindigkeitsreduktion des autonomen Fahrzeugs (z.B. 5) auslösen.
AS30. Steuerung nach AS1, wobei die Steuerung (126) über einen Watchdog (131) überwacht wird, welcher eine Geschwindigkeitsreduktion des autonomen Fahrzeugs (z.B. 5) auslöst, wenn die Steuerung (126) nicht mehr mit Strom versorgt wird.
AS31. Steuerung nach AS30, wobei eine elektronische Schaltung (132) über mindestens ein aktiv gesteuertes Halbleiterbauelement den Motor (6) kurzschließt.AS32. Steuerung nach AS31, wobei ein Relais (133) den Motor (6) kurzschließt.
AS33. Steuerung nach AS31 und AS32, wobei das Relais (133) und elektronische Schaltung (132) parallel geschaltet sind.
AS34. Steuerung nach AS30, wobei eine elektronisch gesteuerte, mechanische Bremse (134), die bei Spannungsabfall ausgelöst wird (Totmannschalterprinzip) und das autonome Fahrzeug (z.B. 1, 5) bremst.
AS35. Verfahren zur Geschwindigkeitsüberwachung eines autonomen Fahrzeugs (z.B. 1, 5), umfassend
   - Erfassung der Geschwindigkeit und/oder Beschleunigung des autonomen Fahrzeugs (z.B. 1, 5);
   - Vergleich der erfassten Geschwindigkeit und/oder Beschleunigung mit hinterlegten Geschwindigkeiten und/oder Beschleunigungen;
   - Reduktion der Geschwindigkeit und/oder Beschleunigung in Abhängigkeit vom Geschwindigkeits- und/oder Beschleunigungsvergleich.
AS36. Verfahren zur Geschwindigkeitsüberwachung eines autonomen Fahrzeugs (z.B. 1, 5), umfassend
   - Erfassung der Geschwindigkeit und/oder Beschleunigung des autonomen Fahrzeugs (z.B. 1, 5) auf mindestens zwei Wegen;
   - Vergleich der auf mindestens zwei Wegen erfassten Geschwindigkeiten und/oder Beschleunigungen;
   - Reduktion der Geschwindigkeit und/oder Beschleunigung in Abhängigkeit vom Geschwindigkeits- und/oder Beschleunigungsvergleich.
AS37. Verfahren nach AS35-36, wobei die Geschwindigkeit und/oder Beschleunigung des autonomen Fahrzeugs (z.B. 1, 5) direkt oder indirekt überwacht wird.
AS38. Verfahren nach AS35-36, wobei die Übertragung der Erfassungssignale der Geschwindigkeit und/oder Beschleunigung des autonomen Fahrzeugs (z.B. 1, 5) zweikanalig erfolgt.
AS39. Verfahren nach AS35-36, wobei die Übertragung der Erfassungssignale der Geschwindigkeit und/oder Beschleunigung des autonomen Fahrzeugs (z.B. 1, 5) analog und digital erfolgt.
AS40. Verfahren nach AS35-36, wobei die Erfassung der Geschwindigkeit und/oder Beschleunigung des autonomen Fahrzeugs (z.B. 1, 5) durch zwei unterschiedliche, physikalische Messprinzipien erfolgt.
AS41. Verfahren nach AS35-36, wobei die Geschwindigkeits- und/oder Beschleunigungsüberwachung eine Erfassung von Motorströmen beinhaltet.
AS42. Verfahren nach AS35-36, wobei die Geschwindigkeits- und/oder Beschleunigungsüberwachung eine Erfassung von Drehmomenten eines Motors (6) beinhaltet.
AS43. Verfahren nach AS35-36, wobei die hinterlegten Geschwindigkeiten und/oder Beschleunigungen masseabhängig sind.
AS44. Verfahren nach AS35-36, wobei die Reduktion der Geschwindigkeit und/oder Beschleunigung unabhängig von Instruktionen erfolgt, die Applikationen des autonomen Fahrzeugs vorgeben.
AS45. Verfahren nach AS35-36, weiter umfassend das Regeln der Geschwindigkeit auf Null, wenn sich das autonome Fahrzeug (z.B. 1, 5) auf abschüssigem Gelände befindet.
AS46. Verfahren nach AS35-36, wobei die Erfassung der Geschwindigkeit und/oder Beschleunigung durch Messung des Drehwinkels eines Motors (6), eines Getriebebestandteils (7) oder eines Antriebsrads (10) erfolgt.
AS47. Verfahren nach AS46, wobei die Messung des Drehwinkels durch einen Hall-Sensor und/oder einen Encoder bzw. Inkrementalgeber erfolgt.
AS48. Verfahren nach AS35-36, wobei die Geschwindigkeitsmessung durch Erfassung der Position des autonomen Fahrzeugs (z.B. 1, 5) relativ zu seiner Umgebung und Auswertung der für die Positionsänderung notwendigen Zeit erfolgt.
AS49. Verfahren nach AS37-40, wobei der Vergleich der Geschwindigkeit und/oder Beschleunigung ein Vergleich der auf zwei Wegen erfassten Geschwindigkeiten und/oder Beschleunigungen darstellt.
AS50. Verfahren nach AS35 oder AS36, weiter umfassend eine Überwachung der Stromversorgung einer Steuerung (126) und eine Reduktion der Geschwindigkeit, wenn die Steuerung nicht mehr mit Energie versorgt wird.
AS51. Verfahren nach AS50, wobei die Geschwindigkeitsreduktion durch das Auslösen einer elektronisch gehaltenen mechanischen Bremse (134) (Totmannschalterprinzip) erfolgt.
AS52. Verfahren nach AS50, wobei die Geschwindigkeitsreduktion durch das Schalten eines Relais (133) erfolgt, dass die Stromversorgung eines Motors (6) unterbricht.
AS53. Vorrichtung zur Durchführung des Verfahren nach AS35-AS52.

### Beispiel 14: Auswertung einer Ladung

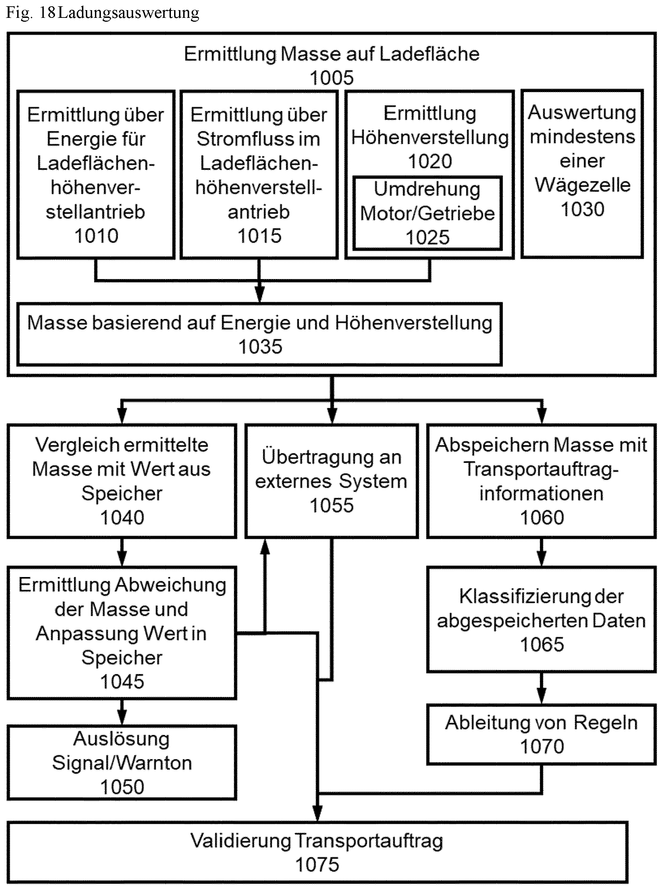

Der Ablauf zur Auswertung einer Ladung ist in Fig. 18 illustriert. Im Schritt 1005 erfolgt die Ermittlung der Masse auf der Ladefläche 12 auf einem von mehreren Wegen: In Schritt 1010 wird die die Energie für den Ladeflächen-Höhenverstellantrieb 14 ermittelt und/oder der Stromfluss im Ladeflächen-Höhenverstellantrieb 14. In Schritt 1020 dagegen wird die durch den Ladeflächen-Höhenverstellantrieb 14 vorgenommene Höhenverstellung der Ladefläche 12 ausgewertet, bspw. durch Ermittlung der Umdrehung des Motors oder eines Getriebes des Ladeflächen-Höhenverstellantriebs (Schritt 1025). Basierend auf diesen Parametern lässt sich über Masse = Energie/(g*Höhe) die Masse ermitteln im Schritt 1035. Alternativ und/oder ergänzend kann mindestens ein Ladeflächen-Ladungssensor 21 ausgewertet werden, der als Wägezelle konzipiert ist, bspw. konkret als Dehnungsmessstreifen (Schritt 1030).

Es erfolgt anschließend ein Vergleich der ermittelten Masse mit einem Wert aus einem Speicher (2, 38, 127) (Schritt 1040), bspw. in Form eines Schwellwertvergleichs. Wird eine Abweichung der ermittelten Masse vom Wert aus dem Speicher (2, 38) ermittelt, wird bspw. ein Wert im Speicher (2, 38) angepasst. Dieser Wert kann bspw. an ein externes System 36 übertragen werden (Schritt 1055), es kann ein Signal- bzw. Warnton ausgelöst werden (Schritt 1050) und/oder eine Validierung des Transportauftrags (Schritt 1075). In einem Aspekt kann die ermittelte Masse zusammen mit Transportauftraginformationen abgespeichert werden 1060, gefolgt von einer Klassifizierung der abgespeicherten Daten 1065 und einer Ableitung von Regeln 1070, gefolgt von der Validierung des Transportauftrags 1075. Unter Transportauftraginformationen wird bspw. die Start- und Zielposition einer Ladung 143, ein Zeitplan für den Transport, etc. verstanden. Die Klassifizierung der abgespeicherten Daten im Schritt 1064 kann bspw. das Ableiten von Mustern implizieren, in einem Aspekt derart, dass bspw. bestimmte Massen mit bestimmten Routen oder saisonalen Aspekten wie Schichten assoziiert sind, woraus sich Regeln im Schritt 1070 ableiten lassen, dass bspw. Masseabweichungen auf Fehler im Produktionsablauf hindeuten können, die wiederum zu einem Alarm führen (Schritt 1050), was im Rahmen der Validierung in Schritt 1075 ermittelt wird. Die Validierung des Transportauftrags kann in einem Aspekt einen Abbruch des Auftrags implizieren, bspw. wenn die ermittelte Masse nicht mit einer hinterlegten Masse übereinstimmt und somit das AFF 5 bspw. eine falsche Ladung 143 aufgenommen hat.

Masseermittlung und Validierung werden hier durch folgende Aspekte AMV1-AMV15 charakterisiert:
AMV1. Computer-implementiertes Verfahren zur Auswertung einer Ladung (143) eines autonomen Flurförderzeugs (5),
   - Ermittlung der Masse einer Ladung (143) auf der Ladefläche (12) des autonomen Flurförderzeugs (5);
   - Vergleich der ermittelten Masse auf der Ladefläche (12) mit einer in einem Speicher (2, 38, 127) hinterlegten Masse.
AMV2. Computer-implementiertes Verfahren nach AMV1, wobei die Masse über die vom Ladeflächen-Höhenverstellantrieb (14) benötigte Energie und/oder den Stromfluss im Ladeflächen-Höhenverstellantrieb (14) ermittelt wird sowie die Ermittlung der Höhenverstellung der Ladefläche (12).
AMV3. Computer-implementiertes Verfahren nach AMV2, wobei die Höhenverstellung der Ladefläche (12) durch Auswertung der Umdrehungen des Motors (6) und/oder eines Getriebes (7) bzw. Getriebebestandteils erfolgt.
AMV4. Computer-implementiertes Verfahren nach AMV1, wobei die die Masse über mindestens einen Ladeflächen-Ladungssensor (21) ermittelt wird, der als Wägezelle ausgelegt ist.
AMV5. Computer-implementiertes Verfahren nach AMV1, weiter umfassend Abspeichern der ermittelten Masse zusammen mit Informationen des zugehörigen Transportauftrags.
AMV6. Computer-implementiertes Verfahren nach AMV1, weiter umfassend Übertragung der ermittelten Masse an ein über eine Schnittstelle (122, 123) verbundenes, externes System (36).
AMV7. Computer-implementiertes Verfahren nach AMV1, weiter umfassend Ermittlung einer Abweichung der ermittelten Masse von einem Schwellwert und Anpassung eines Werts in einem Speicher (2, 38).
AMV8. Computer-implementiertes Verfahren nach AMV7, weiter umfassend bei
   - Auslösung eines Lichtsignals und/oder eines Warntons und/oder
   - Übermittlung von Informationen an ein externes System (36) über eine Schnittstelle (122, 123)
   wenn jeweils eine Abweichung der ermittelten Masse von einem Schwellwert detektiert wurde.
AMV9. Computer-implementiertes Verfahren nach AMV1, weiter umfassend Abspeichern der ermittelten Masse und Informationen eines Transportauftrags in einem Speicher (2, 38).
AMV10. Computer-implementiertes Verfahren nach AMV9, wobei die Informationen des Transportauftrags die Start- und/oder Zielposition einer Ladung (143), Dimensionen der Ladung (143), und/oder zeitliche Parameter umfassen.
AMV11. Computer-implementiertes Verfahren nach AMV9, weiter umfassend eine Klassifizierung der abgespeicherten Daten.
AMV12. Computer-implementiertes Verfahren nach AMV11, weiter umfassend Ableitung von Regeln auf Basis der Klassifizierung.
AMV13. Computer-implementiertes Verfahren nach AMV11, weiter umfassend Hinterlegung von Werten in einem Speicher (2, 38), mit denen die gemessenen Massen verglichen werden
AMV14. Computer-implementiertes Verfahren nach AMV1, weiter umfassend eine Validierung des Transportauftrags auf Basis der ermittelten Masse.
AMV15. Computer-implementiertes Verfahren nach AMV14, wobei eine Validierung eine direkte oder indirekte Überprüfung von in einem Produktionsplanungssystem hinterlegten Produktionsmengen mit der Masse der transportieren Ladung (143) darstellt.
AMV16. Vorrichtung zur Durchführung des Verfahrens nach AMV1-AMV15.

### Beispiel 15: Position und/oder Überstehen der Ladung

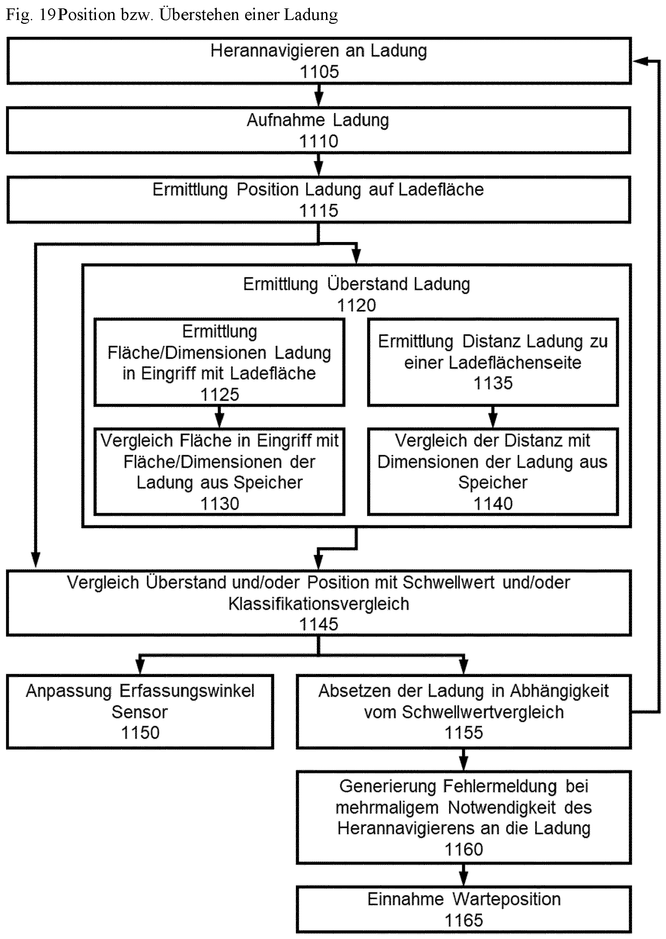

In einem Aspekt ist die Auswertung der Position der Ladung 143 und/oder des Überstehens einer Ladung 143 in Fig. 19 illustriert. Dabei sei vorausgeschickt, dass das Überstehen nicht notwendigerweise direkt ermittelt werden muss, es reicht bspw. die Position der Ladung 143 aus, ggf. in Kombination mit einer Klassifikation, dass bestimmte Positionen ein Überstehen nach sich ziehen und/oder eine Intervention verlangen.

Das autonome Flurförderzeug 5 navigiert an eine Ladung heran 1105. Es nimmt die Ladung 143 auf 1110, ermittelt die Position der Ladung 143 auf der Ladefläche 1115, in einem Aspekt ein Überstehen der Ladung 143 über die Ladefläche hinaus 1120, bspw. in Aufnahmerichtung der Ladung 143, was in einem Aspekt die Rückseite des autonomen Flurförderzeugs 5 sein kann.

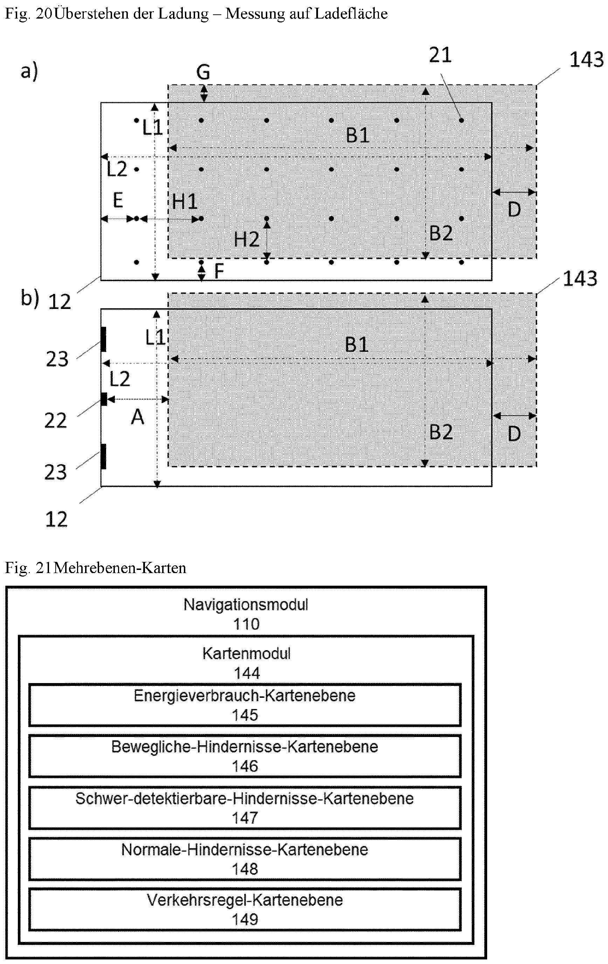

Die Positionsermittlung der Ladung 143 und/oder die Ermittlung des Überstehens der Ladung 143 (Schritt 1120) erfolgt, wie in Fig. 20 a) illustriert, in einem Aspekt mittels mindestens eines Ladeflächen-Ladungssensors 21, bevorzugt durch mehrere derartige Sensoren, und zwar derart, dass der Bereich der Ladefläche 12, der mit der Ladung 143 in Eingriff steht, ermittelt wird (Schritt 1125), sowie darauf folgend einen Vergleich der in Eingriff stehenden Fläche mit einer in einem Speicher (2, 38) abgelegten Fläche, die die Fläche und/oder Dimensionen der Last widergibt (Schritt 1130). Alternativ und/oder ergänzend kann im Speicher (2, 38) eine Klassifikation abgelegt sein, die im Schritt 1145 auf Basis der ermittelten Position (bspw. kaum belegte integrierte Ladeflächensensoren 44 in Fig. 20 a) direkt vorgibt, ob die nachfolgenden Schritte 1150ff. durchzuführen sind. Auf Basis des Vergleichs wird dann ermittelt, welcher Anteil der Fläche übersteht, wodurch bspw. ein Überstehen in drei Richtungen der Ladefläche 12 ermittelt werden kann. Aus den Dimensionen der Ladung 143 ergibt sich dann wieder der Überstand. Das heißt bspw., dass in Fig. 20 a) durch die Ladeflächen-Ladungssensor 21, die keine Ladung detektieren (die links sowie am unteren Rand) ermittelt wird, welcher Bereich der Ladefläche 12 frei ist. Da bekannt ist, was der Abstand dieser Ladeflächen-Ladungssensoren 21 zum Rand der Ladefläche 12 ist (siehe bspw. Distanzen F, G) sowie die Dimensionen der Ladung 143 bekannt sind (B1, B2) wie auch die Dimensionen der Ladefläche 12 (L1, L2), kann darüber der Überstand der Ladung 143 über die Ladefläche 12 hinaus ermittelt werden (D, G), bspw. durch B1-E1 « D oder B2-L1 ≈ G, wobei die genäherten Werte sich bspw. aus der Unschärfe ergeben, die durch den Sensorabstand (wie bspw. H1, H2) definieren wie auch bspw. das Verhältnis aus B1/L2 oder B2/L1. Je nach Art und Anzahl der verwendeten Sensoren kann hier die angesprochene Unschärfe reduziert werden.

Alternativ und/oder ergänzend erfolgt die Ermittlung des Überstands durch den Kontaktsensor 23 und/oder den Laser-Abstandsmesser 22, welche den Abstand der Ladung 143 vom dem Aufbau 13 zugewandten Teil der Ladefläche 12 hin zu Ladung 143 ermittelt (Schritt 1135) und vor allem ein rückseitiges Überstehen zu errechnen erlaubt, wieder durch den Vergleich der im Speicher (2, 38) angelegten Dimensionen der Ladung 143 mit der ebenfalls abgelegten Ladeflächendimension (Schritt 1140). Fig. 20 b) zeigt auf, dass die Kontaktsensoren 23 nur eine sehr rudimentäre Idee vom Überstand vermitteln können, da die Kontaktsensoren 23 lediglich detektieren, ob die Ladung 143 anliegt. Der Laser-Abstandsmesser 22 kann zumindest in die Tiefe der Ladung 143 bzw. das Überstehen auf der Rückseite des AFF 5 ermitteln, wobei hier durch Kenntnis von B1 und L2 sowie der gemessenen Distanz A der Überstand D ermittelt werden kann als A+B1-L2.

Der ermittelte Überstand (bspw. D) wird mit einem Schwellwert verglichen 1145 und basierend auf dem Vergleich, bspw. bei Überschreiten des Schwellwerts, wird die Ladung 143 abgesetzt (Schritt 1155). Der Schwellwert ist im Speicher 2 hinterlegt und kann abhängig von der Ladung 143 sein, die aufgenommen wird. Bei größeren Ladungen 143 kann der Schwellwert bspw. höher liegen als bei kleineren Ladungen 143, die bei konstantem Überstand (z.B. D) eine höhere Wahrscheinlichkeit aufweisen, dass ihr Schwerpunkt dicht am Rand der Ladefläche 12 liegt und so die Ladung 143 ggf. instabil beim Fahren ist. Es erfolgt ein erneutes Herannavigieren an die Ladung 143 (Schritt 1105) bzw., im Fall von in Reihen aufgestellte Rollwagen 200 ein Hineinfahren in ein (leeres) Areal einer Rollwagenreihe und ein Ablauf der weiteren Schritte 1110 bis ggf. 1145. Bei mehrmaligem Absetzen der Ladung 143 bzw. bei der Detektion der Notwendigkeit dafür erfolgt, in einem Aspekt, die Generierung einer Fehlermeldung 1160 sowie bspw. die Einnahme einer Warteposition 1165. Ergibt sich aus dem Schwellwertvergleich kein Absetzen der Ladung 143, erfolgt in einem Aspekt die Anpassung eines Erfassungswinkels eines Sensors (Schritt 1150), bspw. des Sensoreinheit-LIDARs 18 (der nach hinten gerichtet ist), um Störungen durch die Ladung 143 zu verhindern, sofern es sich bei der Ladung 143 um einen Rollwagen 200 handelt, dessen Räder, wie für Fig., 13 erläutert, nach Aufnahme im Sichtbereich des Sensoreinheit-LIDARs 18 liegen.

Das Überstehen einer Ladung wird hier durch folgende Aspekte AUL1-AUL14 charakterisiert:
AUL1. Computer-implementiertes Verfahren zur Steuerung eines autonomen Flurförderzeug (5), umfassend
   - Aufnahme einer Ladung (143);
   - Ermittlung der Position der aufgenommenen Ladung (143) auf der Ladefläche (12);
   - Bewertung der Position.
AUL2. Verfahren nach AUL1, wobei eine Bewertung der Position eine Klassifizierung hinsichtlich eines möglichen Absetzens der Ladung (143) beinhaltet.
AUL3. Verfahren nach AUL1, wobei eine Bewertung der Position
   - eine Ermittlung des Überstehens der aufgenommenen Ladung (143) über die Ladefläche (12) hinaus und
   - einen Vergleich des Überstehens mit einem Schwellwert beinhaltet.
AUL4. Verfahren nach AUL2 oder AUL3, weiter umfassend das Absetzen der aufgenommenen Ladung (143) in Abhängigkeit vom Schwellwertvergleich und/oder der Klassifikation.
AUL5. Verfahren nach AUL1, wobei die Ermittlung durch Auswertung eines horizontal messenden Sensors (z.B. 22, 23) erfolgt.
AUL6. Verfahren nach AUL1, wobei die Ermittlung durch Auswertung eines vertikal messenden Sensors (z.B. 44) erfolgt.
AUL7. Verfahren nach AUL4, wobei die Ermittlung des Überstehens durch Vergleich mit im Speicher (2) abgelegten Werten erfolgt,
AUL8. Verfahren nach AUL7, wobei die abgelegten Werte mindestens eine Dimension der Ladefläche (12) und/oder der Ladung (143) beinhalten.
AUL9. Verfahren nach AUL3, wobei das Überstehen der Ladung (143) in Aufnahmerichtung ausgewertet wird.
AUL10. Verfahren nach AUL3, weiter umfassend die Generierung einer Fehlermeldung bei mehrmaligem Absetzen der Ladung (143).
AUL11. Verfahren nach AUL3, wobei ermittelt wird, wie weit die Ladung (143) übersteht.
AUL12. Verfahren nach AUL4, weiter umfassend ein erneutes Aufnehmen der Ladung (143).
AUL13. Verfahren nach AUL12, wobei ein erneutes Aufnehmen der Ladung (143) ein erneutes Herannavigieren an die Ladung (143) umfasst.
AUL14. Verfahren nach AUL10, weiter umfassend die Einnahme einer Warteposition durch das autonome Flurförderzeug (5).
AUL15. Verfahren nach AUL1, weiter umfassend die Anpassung eines Erfassungswinkels eines nach hinten gerichteten Sensors (z.B. 18).
AUL16. Vorrichtung zur Durchführung des Verfahrens nach AUL1-AUL9.

### Beispiel 16: Navigationsmodul mit Mehrebenenkarte

Das AFF 5 ist derart konfiguriert, dass in seinem Navigationsmodul 110 eine Karte hinterlegt ist, bspw. in einem Kartenmodul 144, welche in verschiedene Zonen eingeteilt ist. Dabei besteht die Karte in einem Aspekt aus verschiedenen Ebenen, die optional verfügbar sind. In einem Aspekt handelt es sich um eine Energieverbrauch-Kartenebene 145, die das Areal, in dem sich das ein autonomes Fahrzeug wie ein AFF 5 bewegt, hinsichtlich des benötigten Energieverbrauchs kartiert ist. Der Energieverbrauch ergibt sich aus einer Steigung, dem Reibungskoeffizienten des Bodens, etc. und kann ladungsabhängig sein, d.h. insbesondere von der Masse der Ladung 143, die vom autonomen Fahrzeug ermittelt werden kann (vgl. siehe Fig. 18 und die Erläuterungen dazu, z.B. in Beispiel 13) oder in einem Speicher (2, 38) abgelegt ist, womit diese Kartenebene in einem Aspekt mit Blick auf die Ladung dynamisch ist. Bei einer weiteren Kartenebene kann es sich um eine Bewegliche-Hindernisse-Kartenebene 146 handeln, die die Dichte an beweglichen Hindernissen darstellt. Diese Darstellung kann dynamisch in zeitlicher Hinsicht sein und zwar derart, dass die Hindernisdichte saisonal schwankt, bspw. im Stundenrhythmus, Tagesrhythmus, Wochenrhythmus, Schichtrhythmus usw., wobei die Hindernisdichte als eine Wahrscheinlichkeit definiert sein kann, dass sich im betreffenden Areal ein bewegliches Hindernis befindet. Wie die Hindernisse ermittelt werden können, ist bspw. in Fig. 12 und den Erläuterungen dazu beschrieben. Eine andere Ebene, die Schwer-Detektierbare-Hindernisse-Kartenebene 147, zeigt feste Hindernisse auf, die umfahren werden müssen, ohne dass diese Hindernisse durch die Sensorik, die üblicherweise für die Positionsbestimmung genutzt wird wie bspw. eine Kamera (20, 31), ein LIDAR (15, 16, 18), etc., notwendigerweise erkannt werden. Dabei kann es sich um Rinnen im Boden, Gullideckel, Schwellen, usw. handeln, wobei das autonome Fahrzeug beim Auftreffen auf diese stark erschüttert werden könnte, was bspw. die Ladung 143 gefährden könnte. Eine weitere Ebene, die Normale-Hindernisse-Kartenebene 148, berücksichtigt Hindernisse, die durch die genannten Sensoren erkannt werden und die eine typische Karte eines autonomen Fahrzeugs oder Roboters darstellt, mit festen Hindernissen und/oder Landmarken (z.B. als Belegtheitskarten ausgestaltet). Eine andere Ebene, die Verkehrsregel-Ebene 149, kann Verkehrsregeln enthalten, bspw. eine Vorzugsfahrtrichtung, ein Rechtsfahrgebot, Einbahnstraßenregeln, etc. Die Kartenebenen können in einem Aspekt auch integriert sein. Ein Beispiel sind Hindernisse, die durch die Sensorik teilweise nicht oder nur schlecht erkannt werden und Zonen, die bestimmten Verkehrsregeln unterliegen, wobei die Integration hierbei impliziert, dass die Bereiche mit nicht oder nur schlecht erkennbaren Hindernissen als Sperrzonen oder Langsamfahrenzonen in die Karte eingetragen sind. In einem alternativen und/oder ergänzenden Aspekt werden mindestens zwei Kartenebenen für Navigationszwecke herangezogen. Das Navigationsmodul mit Mehrebenenkarte wird hier durch folgende Aspekte ANM1-ANM13 charakterisiert:
ANM1. Navigationsmodul für ein autonomes Fahrzeug mit einer Karte, welche aus verschiedenen Zonen besteht und welche aus mehreren Ebenen aufgebaut ist.
ANM2. Navigationsmodul nach ANM1, wobei das autonome Fahrzeug ein autonomes Flurförderzeug (5), ein Serviceroboter, ein Reinigungsroboter, ein Desinfektionsroboter oder ein Inventurroboter ist.
ANM3. Navigationsmodul nach ANM1, umfassend eine Energieverbrauchs-Kartenebene (145).
ANM4. Navigationsmodul nach ANM3, wobei der hinterlegte Energieverbrauch basierend auf dem Reibungskoeffizienten und/oder Steigungen der Oberfläche hinterlegt ist, auf der sich das autonome Fahrzeug bewegt.
ANM5. Navigationsmodul nach ANM3, wobei der hinterlegte Energieverbrauch von der Ladung (143) und/oder der geplanten Geschwindigkeit abhängt, die das autonome Fahrzeug transportiert und/oder die das autonome Fahrzeug in dem Bereich einnehmen kann.
ANM6. Navigationsmodul nach ANM1, umfassend eine Bewegliche-Hindernisse-Kartenebene (146), die die Auftretenswahrscheinlichkeit beweglicher Hindernisse repräsentiert.
ANM7. Navigationsmodul nach ANM6, wobei die Auftretenswahrscheinlichkeit beweglicher Hindernisse saisonal abhängig ist
ANM8. Navigationsmodul nach ANM1, umfassend eine Schwer-Detektierbare-Hindernisse-Kartenebene (147), die vor allem solche festen Hindernisse darstellt, die durch die zur Hindernisdetektion genutzte Sensorik nicht oder nur schlecht zu erkennen sind.
ANM9. Navigationsmodul nach ANM1, umfassend eine Normale-Hindernisse-Kartenebene (148), die feste Hindernisse und/oder Landmarken darstellt.
ANM10. Navigationsmodul nach ANM1, umfassend eine Ebene Verkehrsregel-Kartenebene (149).
ANM11. Navigationsmodul nach ANM10, wobei die Verkehrsregeln eine Vorzugsfahrtrichtung, ein Rechts- oder Linksfahrgebot und/oder Einbahnstraßenregeln beinhalten.
ANM12. Navigationsmodul nach ANM1, wobei mindestens zwei Ebenen miteinander kombiniert sein können.
ANM13. Navigationsmodul nach ANM1, wobei das autonome Fahrzeug mindestens zwei Ebenen der Karte zur Berechnung einer Wegstrecke heranzieht.

### Beispiel 17: Peer-to-peer Flottenmanagement

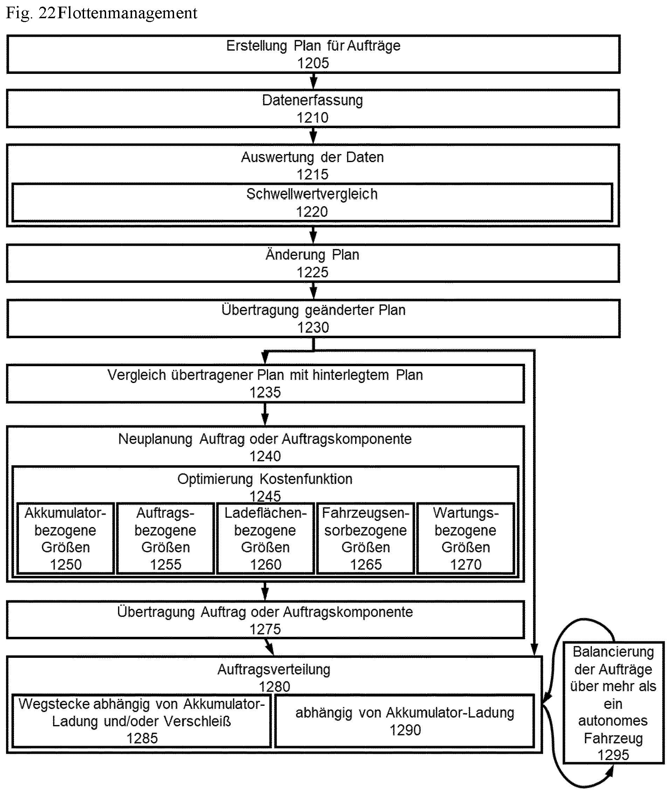

In einem Aspekt wird ein peer-to-peer Flottenmanagement umgesetzt, was bedeutet, dass Planungsvorgänge für Aufträge nicht nur zentral über einen Server (z.B. 37) umgesetzt werden, sondern auch durch autonome Fahrzeuge wie das AFF 5 direkt und in Kommunikation mit anderen Fahrzeugen (z.B. 5). Das Verfahren dazu ist in Fig. 22 näher illustriert. Das Verfahren kann dabei in mindestens einem autonomen Fahrzeug oder anteilig auf einem externen System 36 umgesetzt werden. In einem ersten Schritt 1205 erfolgt die Erstellung eines Plans zur Abarbeitung von Aufträgen für mindestens ein autonomes Fahrzeug. Dieser Plan kann bspw. direkt oder indirekt Koordinaten für Start- oder Zielpositionen beinhalten. Direkt heißt, dass das autonome Fahrzeug konkret Positionen aufsucht. Indirekt heißt, dass bspw. als Positionen ein Lager oder eine Maschine angegeben werden, denen wiederum an anderer Stelle Koordinaten zugewiesen sind. Der Plan kann Zeiten beinhalten (Uhrzeiten, Tage, etc.), der Plan kann die Art der Ladung bzw. die Art des Auftrags wie Begleitung einer Person beinhalten, weiterhin bspw. ein definiertes autonomes Fahrzeug, etc. Es erfolgt in einem weiteren Schritt 1210 eine Erfassung von Daten durch ein autonomes Fahrzeug. Dies kann bspw. die Position des autonomen Fahrzeugs sein, der Ladezustand des Akkumulators 4 des autonomen Fahrzeugs, die bisherige Fahrleistung mit Blick auf Verschleißteile, etc. Diese Daten können direkt gemessen werden oder aber indirekt bspw. durch Auslesen eines Werts im Speicher 2. Es erfolgt eine Auswertung der Daten 1215, bspw. in Form eines Schwellwertvergleichs 1220, wobei bspw. der erfasste Ladezustand des Akkumulators 4 mit einem Wert verglichen wird, der z.B. eine kritische oder einen auftragsabhängige Mindestladezustand wiedergibt (wobei dieser Mindestladezustand bspw. eine Distanz beschreibt, die das autonome Fahrzeug noch zurücklegen kann, bevor ein erneutes Aufladen des Akkumulators 4 notwendig wird).

In einem nächsten Schritt 1225 erfolgt eine Änderung des erstellten Plans zur Abarbeitung von Aufträgen für mindestens ein autonomes Fahrzeug. Dies bedeutet, dass bspw. durch die Datenauswertung festgestellt wurde, dass die Akkumulatorladung unter einem Schwellwert liegt, so dass der Auftrag nicht mehr ausgeführt werden kann. Damit wird mindestens der Plan für das betreffende autonome Fahrzeug geändert, bspw. von der Ausführung eines Transportauftrags hin zu einem Ladevorgang. Es erfolgt dann im Schritt 1230 eine Übertragung eines geänderten Plans. Empfänger des geänderten Plans kann wiederum mindestens ein zweites autonomes Fahrzeug oder mindestens ein externes System 36 sein, d.h. bspw. ein zentraler Flottenmanagement-Server. Es kann nun in einem nächsten Schritt der Auftrag einem anderen autonomen Fahrzeug zugewiesen werden, eine Route als eine Auftragskomponente geändert werden, etc. Konkret kann bspw. im Schritt 1235 ein Vergleich des übertragenen Plans mit einem hinterlegten Plan erfolgen (der im Speicher 2 oder 38 hinterlegt ist). Hierbei kann bspw. die durch das autonome Fahrzeug vorgenommene Planänderung 1225 detektiert werden, wenn bspw. der hinterlegte Plan der Ursprungsplan ist, der im Schritt 1205 erstellt und ggf. übertragen wurde. Beim hinterlegten Plan kann es sich aber auch um einen Plan eines zweiten autonomen Fahrzeugs handeln, bspw. um zu evaluieren, ob dieses Kapazitäten hat, um einen Auftrag, den das erste autonome Fahrzeug nicht ausführen kann, zu übernehmen.

Basierend auf dem Vergleich im Schritt 1235 erfolgt im Schritt 1240 eine Neuplanung mindestens einer Auftragskomponente (z.B. die Startzeit zur Bearbeitung des Auftrags) bis hin zu einem kompletten Auftrag. Dies geht bspw. mit der Optimierung mindestens einer Kostenfunktion einher 1245, was im Bewegungsplaner (115) und/oder einem Pfadplanungsmodul (112) umgesetzt wird. Bei der Kostenfunktion kann es sich um Akkumulator-bezogene Größen handeln 1250, d.h. bspw. Ladezustand und/oder Restlebensdauer oder Restkapazität des Akkumulators 4, was bspw. kurze Fahrten und/oder häufige Ladeintervalle implizieren kann. Alternativ und/oder ergänzend können auftragsbezogene Größen 1255 in die Kostenfunktion eingehen, bspw. die Art der zu transportierenden Ladung 143 (wobei bspw. bestimmte Ladungen 143 bestimmten autonomen Fahrzeugen zugewiesen werden), die zurückzulegende Wegstrecke (die bspw. minimiert werden soll), die Verfügbarkeit anderer autonomer Fahrzeuge (was sich bspw. in weniger Aufträgen für das erste autonome Fahrzeug zeigen kann) und/oder die Dringlichkeit des Auftrags (was wiederum bedeuten kann, dass Aufträge trotz geringer Akkumulator-Ladung angenommen werden). In einem Aspekt umfasst dies auch Masse und/oder Dimensionen der Ladung 143. Alternativ und/oder ergänzend werden ladeflächenbezogene Größen im Schritt 1260 berücksichtigt wie bspw. die Dimension der Ladefläche 12, ein maximales Ladegewicht und/oder eine mögliche Hubhöhe des autonomen Fahrzeugs, welche jeweils relevant sein können mit Blick auf die zu transportierende Ladung 143. Alternativ und/oder ergänzend können auch fahrzeugsensor-bezogene Größen 1265 herangezogen werden, bspw. wenn durch die genutzte Sensorik im Rahmen der Aufträge spezielle Auswertungen durchgeführt werden sollen, bspw. Körperposen-Auswertungen auf Basis einer Kamera. Alternativ und/oder ergänzend können wartungsbezogene Größen im Schritt 1270 genutzt werden, wie bspw. der Wartungszustand und/oder die verbleibende Zeit bis zu einem Wartungsereignis des autonomen Fahrzeugs. Die Übertragung der mindestens einen Auftragskomponente oder des Auftrags erfolgt dann im Schritt 1275 an ein autonomes Fahrzeug.

Nach Schritt 1275 oder 1230 kann eine Auftragsverteilung 12805 erfolgen, wobei die Wegstrecke abhängig von der Akkumulator-Ladung und/oder dem Verschleiß ist (Schritt 1285). Konkret können Aufträge, die mit Wegstrecken assoziiert sind, die unter einem Schwellwert liegen, solchen autonomen Fahrzeugen zugeteilt werden, die über eine Akkumulator-Ladung und/oder -Lebensdauer verfügen, die unter einem Schwellwert liegt und/oder über Verschleißparameter anderer Bauelemente, die über einem Schwellwert liegen. Alternativ und/oder ergänzend kann die Auftragsverteilung auch abhängig von der Akkumulator-Ladung (Schritt 1290) sein. Konkret kann ein Auftrag an ein zweites autonomes Fahrzeug übermittelt werden, wenn der Ladezustand eines Akkumulators eines ersten autonomen Fahrzeugs unter einem Schwellwert liegt. In einem Aspekt erfolgt eine Balancierung der Aufträge auf mehr als ein autonomes Fahrzeug 1895, d.h. die Aufträge werden weitestgehend gleichmäßig verteilt. Dies bedeutet, dass bspw. die Aufträge auf autonome Fahrzeuge derart verteilt werden, dass die Gesamtfahrleistung, das transportierte Lastvolumen, etc. innerhalb eines definierten Zeitraums in etwa gleich ist. Dabei ist der definierte Zeitraum größer als der Zeitraum, der mit einer Komplettladung des Akkumulators 4 abgefahren werden kann. Auf diese Art und Weise wird bspw. ungleichmäßiger Verschleiß mehrerer verhindert.

Das Peer-to-peer Flottenmanagement wird hier durch folgende Aspekte APF1-APF24 charakterisiert:
APF1. Computer-implementiertes Verfahren zur Steuerung einer Flotte autonomer Fahrzeuge, umfassend
   - Erstellung eines Plans zur Abarbeitung von Aufträgen für mindestens ein autonomes Fahrzeug,
   - Erfassung von Daten durch ein autonomes Fahrzeug;
   - Auswertung der erfassten Daten;
   - Änderung des erstellten Plans zur Abarbeitung von Aufträgen für mindestens ein autonomes Fahrzeug;
   - Übertragung des geänderten Plans.
APF2. Verfahren nach APF1, wobei das autonome Fahrzeug ein autonomes Flurförderzeug (5), ein Serviceroboter, ein Inventurroboter, ein Reinigungsroboter oder ein Desinfektionsroboter ist.
AFP3. Verfahren nach APF1, weiter umfassend der Vergleich des übertragenen Plans durch ein erstes autonomes Fahrzeug mit einem im Speicher (2) des autonomen Fahrzeugs hinterlegten Plan.
AFP4. Verfahren nach APF1, weiter umfassend Neuplanung mindestens einer Auftragskomponente des im Speicher (2) des autonomen Fahrzeugs hinterlegten Plans durch das autonome Fahrzeug auf Basis des übertragenen Plans.
AFP5. Verfahren nach APF1, weiter umfassend Übertragung mindestens einer Auftragskomponente des neu geplanten Plans an mindestens ein weiteres autonomes Fahrzeug.
AFP6. Verfahren nach APF1 oder APF4, wobei eine Planung und/oder Neuplanung die Optimierung mindestens einer Kostenfunktion umfasst.
AFP7. Verfahren nach APF6, wobei Ladezustand und/oder Restlebensdauer eines Akkumulators (4) als Kostenfunktion betrachtet werden.
APF8. Verfahren nach APF6, wobei die Art der zu transportierenden Ladung (143), die zurückzulegende Wegstrecke, die Verfügbarkeit anderer autonomer Fahrzeuge und/oder die Dringlichkeit des Auftrags als Kostenfunktion betrachtet werden.
APF9. Verfahren nach APF6, wobei Dimensionen der Ladefläche (12), maximales Ladegewicht und/oder eine mögliche Hubhöhe des autonomen Fahrzeugs als Kostenfunktion betrachtet werden.
APF10. Verfahren nach APF6, wobei die Ausstattung des autonomen Fahrzeugs mit Sensoren und diesbzgl. Auswertungsverfahren des autonomen Fahrzeugs als Kostenfunktion betrachtet werden.
APF11. Verfahren nach APF6, wobei der Wartungszustand und/oder die verbleibende Zeit bis zu einem Wartungsereignis des autonomen Fahrzeugs als Kostenfunktion betrachtet werden.
APF12. Verfahren nach APF1, weiter umfassend Verteilung von Aufträgen über mehrere autonome Fahrzeuge derart, dass Aufträge, die mit Wegstrecken assoziiert sind, die unter einem Schwellwert liegen, solchen autonomen Fahrzeugen zugeteilt werden, die über eine Akkumulator-Ladung, und/oder -Lebensdauer verfügen, die unter einem Schwellwert liegt und/oder über Verschleißparameter anderer Bauelemente, die über einem Schwellwert liegen.
APF13. Verfahren nach APF1, wobei ein Auftrag an ein zweites autonomes Fahrzeug übermittelt wird, wenn der Ladezustand eines Akkumulators (4) eines ersten autonomen Fahrzeugs unter einem Schwellwert liegt.
APF14. Verfahren nach APF1, wobei ein Auftrag an ein zweites autonomes Fahrzeug übermittelt wird, wenn ein erstes autonomes Fahrzeug für den geplanten Auftragszeitpunkt oder -zeitraum einen Ladevorgang geplant hat.
APF15. Verfahren nach APF1, wobei die Planung durch ein erstes autonomes Fahrzeug vorgenommen wird.
APF16. Verfahren nach APF1, weiter umfassend Verteilung von Aufträgen über mehrere autonome Fahrzeuge derart, dass die Auslastung der mehreren autonomen Fahrzeuge über einen definierten Zeitraum in etwa gleich groß ist.
AFP 17. Vorrichtung zur Durchführung des Verfahrens nach AFP1-AFP16.
APF18. Vorrichtung nach APF17, wobei es sich bei der Vorrichtung um ein autonomes Flurförderzeug (5), einen Serviceroboter, einen Inventurroboter, einen Reinigungsroboter oder einen Desinfektionsroboter handelt.
APF19. Vorrichtung nach APF18, mit einem Bewegungsplaner (115) und/oder einem Pfadplanungsmodul (112) für die Optimierung von Kostenfunktionen.

### Beispiel 18: Kartierung des ortsabhängigen Energieverbrauchs

In einem Aspekt ist das AFF 5 bzw. ein autonomes Fahrzeug allgemein (bspw. in Form eines Serviceroboters, Reinigungsroboters oder Desinfektionsroboters) so konfiguriert, dass es den Energieverbrauch auf einer Fläche kartieren kann, d.h. die nachfolgend beschriebenen Regeln sind bspw. im Kartierungsmodul 117 abgelegt. Dies ist in Fig. 23 näher beschrieben. Im Schritt 1305 fährt das autonome Fahrzeug ein Areal mit definiertem Gewicht ab, Strecke und/oder Geschwindigkeit ab, wobei eine definierte Geschwindigkeit bspw. eine konstante Geschwindigkeit ist. In einem Aspekt heißt dies bzw., dass, sofern es sich um das AFF 5 handelt, das AFF 5 dabei zwischendurch keine Lasten aufnimmt. Es erfolgt eine Messung des Energieverbrauchs 1310 im Zeitablauf, wobei dies bzw. durch Messung des am Antrieb 124 (d.h. insbesondere am Motor 6) anliegenden Stroms geschieht, wobei die Energie über die anliegende Spannung aus dem Integral aus u(t)*i(t)*dt ermittelt werden, wobei die Parameter u(t) für die Momentanspannung, i(t) für den momentanen Stromverbrauch und t für die gemessene Zeit stehen. Alternativ und/oder ergänzend erfolgt im Schritt 1315 eine Auswertung der Neigung des Bodens durch einen Inertialsensor 40. Diese dient dazu, etwaige Steigungen bzw. Neigungen zu detektieren, die bspw. mit einem erhöhten bzw. ggf. reduzierten Energieverbrauch einhergehen. Bei der Messung durch den Inertialsensor 40 können bspw. die Beschleunigungswerte des Inertialsensors in Kombination mit der aktuellen Orientierung des autonomen Fahrzeugs genutzt werden. Mithilfe der Gravitation/Erdbeschleunigung kann eine Verkippung der z-bzw. Drehachse bestimmt werden.

Die Messwerte werden abgespeichert 1320. In einem optionalen Aspekt erfolgt ein Vergleich des Energieverbrauchs mit abgespeicherten Energieverbräuchen 1325, was bspw. eine Normierung erlaubt, indem der gemessene Energieverbrauch (z.B. pro Strecke) bspw. im Verhältnis zu einem Standard-Energieverbrauch gesetzt wird, der bspw. herangezogen wird, um eine Prognose für den mit einem Auftrag assoziierten Energieverbrauch vorzunehmen. Weiterhin erfolgt eine Ermittlung der Position des autonomen Fahrzeugs, bspw. mittels des Odometrie-Moduls 121. Der jeweils gemessene Energieverbrauch wird der Position zugewiesen 1335. Darauf basierend kann bspw. eine Interpolation der Messwerte zwischen abgefahrenen Positionen erfolgen 1350, bspw. als lineare Interpolation. In einem Aspekt wird eine Kamera 20 genutzt, um die Oberfläche des Bodens im Umfeld des autonomen Fahrzeugs zu erfassen 1340, bevorzugt in Fahrtrichtung, und es erfolgt eine Auswertung der aufgezeichneten Aufnahmen hinsichtlich Texturen 1345. Hierfür kann Scikit Image in Python oder in OpenCV eingesetzt werden, z.B. auf Basis von Lokal Binary Patterns. Im Schritt 1350 erfolgt die Interpolation dann derart, dass Areale von in etwa gleicher Textur gleiche Energiewerte zugewiesen bekommen. Hierfür werden bspw. für die Textur erstellten Karten mit Karten für die Energiewerte übereinandergelegt, um einen Positionsabgleich zu erreichen, womit eine Zuordnung der Positionen möglich wird. Anschließend erfolgt die Erstellung einer Karte aus den erfassten und ausgewerteten Daten (in einem Aspekt inklusive der in den Schritten 1340 und 1345 ermittelten Texturdaten), die im Speicher 2 abgelegt und/oder über eine Schnittstelle (122, 123) an ein externes System 36 oder aber ein anderes autonomes Fahrzeug wie ein anderes AFF 5 übertragen wird (Schritt 1360). Auf Basis der Karte kann das autonome Fahrzeug wie das AFF 5 dann Routenwahlentscheidungen treffen, bspw. innerhalb des Bewegungsplaners (115) oder des Pfadplanungsmoduls (112).

Die Kartierung des ortsabhängigen Energieverbrauchs wird hier durch folgende Aspekte AKE1-AKE12 charakterisiert:
AKE1. Computer-implementiertes Verfahren zur Ermittlung des Einflusses einer Oberfläche auf den Energieverbrauch eines autonomen Fahrzeugs, umfassend
   - Abfahren eines Areals;
   - Messung des Energieverbrauchs;
   - Abspeichern der Messwerte;
   - Ermittlung der Position des autonomen Fahrzeugs und
   - Zuweisung des gemessenen Energieverbrauchs zur ermittelten Position.
AKE2. Verfahren nach AKE1, umfassend eine Auswertung der Neigung des Bodens durch einen Inertialsensor (40).
AKE3. Verfahren nach AKE2, wobei zur Auswertung der Steigung bzw. Neigung die die Beschleunigungswerte des Inertialsensors (40) in Kombination mit der aktuellen Orientierung des autonomen Fahrzeugs genutzt werden.
AKE4. Verfahren nach AKE1, umfassend Vergleich des Energieverbrauchs mit abgespeicherten Energieverbräuchen.
AKE5. Verfahren nach AKE1, weiter umfassend Erfassung der Oberfläche des Bodens.
AKE6. Verfahren nach AKE5, weiter umfassend Auswertung der Textur der erfassten Oberfläche.
AKE7. Verfahren nach AKE6, Zuweisung des für eine Textur erfassten Energieverbrauchs an alle Positionen mit einer im Wesentlichen gleichen Textur.
AKE8. Verfahren nach AKE6, weiter umfassend Interpolation der Messwerte zwischen abgefahrenen Positionen.
AKE9. Verfahren nach AKE1, weiter umfassend Erstellung einer Karte aus den ermittelten Daten.
AKE10. Verfahren nach AKE2, weiter umfassend die Karte über eine Schnittstelle (122, 123) an andere Systeme übertragen wird.
AKE11. Verfahren nach AKE9, weiter umfassend Nutzung der Karte für Routenwahlentscheidungen des autonomen Fahrzeugs.
AKE12. Vorrichtung zur Durchführung des Verfahrens nach AKE1-AKE11.
AKE13. Vorrichtung nach AKE12, wobei es sich beim autonomen Fahrzeug um ein autonomes Flurförderzeug (5), einen Inventurroboter, einen Serviceroboter, einen Reinigungsroboter oder einen Desinfektionsroboter handelt.

### Beispiel 19: Adaptive Ladedaueranpassung

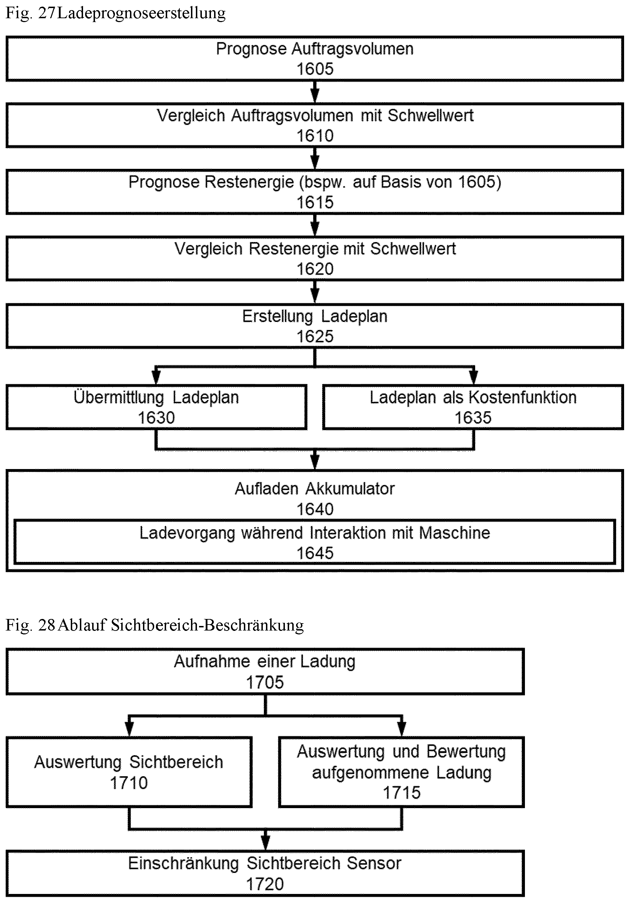

In einem Aspekt verfügt das autonome Fahrzeug (bspw. das AFF 5, ein Serviceroboter, ein Inventurroboter, ein Reinigungsroboter oder ein Desinfektionsroboter) über eine adaptive Ladedaueranpassung, in deren Rahmen ein Ladeplan erstellt wird, nach dem das autonome Fahrzeug geladen wird. Der dabei umgesetzte Ablauf ist in Fig. 27 dargestellt. Demnach erfolgt im Schritt 1605 die Erstellung einer Prognose über das zukünftige Auftragsvolumen des autonomen Fahrzeugs. Diese basiert bspw. auf in einem Speicher (2, 38) abgelegten Auftragshistorien, die Auslastungszeiten des autonomen Fahrzeugs im Zeitablauf wiedergeben, die bspw. saisonalen Schwankungen unterliegen (bspw. im Tages-, Wochen- oder Monatsverlauf bzw. Schichtverlauf). Auf Basis dieser Daten können bspw. Prognosen darüber erstellt werden, wann Aufträge durchgeführt werden, wobei diesen prognostizierten Aufträgen Eintrittswahrscheinlichkeiten zugrunde unterliegen können. Diese Prognosen umfassen bspw. auch Auftragspausen, d.h. Zeitfenster unterschiedlicher Länge, in denen mit einer Eintrittswahrscheinlichkeit keine Aufträge anliegen. Das Auftragsvolumen, bspw. diese Zeitfenster ohne Aufträge, werden mit hinterlegten Schwellwerten verglichen 1610. Wird bspw. innerhalb eines definierten Zeitraums ein Zeitfenster von einer Mindestlänge (Schwellwert) vorhergesagt wie z.B. 5 oder 10 min, kann dieses Zeitfenster bspw. zum (zumindest anteiligen) Aufladen des Akkumulators 4 genutzt werden.

Es erfolgt im Schritt 1615 eine Prognose über die Restenergie des Akkumulators 4, bspw. durch Messung der Momentanspannung des Akkumulators 4 bzw. der Einzelzellimpedanz mittels Impedanzspektroskopie und einen Vergleich mit in einem Speicher (2, 38) hinterlegten Vergleichswerten, die einem Spannungswert eine Restenergiemenge zuordnen. Weiterhin kann, basierend auf der Prognose im Schritt 1605, bspw. durch Multiplikation von Betriebszeiten und/oder Fahrstreckenlängen mit im Speicher (2, 38) hinterlegten Energieverbräuchen, eine Prognose über die Restenergie erstellt werden, die angibt, wie sich die Restenergiemenge im Akkumulator 4 bspw. innerhalb der folgenden Minuten oder Stunden verändern wird. Es erfolgt ein Vergleich der Restenergie mit einem Schwellwert (Schritt 1620), der ein Restenergieniveau darstellt, ab dem der Akkumulator 4 erneut aufgeladen werden soll. Dabei können die Schwellwerte bspw. 20 oder 50% betragen, wobei die Schwellwerte bspw. auf vom weiter prognostizierten Auftragsvolumen abhängen können. Darauf basierend wird ein Ladeplan zur Teilladung des Akkumulators bei Schwellwertunterschreitung des Auftragsvolumens und der Restenergie erstellt 1625, der angibt, wann das autonome Fahrzeug geladen wird, wobei für die Ladung 143 vorzugsweise Pausen zwischen Aufträgen herangezogen werden. Diese Pausen weisen durch die Schwellwerte eine Mindestlänge auf, die vom prognostizierten Auftragsvolumen und/oder der zu ladenden Energiemenge abhängen können. Der Ladeplan selbst kann Informationen zu Ladestationen 43 wie deren ID und/oder deren örtliche Position beinhaltet, welche bspw. entfernungsabhängig festgelegt werden können und/oder von den Örtlichkeiten der prognostizierten Aufträge abhängen können. Letzteres bedeutet bspw., dass eine Ladestation 43 für das Aufladen festgelegt wird, die in einem Areal liegt, für welches Aufträge prognostiziert werden, die zeitlich in der Nähe des Aufladezeitraums liegen bzw. idealerweise an diesen angrenzen.

Der Ladeplan kann in einem Folgeschritt 1630 bzw. an ein weiteres autonomes Fahrzeug (z.B. 5) oder ein externes System 36 übertragen werden, was über eine Schnittstelle (122, 123) erfolgt. Alternativ und/oder ergänzend kann der Ladeplan auch als Kostenfunktion im Rahmen einer Bewegungsplanung eingesetzt werden, die durch das Pfadplanungsmodul 112 oder den Bewegungsplaner 115 vorgenommen wird und entsprechend eine Routenwahl (ggf. zeitabhängig) beschreibt.

In einem nächsten Schritt erfolgt, bspw. gemäß Ladeplan, das Aufladen des Akkumulators 4. Die dafür genutzte Ladestation 43 kann dabei an (oder nahe) einer Maschine befindet, mit der das autonome Fahrzeug interagiert, so dass ein Aufladen bspw. während der Interaktion des autonomen Fahrzeugs mit der Maschine erfolgt (Schritt 1645). Dies bedeutet, dass das autonome Fahrzeug bspw. in der Position, in der es mit der Maschine interagiert, über Ladekontakte (oder ggf. induktiv) geladen wird.

Die adaptive Ladedaueranpassung wird hier durch folgende Aspekte AAL1-AAL10 charakterisiert:
AAL1. Verfahren zur adaptiven Ladedaueranpassung eines autonomen Fahrzeugs, umfassend
   - Erstellung einer Prognose über das zukünftige Auftragsvolumen des autonomen Fahrzeugs;
   - Vergleich des Auftragsvolumens mit mindestens einem Schwellwert;
   - Erstellung einer Prognose über die Restenergie eines Akkumulators (4);
   - Vergleich der Restenergie mit einem Schwellwert;
   - Erstellung eines Ladeplans zur Teilladung des Akkumulators (4) bei Schwellwertunterschreitung des Auftragsvolumens und der Restenergie.
AAL2. Verfahren nach AAL1, wobei die Prognose über die Restenergie des Akkumulators (4) auf der Prognose über das zukünftige Auftragsvolumen basiert.
AAL3. Verfahren nach AAL1, für die Prognose abgespeicherte Auftragsdaten aus der Vergangenheit im Zeitverlauf ausgewertet werden inklusive saisonaler Schwankungen bzw. Schwankungen zwischen Schichten.
AAL4. Verfahren nach AAL1, wobei der Ladeplan Informationen zu Ladestationen (43) wie deren ID und/oder deren örtliche Position beinhaltet.
AAL5. Verfahren nach AAL1, weiter umfassend Übermittlung des Ladeplans für das Aufladen des Akkumulators (4) über eine Schnittstelle (122, 123) an mindestens ein System (5, 36).
AAL6. Verfahren nach AAL1, weiter umfassend Berücksichtigung des Ladeplans als Kostenfunktion im Rahmen einer Bewegungsplanung.
AAL7. Verfahren nach AAL1, wobei es sich beim autonomen Fahrzeug um ein Flurförderzeug (5), einen Serviceroboter, einen Inventurroboter, einen Reinigungsroboter oder einen Desinfektionsroboter handelt.
AAL8. Verfahren nach AAL4, wobei sich die Ladestation (43) an oder nahe einer Maschine befindet, mit der das autonome Fahrzeug interagiert.
AAL9. Verfahren nach AAL8, weiter umfassend Aufladung des Akkumulators (4) während der Interaktion des autonomen Fahrzeugs mit der Maschine.
AAL10. Vorrichtung zur Durchführung des Verfahrens nach AAL1-AAL9.

### Beispiel 20: System mit Einschränkung des Sichtfelds

Die Begründung für die Sichtfeldeinschränkung wurde in Folge der Erläuterung von Fig. 13 und den darauffolgenden Absätzen aufgezeigt. Hier sollen der Ablauf und das System dahinter kurz erläutert werden. Als Hilfestellung dient Fig. 28. Hier wird im Schritt 1705 eine Ladung 143 aufgenommen, welche bspw. den Sichtbereich eines Sensors (z.B. 18) mindestens anteilig verdeckt. Es erfolgt im Schritt 1710 eine Auswertung des Sichtbereichs 143 eines Sensors durch Mustervergleich, inwieweit dieser durch die aufgenommene Ladung 143 eingeschränkt wird. Mustervergleich bedeutet, dass die vom Sensor erfassten Daten mit solchem aus dem Speicher 2 verglichen werden, in welchem Muster hinterlegt sind, die beschreiben, wann eine Sichtfeldeinschränkung erfolgt. Dabei findet bspw. eine Korrelationsanalyse statt und ab Überschreiten einer Korrelation wird der Sichtbereich des Sensors im Schritt 1720 eingeschränkt. In einem Aspekt kann dabei der Winkel, um den der Sichtbereich eingeschränkt wird, vom Mustervergleich abhängen. In einem alternativen und/oder ergänzenden Aspekt erfolgt eine Auswertung und Bewertung der aufgenommenen Ladung 143 im Schritt 1715. Konkret heißt dies für Schritt 1715, dass über die Transportaufträge bzw. die aufgenommene Ladung definiert ist, ob eine Einschränkung des Sichtbereichs erfolgt, wobei derartige Informationen im Speicher 2 abgelegt sind. Die Sichtfeldeinschränkung im Schritt 1720 bedeutet, dass das Sichtfeld um 40-190° in der horizontalen Ebene reduziert wird, wobei die Sichtfeldeinschränkung bspw. jeweils anteilig vom Randbereich des Sichtfelds erfolgt. Sichtfeldeinschränkung heißt bspw. alternativ und/oder ergänzend, dass Sensordaten aus diesem Bereich nicht ausgewertet werden.

Anders ausgedrückt liegt ein System vor zur Steuerung eines autonomen Fahrzeugs mit einer höhenverstellbaren Ladefläche 12 zum Aufnehmen einer Ladung 143, mindestens einer Sensoreinheit 17 mit einem Sensor zur Erfassung des Umfelds auf der Seite, von der eine Ladung 143 mit der Ladefläche 12 aufgenommen wird, und bei dem das Sichtfeld des mindestens einen Sensors der Sensoreinheit 17 durch eine aufgenommene Ladung 143 eingeschränkt wird. Der nicht ausgewertete Teil des Sichtfelds des Sensors der Sensoreinheit 17 umfasst mindestens einen Randbereich des Sichtfelds. Das Sichtfeld des mindestens einen Sensors der Sensoreinheit 17 ohne aufgenommene Ladung 143 beträgt in der horizontalen Ebene 130-270° und wird nach Aufnahme der Ladung 143 auf etwa 90-120° reduziert. Beim mindestens einen Sensor der Sensoreinheit 17 handelt es sich um ein LIDAR 18, eine Kamera (20, 31), einen Radar- 32 und/oder einen Ultraschallsensor.

Die Einschränkung des Sichtfelds wird hier durch folgende Aspekte AES1-AES10 charakterisiert:
AES1. Verfahren zur Steuerung eines autonomen Fahrzeugs, umfassend
   - Aufnahme einer Ladung (143) und
   - Einschränkung des Sichtbereichs mindestens eines Sensors.
AES2. Verfahren nach AES1, umfassend Auswertung des Sichtbereichs des Sensors durch einen Mustervergleich.
AES3. Verfahren nach AES1, umfassend Auswertung der aufgenommenen Ladung und Bewertung, ob diese mit einer Einschränkung des Sichtbereichs assoziiert ist.
AES4. Verfahren nach AES1, wobei der eingeschränkte Sichtbereich durch einen Teil der aufgenommenen Ladung (143) mindestens anteilig verdeckt wird.
AES5. Verfahren nach AES1, wobei die Einschränkung eine Reduktion des horizontalen Erfassungswinkels des Sensors von 40-190° bedeutet.
AES6. Verfahren nach AES1, wobei eine Einschränkung des Erfassungswinkels eine Nicht-Auswertung von in diesem Bereich erfassten Daten bedeutet.
AES7. Vorrichtung zur Durchführung des Verfahrens nach AES1-AES6.
AES8. System zur Steuerung eines autonomen Fahrzeugs mit einer höhenverstellbaren Ladefläche (12) zum Aufnehmen einer Ladung (143), mindestens einer Sensoreinheit (17) mit einem Sensor zur Erfassung des Umfelds auf der Seite, von der eine Ladung (143) mit der Ladefläche (12) aufgenommen wird, und bei dem das Sichtfeld des mindestens einen Sensors der Sensoreinheit (17) durch eine aufgenommene Ladung (143) eingeschränkt wird.
AES9. System nach AES6, wobei der nicht ausgewertete Teil des Sichtfelds des Sensors der Sensoreinheit (17) mindestens einen Randbereich des Sichtfelds umfasst.
AES10. System nach AES6, wobei das Sichtfeld des mindestens einen Sensors der Sensoreinheit (17) ohne aufgenommene Ladung (143) 130-270° in der horizontalen Ebene beträgt.
AES11. System nach AES6, wobei das Sichtfeld des mindestens einen Sensors der Sensoreinheit (17) nach aufgenommener Ladung (143) 90-120° in der horizontalen Ebene beträgt.
AES12. System nach AES6, wobei es sich bei dem mindestens einen Sensor der Sensoreinheit (17) um ein LIDAR (18), eine Kamera (20, 31), einen Radar- (32) und/oder einen Ultraschallsensor handelt.

### Beispiel 21: Autonomes Fahrzeug mit angepasster Belegtheitskartenaktualisierung

In einem Aspekt ist die Sensoranordnung eines autonomen Fahrzeugs wie einem AFF 5 derart gestaltet, dass seitliche Bereiche nicht komplett durch Sensoren erfasst werden, bspw. dann, wenn eine Ladung 143 transportiert wird. Dies bedeutet, dass das autonome Fahrzeug seitlich detektierte Hindernisse länger indirekt beobachtet, was durch die Adaption von mittels der Sensordaten erstellten Belegtheitskarten geschieht. Diese sind so adaptiert, dass seitlich detektierte Hindernisse langsamer vergessen werden, wodurch sichergestellt wird, dass auch langsame Hindernisse wahrgenommen werden, was wiederum bedeutet, dass bei Dreh-, Wende- oder Schwenkbewegungen diese Hindernisse mit einer höheren Wahrscheinlichkeit in der Pfadplanung des autonomen Fahrzeugs berücksichtigt werden, auch wenn die Hindernisse ggf. nicht durch die Sensorik detektiert werden. Zusammengefasst ist der Ablauf in Fig. 29: Es erfolgt eine Detektion von Hindernissen 1805, die sich seitlich vom autonomen Fahrzeug wie bspw. einem AFF 5 befinden. In einem Aspekt weist das autonome Fahrzeug eine Mindestgeschwindigkeit auf 1805, bspw. mindestens 0,1m/Sekunde. Im Schritt 1815 erfolgt eine Modifikation der Belegtheitskarte, die auf Basis erfasster Hindernisse erstellt wird., und zwar derart, dass die als (durch Hindernisse) belegt gekennzeichneten Felder im Zeitablauf langsamer vergessen werden, bspw. langsamer als in den Bereichen, in denen Hindernisse durch die Sensoren permanent detektiert werden, d.h. die Halbwertszeit der dort registrierten Hindernisse ist länger, bspw. mindestens doppelt so lang. Diese in der Belegtheitskarte dargestellten Hindernisse werden bei Dreh-, Wende- und Schwenkbewegungen überwacht (Schritt 1820) und bei der Fahrtroutenplanung berücksichtigt 1825, bspw. im Bewegungsplaner 115 bei einer Neuplanung eines Pfads.

Die angepasste Belegtheitskartenaktualisierung wird hier durch folgende Aspekte AAB1-AAB8 charakterisiert:
AAB1. Verfahren zur Steuerung eines autonomen Fahrzeugs mit einer höhenverstellbaren Ladefläche zum Aufnehmen einer Ladung (143), umfassend
   - Detektion von Hindernissen, die sich seitlich vom autonomen Fahrzeug befinden;
   - Modifikation der von einem Sensor erzeugten Belegtheitskarten mit den erfassten Hindernissen derart, dass diese in den Belegtheitskarten erfassten Hindernisse als belegt markierte Felder in der Belegtheitskarte im Zeitablauf langsamer vergessen werden und
   - Überwachung der detektierten Hindernisse auf Basis der Belegtheitskarten bei einer Dreh-, Wende-, oder Schwenkbewegung des autonomen Fahrzeugs.
AAB2. Verfahren nach AAB1, wobei es sich beim autonomen Fahrzeug um ein autonomes Flurförderzeug (5) handelt.
AAB3. Verfahren nach AAB1, wobei langsamer vergessen bedeutet, dass der zeitlich bedingte Wahrscheinlichkeitsabfall, der üblicherweise für belegte Felder vorgenommen wird, langsamer erfolgt.
AAB4. Verfahren nach AAB3, wobei die Halbwertszeit des Wahrscheinlichkeitsabfalls sich mehr als verdoppelt.
AAB5. Verfahren nach AAB1, umfassend eine Mindestgeschwindigkeit des autonomen Fahrzeugs.
AAB6. Verfahren nach AAB5, wobei die Mindestgeschwindigkeit mindestens 0,1 m/Sekunde beträgt.
AAB7. Verfahren nach AAB1, wobei die Geschwindigkeit des Vergessens abhängig ist von der Geschwindigkeit des autonomen Fahrzeugs.
AAB8. Verfahren nach AAB1, weiter umfassend die Berücksichtigung der erfassten Hindernisse in der Fahrtroutenplanung.
AAB9. Vorrichtung zur Durchführung des Verfahrens nach AAB1-AAB8.

### Beispiel 22: System zur Schlupfreduktion bei Drehbewegung von größeren Ladungen

Die Schlupfreduktion bei Drehbewegung von schweren Ladungen (143) wird hier durch folgende Aspekte ASDL1-ASDL11 charakterisiert:
ASDL1. Verfahren zur Reduktion des Schlupfs eines autonomen Fahrzeugs mit zwei Antriebsrädern (10) und einer Ladefläche (12) zum Aufnehmen einer Ladung (143), wobei der Schwerpunkt des autonomen Fahrzeugs nach Aufnahme der Ladung (143) nicht auf der Achse der Antriebsräder (10) liegt, wobei bei Wende- und/oder Schwenkmanövern die Antriebsgeschwindigkeit eines Antriebsrads (10) größer ist als die eines anderen Antriebsrads (10).
ASDL2. Verfahren zur Ansteuerung der Antriebsräder (10) eines autonomen Fahrzeugs mit zwei Antriebsrädern (10) und einer Ladefläche (12) zum Aufnehmen einer Ladung (143), wobei der Schwerpunkt des autonomen Fahrzeugs nach Aufnahme der Ladung (143) nicht auf der Achse der Antriebsräder (10) liegt, wobei bei Wende- und/oder Schwenkmanövern die Antriebsgeschwindigkeit eines Antriebsrads (10) größer ist als die eines anderen Antriebsrads (10).
ASDL3. Verfahren nach ASLD1 oder ASLD2, wobei die Drehbewegung der Antriebsräder gegenläufig ist.
ASDL4. Verfahren nach ASLD1 oder ASLD2, wobei die Drehgeschwindigkeit eines Antriebsrads (10) mehr als doppelt so groß ist wie die Drehgeschwindigkeit des anderen Antriebsrads (10).
ASDL5. Verfahren nach ASLD1 oder ASLD2, wobei die Drehgeschwindigkeit eines Antriebsrads (10) mehr als zehnmal so groß ist wie die Drehgeschwindigkeit des anderen Antriebsrads (10).
ASDL6. Verfahren nach ASLD1 oder ASLD2, wobei die Drehgeschwindigkeit eines Antriebsrads (10) null oder nahezu null beträgt.
ASDL7. Verfahren nach ASLD1 oder ASLD2, wobei es sich beim autonomen Fahrzeug um ein autonomes Flurförderzeug (5) handelt.
ASDL8. Verfahren nach ASLD1 oder ASLD2, wobei sich unter der Ladefläche (12) ein Gelenkrolle (11) befindet.
ASDL9. Verfahren nach ASLD1 oder ASLD2, wobei das Gewicht der aufgenommenen Ladung (143) mehr als das Gewicht des autonomen Fahrzeugs beträgt.
ASDL10. Verfahren nach ASLD1 oder ASLD2, wobei der Schwerpunkt der Ladung (143) mehr als 20 cm von der Achse der Antriebsräder (10) entfernt liegt.
ASDL11. Vorrichtung zur Durchführung des Verfahrens nach ASDL1-ASDL10.

### Beispiel 23: automatische Kalibrierung der Odometrie-Einheit und des Inertialsensors

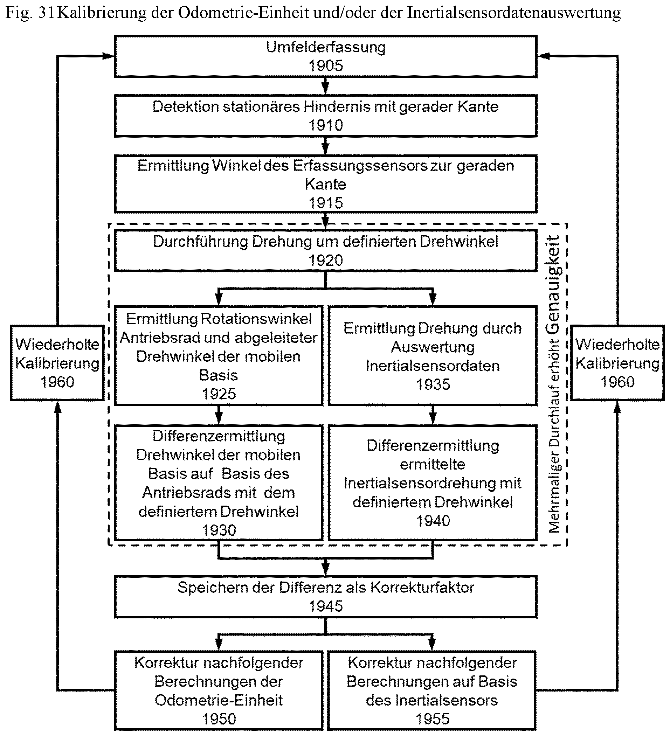

In einem Aspekt ist in der mobilen Basis 1 eine Implementierung für eine automatische Kalibrierung der Odometrie-Einheit 121 und/oder des Inertialsensors (IMU) 40 hinterlegt. Diese können initial oder im Zeitablauf Ungenauigkeiten vorweisen. Dies kann auf Verschleiß zurückzuführen sein (Abnutzung der Antriebsräder 10, aber auch Bodenungenauigkeiten, nicht detektierter Schlupf, etc.) oder Driften. Mit Blick auf den Inertialsensor 40 kann es sein, dass dieser fertigungsbedingte, materialbedingte oder temperaturbedingte, etc. Ungenauigkeiten aufweist und/oder ggf. leicht verkippt eingebaut wurde, wobei selbst kleine Abweichungen durch Auswertung der Sensordaten über die Zeit, was auf dem Wege der Integration (Summierung) erfolgt, und damit zu einer Vergrößerung der Fehler führt. Demzufolge ist ein bspw. regelmäßig wiederholter automatisierter Korrekturablauf implementiert, um Odometrie-Einheit 121 und/oder Inertialsensor 40 zu kalibrieren. Bei der Odometrie-Einheit 121 betrifft das bspw. den Radabstand, dessen Varianz zu nicht genauen Drehwinkeln der mobilen Basis 1 führen kann und damit zu einer Fehlnavigation. Der Ablauf stellt sich wie in Fig. 31 dargestellt dar:

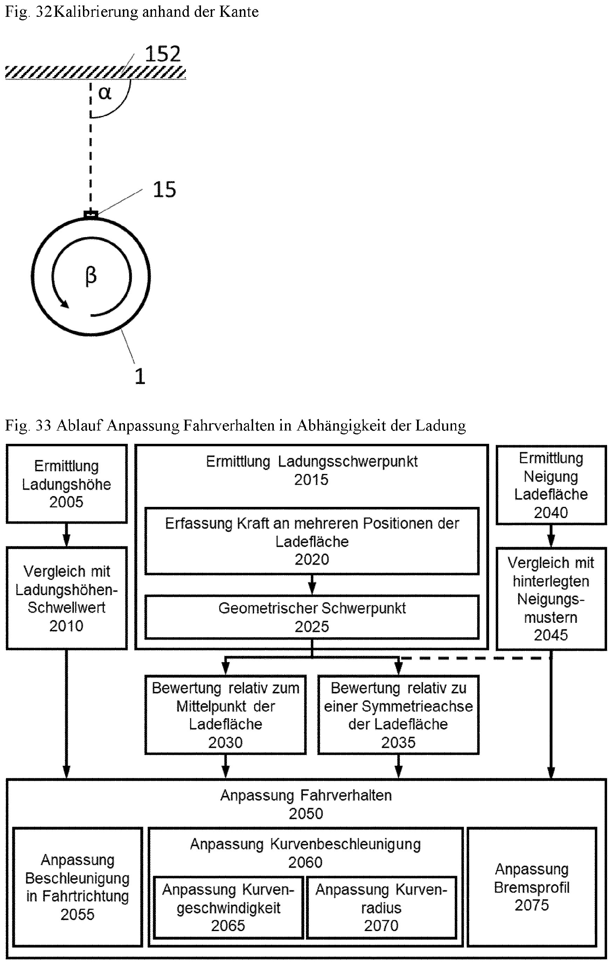

Es erfolgt eine Umfelderfassung 1905, bspw. durch einen Sensor wie eine Kamera (31), Radar (32) und/oder LIDAR (z.B. 15). Dabei werden stationäre Hindernisse detektiert, die dahingehend ausgewertet werden, ob diese Hindernisse eine gerade Kante (152) aufweisen (Schritt 1910). Fig. 32 zeigt dies bspw. Bei den Hindernissen mit gerader Kante kann es sich z.B. um eine Wand (151) handeln. Die Ermittlung, ob ein detektiertes Hindernis gerade ist, kann bspw. durch Vergleich von Verbindungen der Hinderniskoordinaten durch Richtungsvektoren und Auswertung der Orientierung dieser Richtungsvektoren erfolgen, wobei eine gleiche Orientierung indiziert, dass das Hindernis gerade ist. Es wird anschließend der Erfassungswinkel zwischen dem das Hindernis erfassenden Sensor wie der Kamera (31), Radar (32) und/oder dem LIDAR (z.B. 15) ermittelt (Schritt 1915), als α in Fig. 32 bezeichnet. Es findet dann eine Drehung der mobilen Basis 1 um einen definierten Drehwinkel statt (β in Fig. 32) (Schritt 1920), wobei die Ermittlung des Drehwinkels durch die Auswertung des Erfassungswinkels α erfolgt. D.h. es wird der Erfassungswinkel α im Zeitablauf überwacht. Für eine Umdrehung um 360° muss dieser bspw. zu Beginn und Ende der Umdrehung konstant sein. Diese mindestens eine Umdrehung kann um einen beliebigen Winkel erfolgen, solange der Winkel β relativ zu einem Hindernis wie bspw. einer mit einer geraden Kante 152 erfasst und ausgewertet wird, um so die Umdrehung extern zu validieren. In einem Aspekt erfolgt eine Drehung rechts und links herum, was für die nachfolgend beschriebene Ermittlung des Korrekturfaktors hilfreich ist. Mit Blick auf die Odometrieeinheit 121 erfolgt eine Ermittlung der Umdrehung mindestens eines Antriebsrads 10, in einem Aspekt beider Antriebsräder 10, welche durch Auswertung der Drehwinkelsensoren 129 erfolgt. So kann bspw. die Kreisbahn, die bei gegenläufiger Ansteuerung der Antriebsräder 10 durch die mobile Basis 1 beschrieben wird, sich, vereinfacht gesagt, aus der halben Distanz zwischen den Antriebsrädern 10 ergeben, die als Radius in die Kreisberechnung eingeht, wobei der darüber gebildete Kreisumfang der Distanz entspricht, die die Antriebsräder 10 bspw. zurücklegen müssen, damit sich die mobile Basis 1 um 360° dreht. Die Anzahl der Umdrehungen hängt dann vom Umfang der Antriebsräder 10 ab. Der exakte Radius wiederum hängt von den jeweiligen Auflagepunkten der Antriebsräder 10 auf dem Boden ab und kann sich bspw. durch Abnutzung unterscheiden. Aus dem Umfang der Antriebsräder 10 ergibt sich letztendlich für das Beschreiben der vorgegebenen Kreisbahn ein Rotationswinkel, den die Antriebsräder 10 zurücklegen. Dieser Rotationswinkel der Antriebsräder 10 (d.h. um die Rotationsachse der Antriebsräder) hat ein Vorgabewert, der im Steuerungsspeicher 127 hinterlegt ist und der bspw. einem Drehwinkel der mobilen Basis 1 um 360° entspricht (also einen Winkel um die vertikale Achse, Winkel (3). D.h. es findet hier eine Ermittlung des Rotationswinkels eines Antriebsrads 10 und eines abgeleiteten Drehwinkels β der mobilen Basis 1 statt (Schritt 1925). Es findet anschließend eine Differenzermittlung der Drehwinkel der mobilen Basis auf Basis des Antriebsrads 10 mit dem definiertem Drehwinkel (Schritt 1930) statt. Im Fall von zwei Umdrehungen, d.h. einer links herum und einer rechts herum, werden die gemessenen Differenzwerte gemittelt. Durch mehr als eine Umdrehung (in einer Richtung bzw. gar in jeweils beide Richtungen) kann die Genauigkeit der Differenzwertermittlung erhöht werden. Folgendes Rechenbeispiel zeigt auf, wie hier vorgegangen wird: Es wird durch die Umfelderfassung und Auswertung des Winkels relativ zur geraden Kante (α) ermittelt, wie weit sich die mobile Basis 1 gedreht hat (was als ground truth bezeichnet werden kann). Bei einem angenommenen Radabstand von 60 cm (Radius: 30 cm) entspricht dies einer Kreislänge von 188,5 cm. Bei einem Durchmesser der Antriebsräder von 10 cm (Umfang: 31,42 cm) sind das genau 6 Radumdrehungen. Wenn jetzt aber bspw. durch den Vergleich mit der ground truth nur 5,9 Radumdrehungen ermittelt wurden, ergibt sich daraus ein Korrekturfaktor von 6/5.9 = 1,017. Der wahre Radabstand (Radius) lässt sich damit wie folgt zurückrechnen: 5,9*31,42 = 185.38 ist der Kreisumfang. Dies durch pi geteilt ergibt einen Radabstand von 59 cm. 60/59 = 1,017. Die Berechnung kann auch durch mehrere Drehungen (Schritte 1920-1940) und Mittelwertbildung erfolgen z.B. zur Reduzierung zufälliger Einflüsse bei Identifizierung systematischer Abweichungen und damit zur Erhöhung der Messgenauigkeit. Im Schritt 1945 wird der Korrekturfaktor im Steuerungsspeicher 127 abgespeichert und für künftige Drehwinkelvorgaben für die Odometrie-Einheit 121 berücksichtigt 1950.

Ähnlich wird für die Kalibrierung des Inertialsensors 40 vorgegangen. Nach dem genannten Schritt 1920 erfolgt im Schritt 1935 eine Ermittlung der Drehung durch Auswertung der Inertialsensordaten, ebenfalls mit den Auswertung des Winkels α zur geraden Kante 152 als ground truth. Die Drehung der mobilen Basis 1 wird durch Integration der Daten der vertikalen (Z-Achse) des Inertialsensors 40 ermittelt. Im Schritt 1940 findet eine Ermittlung der Differenz des Drehwinkels β auf Basis der Inertialsensordaten mit einem vorgegebenen Drehwinkel (der ground truth) statt. Das nachfolgende Beispiel illustriert eine mögliche Berechnung. Hierbei wird auch die Drift des Inertialsensors 40 berücksichtigt, die bspw. extern vorgegeben sein kann, z.B. durch Prognosebildung auf Basis des Datenblatts, Messung von Umgebungsparametern und definierten Bewegungen des Inertialsensors 40. Die beiden vorgegebenen Umdrehungen der mobilen Basis 1 (einmal links herum, einmal rechts herum) erfolgen dabei innerhalb etwa des gleichen Zeitraums. Es wird der für die Drehung aufsummierte Winkel des Inertialsensors mit der ground truth verglichen. Das kann bspw. so aussehen, dass der aufsummierte Winkel 357,4° plus Drift von 1° eine Abweichung von 360° (ground truth) minus (357,4°+1°) = 1,6° ergibt bei einer Drehung in die eine Richtung und von 360° minus (-357,2° + 1°Drift bei Drehung(im gleichen Zeitraum) in die andere Richtung, mit einem Delta von 3,8°, wobei der Durchschnittswert der Abweichung 2,7° beträgt, welcher dem Korrekturfaktor entspricht. Auch danach erfolgt der Schritt 1945 (speichern des Korrekturfaktors im Speicher (z.B. 127) und Durchführung einer Korrektur der nachfolgenden auf Inertialsensordaten beruhenden Berechnungen 1955. Diese Berechnungen stellen z.B. sicher, dass die vorgegebene Drehung einer korrekten Drehung entspricht (d.h. die Drehung stellt durch den Korrekturfaktor sicher, dass bspw. eine vorgegebene Drehung um 90° auch tatsächlich 90° entspricht). Es findet eine wiederholte Kalibrierung statt 1960, bspw. innerhalb definierter Zeiträume, Absolvieren definierter Wegstrecken oder einer definierten Anzahl an Aufträgen.

Das Verfahren zur Kalibrierung einer Odometrieeinheit wird hier durch folgende Aspekte AKO1-AKO15 charakterisiert:
AKO1. Verfahren zur Kalibrierung einer Odometrie-Einheit (121) und/oder eines Inertialsensors (40) einer mobilen Basis (1), umfassend
   - Erfassung des Umfelds der mobilen Basis (1);
   - Detektion eines stationären Hindernisses mit einer geraden Kante (152);
   - Ermittlung des Erfassungswinkels der Kante (152);
   - Durchführung mindestens einer Drehung der mobilen Basis (1) um einen definierten Drehwinkel;
   wobei die Ermittlung des Drehwinkels durch die Auswertung des Erfassungswinkels erfolgt.
AKO2. Verfahren nach AKO1, wobei jeweils eine Drehung rechts herum und links herum erfolgt.
AKO3. Verfahren nach AKO1, wobei der definierte Drehwinkel ein Drehwinkel von mindestens 360° ist.
AKO4. Verfahren nach AKO1, weiter umfassend Ermittlung des Rotationswinkels von mindestens einem Antriebsrad (10) und eines zugehörigen Drehwinkels der mobilen Basis (1).
AKO5. Verfahren nach AKO4, weiter umfassend Ermittlung der Differenz des Drehwinkels der mobilen Basis (1) mit einem vorgegebenen Drehwinkel.
AKO6. Verfahren nach AKO1, weiter umfassend Ermittlung der Drehung der mobilen Basis (1) durch Auswertung von Inertialsensordaten.
AKO7. Verfahren nach AKO2, wobei die Umdrehung nach links und nach rechts jeweils über den gleichen Zeitraum erfolgt.
AKO8. Verfahren nach AKO6, weiter umfassend Ermittlung der Differenz des Drehwinkels auf Basis der Inertialsensordaten mit einem vorgegebenen Drehwinkel.
AKO9. Verfahren nach AKO8, wobei die Differenzbildung eine vorgegebene Drift des Inertialsensors (40) berücksichtigt.
AKO10. Verfahren nach AKO5 oder AKO8, wobei der vorgegebene Drehwinkel sich aus der Drehung des ausgewerteten Erfassungswinkels ergibt.
AKO11. Verfahren nach AKO5 oder AKO8, wobei der vorgegebene Drehwinkel sich aus der relativen Drehung zur geraden Kante (152) ergibt.
AKO12. Verfahren nach AKO5 oder AKO8, wobei die Ermittlung der Differenz über eine Mittelwertbildung aus mindestens einer Drehung nach links und mindestens einer Drehung nach rechts erfolgt.
AKO13. Verfahren nach AKO5 oder AKO8, weiter umfassend Speichern der ermittelten Differenz als Korrekturfaktor in einem Speicher (2, 127).
AKO14. Verfahren nach AKO5 oder AKO8, weiter umfassend Korrektur aller folgenden Berechnungen auf Basis der Daten der Odometrie-Einheit (121) und/oder des Inertialsensors (40) um den jeweils ermittelten Korrekturfaktor.
AKO15. Verfahren nach AKO1-AKO14 nach einem definierten Zeitraum, einer definierten Wegstrecke oder definierten Anzahl an Aufträgen.
AKO16. Vorrichtung zur Durchführung des Verfahrens nach AKO1-AKO15.

### Beispiel 24: Wegpunktebasierte Auswertung

Für die beschriebenen Ansätze ortsabhängiger Parameter für Routenwahlentscheidungen, bspw. die Ermittlung des Energieverbrauchs pro gefahrener Strecke in Beispiel 4, die Wartepositionsermittlung und dabei insbesondere die Hindernisdetektion und räumliche Auswertung der Hindernisse zur Ermittlung von Wartepositionen oder Routen bspw. während des Absolvierens von Aufträgen in Beispiel 11 und 12, die einzelnen Kartenebenen in Beispiel 16, die Kartierung des ortsabhängigen Energieverbrauchs in Beispiel 18 oder die adaptive Ladedaueranpassung in Beispiel 19 (dort bspw. ebenfalls die Energieverbräuche pro Strecke, Aufträge pro Strecke usw.) kann in einem Aspekt eine graphbasierte Auswertung erfolgen, bspw. im Rahmen der Pfadplanung. Diese basiert bspw. anteilig auf Knoten, die im Rahmen eines graphbasierten SLAM-Ansatzes (aus dem Stand der Technik bekannt, z.B. (z.B. siehe DOI: 10.1109/MITS.2010.939925)) entlang eines von einem Roboter zurückgelegten Pfads erstellt werden. Die Ermittlung des (z.B. streckenbezogenen) Energieverbrauchs, die Hindernisdetektion, die Art von zu absolvierenden Aufträgen (bspw. die zu transportierende Masse, etc.), Verkehrsregeln usw. können dabei den Kanten zwischen den Knoten (d.h. Wegpunkten entlang eines Pfads) als Kantengewichte zugewiesen werden. Diese Kantengewichte wiederum werden dann in der Pfadplanung berücksichtigt.

### Beispiel 25: Anpassung des Fahrverhaltens

Wie in Fig. 33 dargestellt, ist in einem Aspekt eine Anpassung des Fahrverhaltens des AFF 5 an die Ladung 143 implementiert. Dabei erfasst das AFF 5 die Höhe der Ladung 143 mittels des Ladehöhensensors 45 (Schritt 2005). Die ermittelte Ladungshöhe wird im Schritt 2010 mit einem oder mehreren Schwellwerten verglichen, die im Speicher (2, 38) abgelegt sind. Basierend auf dem Ergebnis des Schwellwertvergleichs erfolgt eine Anpassung des Fahrverhaltens 2040. Alternativ und/oder ergänzend zur Ermittlung der Ladungshöhe erfolgt eine Ermittlung des Ladungsschwerpunkts 2015. Dies geschieht bspw. durch Erfassung der Kraft an mehreren Positionen der Ladefläche 12 im Schritt 2020, bspw. mittels mindestens einer Ladeflächen-Ladungssensor 21. Die ermittelten Kräfte werden dann bspw. derart ausgewertet, dass der geometrische Schwerpunkt der Kräfte ermittelt wird (Schritt 2025) und dieser als Ladungsschwerpunkt bewertet wird. Diese Bewertung ist, in einem Aspekt, eine Bewertung relativ zum Mittelpunkt der Ladefläche 12 (Schritt 2030). Alternativ und/oder ergänzend erfolgt eine Bewertung relativ zu einer Symmetrieachse der Ladefläche (Schritt 2035), d.h. längs oder quer zur Fahrtrichtung. In einem Aspekt werden Ladungshöhe und Ladungsschwerpunkt gemeinsam ausgewertet. Basierend auf der Aus- bzw. Bewertung erfolgt eine Anpassung des Fahrverhaltens 2050. Dabei sind für unterschiedliche Ladungshöhen und/oder Ladungsschwerpunkte unterschiedliche Fahreigenschaften hinterlegt. In einem Aspekt erfolgt eine Anpassung der Beschleunigung in Fahrtrichtung 2055, bspw. beim Anfahren oder Abbremsen. Alternativ und/oder ergänzend wird die Kurvenbeschleunigung des AFF5 angepasst 2060, bspw. reduziert wird. Konkret wird bspw. die Kurvengeschwindigkeit angepasst 2065 oder der Kurvenradius 2070. Konkret wird bspw. die Kurvengeschwindigkeit mit zunehmender Höhe der Ladung 143 reduziert oder die Geschwindigkeit in einer Kurve derart angepasst, dass eine Maximalgeschwindigkeit vorliegt, die bspw. abhängig ist vom Kurvenradius. Alternativ und/oder ergänzend wird der Kurvenradius bei zunehmender Ladungshöhe vergrößert. In einem Aspekt wird auch das Bremsprofil modifiziert 2075, bspw. derart, dass bei Überschreiten eines Ladungshöhenschwellwerts ein längerer Bremsweg gewählt wird.

Mit Blick auf den Ladungsschwerpunkt wird bspw. bei Detektion eines Ladungsschwerpunkts in Fahrtrichtung rechts von der Symmetrieachse der Ladefläche 12 oder dem Mittelpunkt der Ladefläche eine Linkskurve mit einer geringeren Geschwindigkeit und/oder einem größeren Kurvenradius gefahren als eine Rechtskurve. Das gilt bspw. umgekehrt für einen Ladungsschwerpunkt links von der Mitte der Ladefläche 12 (bzw. der Symmetrieachse längs der Ladefläche 12). Befindet sich bspw. der Ladungsschwerpunkt in Fahrtrichtung im hinteren Teil der Ladefläche 12 (also hinter dem Mittelpunkt oder der quer verlaufenden Symmetrieachse), erfolgen Abbremsmanöver langsamer.

In einem Aspekt handelt es sich bei einem Ladeflächen-Ladungssensor 21 alternativ und/oder ergänzend um mindestens einen Inertialsensor, der die Neigung der Ladefläche 12 aus der Horizontalen ermittelt 2040. Diese Neigung wird dann mit hinterlegten Neigungsmustern verglichen 2045, die in einem Speicher (2, 38). abgelegt sind. Diese Muster können bspw. durch Positionierung definierter Ladungsgrößen (in der horizontalen Ebene), Ladungsgewichte und Positionierungen des Ladungsschwerpunkts hinsichtlich mindestens einer Symmetrieachse (z.B. parallel zur Hauptfahrrichtung und/oder senkrecht dazu) erstellt worden sein, so dass sich bei Ermittlung einer Neigung auf die der zugrunde liegende Position (bspw. bei bekannter Masse) schließen lässt. Alternativ und/oder ergänzend stellt ein Mustervergleich eine Bewertung hinsichtlich der genannten Symmetrieachsen dar. Basierend auf dem Mustervergleich erfolgt in einem Aspekt eine Bewertung nach den Schritten 2030 und 2035, alternativ direkt der Schritte 2050 fortfolgende. Da die Neigung vor allem die Position des Schwerpunkts wiedergibt, erfolgen die weiterführenden Auswertungen analog.

Der Ablauf zur Anpassung des Fahrverhaltens wird hier durch folgende Aspekte AFV1-AFV11 charakterisiert:
AFV1. Verfahren zur Anpassung des Fahrverhaltens eines autonomen Flurförderzeugs (5), umfassend:
   - Erfassung der Höhe der Ladung (143) und/oder Ermittlung des Ladungsschwerpunkts;
   - Bewertung der Höhe der Ladung (143) und/oder des Ladungsschwerpunkts und
   - Anpassung des Fahrverhaltens des autonomen Flurförderzeugs (5).
AFV2. Verfahren nach AFV1, wobei die Bewertung der Höhe der Ladung (143) einen Ladungshöhenschwellwertvergleich umfasst.
AFV3. Verfahren nach AFV1, wobei die Ermittlung des Ladungsschwerpunkts durch die Erfassung der Kraft an mehreren Positionen der Ladefläche (12) und eine Ermittlung des geometrischen Schwerpunkts des Drucks (143) umfasst.
AFV4. Verfahren nach AFV1, wobei die Bewertung des Ladungsschwerpunkts eine Bewertung relativ zum Mittelpunkt der Ladefläche (12) umfasst.
AFV5. Verfahren nach AFV1, wobei die Bewertung des Ladungsschwerpunkts eine Bewertung relativ zu einer Symmetrieachse der Ladefläche (12) umfasst.
AFV6. Verfahren nach AFV1, wobei die Ermittlung des Ladungsschwerpunkts durch Ermittlung der Neigung der Ladefläche und einen Vergleich mit hinterlegten Mustern erfolgt.
AFV7. Verfahren nach AFV1, wobei eine Anpassung des Fahrverhaltens eine Anpassung der Beschleunigung in Fahrtrichtung umfasst.
AFV8. Verfahren nach AFV1, wobei eine Anpassung des Fahrverhaltens eine Anpassung der Kurvenbeschleunigung umfasst.
AFV9. Verfahren nach AFV8, wobei eine Anpassung der Kurvenbeschleunigung eine Anpassung der Kurvengeschwindigkeit umfasst.
AFV10. Verfahren nach AFV8, wobei eine Anpassung der Kurvenbeschleunigung eine Anpassung des Kurvenradius umfasst.
AFV11. Verfahren nach AFV1, wobei eine Anpassung des Fahrverhaltens eine Anpassung des Bremsprofils umfasst.
AFV12. Vorrichtung zur Durchführung des Verfahrens nach AFV1-AFV11.

### Beispiel 26: Verfahren zum Absetzen einer Ladung

Nachfolgend wird ein Verfahren zur Steuerung eines AFF zum Absetzen einer Ladung beschrieben, dass wie folgt in den Aspekten AABL1-AABL15 wird:
AABL1. Verfahren zur Steuerung eines autonomes Flurförderzeug (5), umfassend
   - Ermittlung einer Position und
   - subsequente Neupositionierung des autonomen Flurförderzeugs (5).
AABL2. Verfahren nach AABL1, wobei die Positionsermittlung eine Positionsermittlung einer Ladung (143) und/oder das Überstehen einer Ladung (143) über die Ladefläche des autonomen Flurförderzeugs (5) hinaus beinhaltet.
AABL3. Verfahren nach AABL2, weiter umfassend
   - Vergleich der ermittelten Position und/oder des ermittelten Überstands mit einem Schwellwert und
   - bei Überschreiten des Schwellwerts
      ∘ Absetzen der Ladung (143) und/oder
      ∘ Generierung einer Fehlermeldung.
AABL4. Verfahren nach AABL2, wobei das autonome Flurförderzeug (5), basierend auf der in einem Speicher (2, 38) abgelegten Länge eines Rollwagens (200) und der ermittelten Position einer Ladung (143) die Bewegungen des autonomes Flurförderzeug (5) so gesteuert werden, dass eine Seite der Ladefläche (12) des autonomes Flurförderzeugs (5) nicht wesentlich unter einem zu transportierenden Rollwagen (200) hervorsteht.
AABL5. Verfahren nach AABL1, wobei das autonome Flurförderzeug (5) sich bis zu einem Schwellwert unter einen zu transportierenden Rollwagen (200) bewegt.
AABL6. Verfahren nach AABL1, wobei eine Erkennung von mindestens einer Markierung (202), Schiene (201) und/oder Identifikationsvorrichtung (z.B. 203) erfolgt, die sich parallel zu abgestellten Ladungen (143) befindet.
AABL7. Verfahren nach AABL1, wobei ein optisches und/oder drahtloses Auslesen einer Identifikations-Vorrichtung (203) zur Identifizierung einer Ladung (143) erfolgt.
AABL8. Verfahren nach AABL7, wobei es sich bei der Identifikations-Vorrichtung (z.B. 203) zur Identifizierung einer Ladung (143) um eine Vorrichtung zur Identifizierung einer Rollwagenreihe handelt.
AABL9. Verfahren nach AABL6-8, wobei auf Basis der erkannten Markierung (202), Schiene (201) oder Identifikationsvorrichtung (z.B. 203) oder dem Auslesen der Identifikationsvorrichtung die Neupositionierung des autonomen Flurförderzeugs (5) erfolgt.
AABL10. Verfahren AABL9, wobei die Neupositionierung zwischen verschiedenen Reihen mit Ladung (143) oder innerhalb einer einzelnen Reihe mit Ladung (143) erfolgt.
AABL11. Verfahren zur Steuerung eines autonomes Flurförderzeug (5), wobei zum Absetzen eines Rollwagens (200) der Abstand zum Endpunkt einer Markierung (202), Schiene (201) und/oder der Abstand von oder bis zu einer Identifikationsvorrichtung (z.B. 203) ermittelt wird, wobei sich die Markierung (202) und/oder Schiene (201) im Wesentlichen parallel zu dem abzusetzenden Rollwagen (200) befindet.
AABL12. Verfahren nach AABL11, wobei das autonome Flurförderzeug (5) sich in einem Abstand von mehr als 5 cm, vorzugsweise ca. 70 cm, vor einer Markierung (202), Schiene (201) und/oder Identifikationsvorrichtung (z.B. 203) im Wesentlichen parallel zur Markierung (202), Schiene (201) und/oder Identifikationsvorrichtung (z.B. 203) ausrichtet, und/oder es sich parallel zu den Seiten von abgestellten Rollwagen (200) ausrichtet und dabei einen Abstand zu diesen Rollwagenseiten hält, der größer als 5mm ist, vorzugsweise größer als 10mm.
AABL13. Verfahren nach AABL12, wobei die Abstände zu den Rollwagenseiten berührungslos ermittelt werden.
AABL14. Verfahren nach AABL6-12, wobei der Bereich, in welchem sich Markierung (202), Schiene (201) und/oder Identifikationsvorrichtung (z.B. 203) befinden, ausgeleuchtet und optisch erfasst wird.
AABL15. Vorrichtung zur Durchführung des Verfahrens nach AABL1-14.

### Beispiel 27: alternative Ladeflächen-Höhenverstellung:

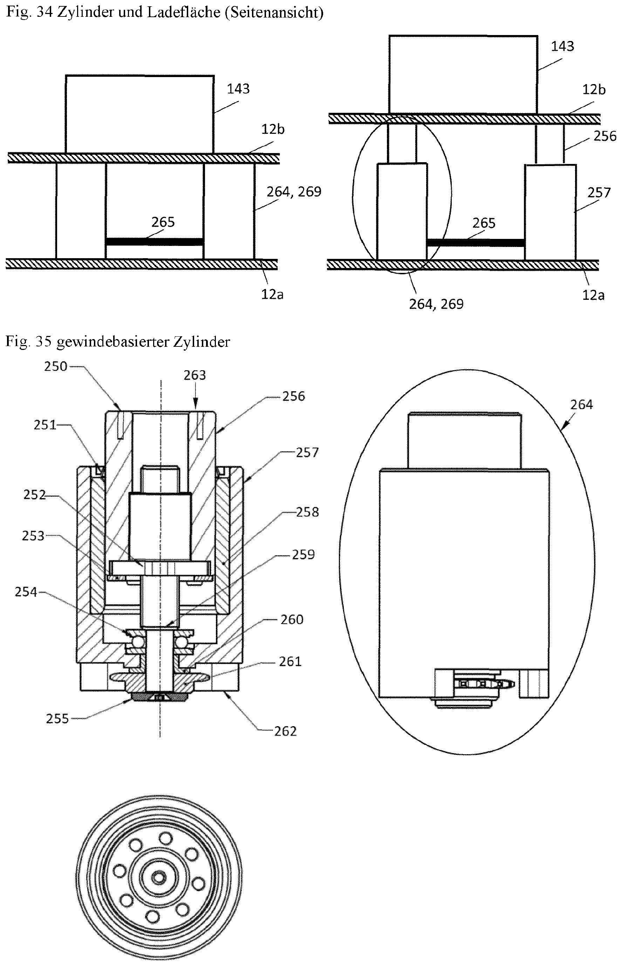

In Fig. 1, 3 und 4 ist ein Ladeflächen-Höhenverstellantrieb 14 verzeichnet, dessen Antrieb sich im Aufbau 13 befindet. Dies verlangt Bauraum im Aufbau 13, der bspw. zu Lasten eines größeren Akkumulators 4 geht, was wiederum die Betriebsdauer des AFF 5 beschränkt. Weiterhin bedeutet ein Ladeflächen-Höhenverstellantrieb 14 lediglich am oder im Aufbau 13, dass eine starke Hebelwirkung auf die Ladefläche 12, insbesondere den oberen, höhenverstellbare Ladeflächenteil 12a wirkt, wenn eine Ladung 143 angehoben wird. Dies macht es bspw. notwendig, zusätzliche Kräfte basierend auf der Hebelwirkung im Ladeflächen-Höhenverstellantrieb 14 zu berücksichtigen bzw. diesen ausreichend stark zu dimensionieren. In einer Variante ist das AFF 5 derart konfiguriert, dass der Ladeflächen-Höhenverstellantrieb 14 sich direkt in der Ladefläche 12 befindet. Die Ladefläche 12 verfügt über einen unteren Ladeflächenteil 12a, an dem bspw. die rückwärtsgerichtete Sensoreinheit 17 oder die Gelenkrolle 11 fixiert sind und die bspw. auch die Basis für den Aufbau 13 darstellt, sowie den oberen Ladeflächenteil 12b, wie Fig. 4b aufzeigt. Dieser untere Ladeflächenteil 12a ist, in diesem Ausführungsbeispiel, über mindestens eine Höhenverstellvorrichtung 269 mit dem oberen Ladeflächenteil 12b gekoppelt, der bei Zuladung mit der Ladung 143 in Eingriff steht, wie Fig. 34 darlegt.

In diesem Fall, wo der Ladeflächen-Höhenverstellantrieb 14 unter dem oberen Ladeflächenteil 12b sitzt, müssen weniger Kräfte zum Heben einer Ladung 143 aufgewendet werden als bei der Positionierung des Ladeflächen-Höhenverstellantriebs 14 am oder im Aufbau 13 (siehe Fig. 1, 3, 4a). Zugleich bedeutet dies, dass bei gleicher Kraft des Ladeflächen-Höhenverstellantriebs 14 schwerere Ladungen 143 gehoben werden können, da die Hebelwirkung durch die Ladung 143 weitestgehend wegfällt.

In einem Aspekt besteht die Höhenverstellvorrichtung 269 aus mindestens einem Zylinder 264. Dieser mindestens eine Zylinder 264 ist bspw. parallel zur Vertikalen ausgerichtet und in seiner vertikalen Position einstellbar, wodurch die Höhe der Ladefläche 12, d.h. des oberen Ladeflächenteils 12b, variiert wird. Diese Zylinder 264 werden bspw. mittels Hydraulik, Pneumatik oder Seilzug in ihrer Höhe variiert. In einem alternativen Aspekt erfolgt eine zahnradbasierte Höhenverstellung. In einem Beispiel handelt es sich um mindestens einen Zylinder 264 mit Gewinde, wobei mindestens ein Teil des Zylinders 264 beweglich gelagert ist und mindestens ein anderer Teil fix, so dass durch Rotation des beweglichen Teils eine Höhenverstellung in der Vertikalen ermöglicht wird.

Fig. 35 illustriert eine mögliche Ausführungsform eines Zylinders 264 mit gewindebasierter Höhenverstellung. Dieser Zylinder 264 ist an der oberen Montagefläche 263 mit dem oberen Ladeflächenteil 12b befestigt, wozu jeweils die oberseitigen Gewindelöcher 250 genutzt werden, welche sich auf der Hubwelle 256 befinden. Die Hubwelle 256 wird wiederum durch eine Spindel 259 vertikal bewegt, basierend auf einem mit der Spindel 259 verbundenen Zahnrad 261. Die Hubwelle 256 wird wiederum radial von einem radialen Gleitlager 258 umschlossen, wobei es im oberen Bereich einen Dichtungsring 251 gibt. Die Spindelmutter 252 sorgt wiederum dafür, dass die Spindel 259 an der Hubwelle 256 befestigt ist, wo die Spindel 259 durch eine Befestigungsplatte 253 vertikal in ihren Freiheitsgraden eingeschränkt wird. Die Spindel 259 ist wiederum über ein Axial-Rillenkugellager 254 innerhalb des Hubgehäuses 257 des Zylinders 264 fixiert. Das Zahnrad 261 wiederum wird axial über ein oberhalb auf der Spindel 259 sitzendes Gleitlager 260 und unterhalb durch eine Endplatte 255 in seinen Freiheitsgraden beschränkt. Schließlich wird der Zylinder 264 über das Hubgehäuse 257 auf dessen Unterseite, die als untere Montagefläche 262 dient, auf dem unteren Ladeflächenteil 12a fixiert, wozu bspw. analog wie auf der Oberseite Schrauben genutzt werden. Diese spezielle Darstellung des Zylinders 261 kann auch anders aufgebaut sein, mit außenliegender Spindel, etc. Fig. 34 nimmt bspw. auch Vorgriff auf diese Darstellung und zeigt links die Zylinder 264 im eingefahrenen Zustand, rechts im ausgefahrenen Zustand, wobei das Hubgehäuse 257 unten und die Spindel 259 oben die Darstellung des Zylinders 264 in der Seitenansicht repräsentieren.

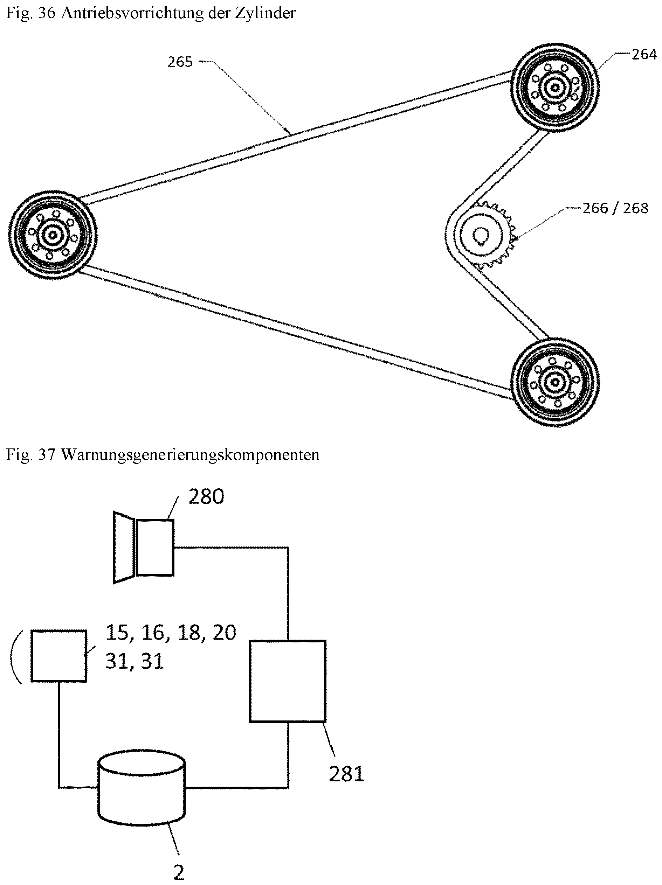

Über das Zahnrad 261 des Zylinders 264, das, wie in Fig. 36 dargestellt, mit einer Kette 265 in Eingriff steht (alternativ käme bspw. ein Riemenantrieb infrage mit ggf. einem anderen Maschinenelement als einem Zahnrad 261, das für den Fachmann naheliegend ist), wird die Spindel 259 bewegt, so dass sich die Länge des Zylinders 261 vertikal ändert. Werden mindestens zwei dieser Zylinder 261 genutzt, die jeweils am unteren Ladeflächenteil 12a und oberen Ladeflächenteil 12b fixiert sind, so werden die Rotationskräfte, die durch die Rotation innerhalb der Zylinder 264 entstehen, gegenseitig blockiert, so dass eine Rotationsbewegung der Spindeln 259 nur in eine vertikale Bewegung hervorruft. Im Fall, dass lediglich ein rotierender Zylinder 264 genutzt wird, wäre ein weiteres Maschinenelement notwendig, um die Rotationsfreiheit des oberen Ladeflächenteils 12b einzuschränken.

In einem Aspekt erfolgt der Antrieb der Zahnräder 261, wie in Fig. 36 aufgezeigt, über eine Kette 265, die von einem Antriebszahnrad 268 angetrieben wird, das mit einem Ladeflächen-Höhenverstellmotor 267 in Eingriff steht. Dabei handelt es sich bspw. um eine einzige Kette 265, die sowohl mit den Zahnrädern 261 der Zylinder 264 als auch dem Antriebszahnrad 268 in Eingriff steht. Diese Kette 265 wird, in einem Aspekt, durch ein weiteres, beweglich gelagertes Spannzahnrad 266 gespannt, wobei die Beweglichkeit dieses beweglich gelagerten Spannzahnrads 266 senkrecht zur beweglichen Ebene der Kette 265 orientiert ist. In einem alternativen oder ergänzenden Aspekt ist das Antriebszahnrad 268 derart beweglich gelagert, dass es direkt die Funktion des Spannzahnrads 266 übernimmt, wie auch in Fig. 36 illustriert. Im Falle eines Riemens wird ein äquivalentes Bauelement für das Spannen des Riemens verwendet. Beweglich gelagert heißt hier hinsichtlich des Spannzahnrads 266 oder des zugleich als Spannzahnrad 266 fungierenden Antriebszahnrads 268, dass es bspw. durch einen Federmechanismus Druck auf die Kette ausübt, wodurch diese gespannt wird. In der Ausführung in Fig. 36 befindet sich Kette 265 (alternativ der Riemen, der mit zu Zahnrädern äquivalenten Mitteln in Eingriff steht) in einer Ebene, die bspw. parallel zur Ladefläche 12 ist. Die Zahl der eingesetzten Zylinder 264 kann insgesamt variieren. Diese Zahl liegt bspw. zwischen eins und acht.

Nachfolgend der Ladeflächen-Höhenverstellantrieb 14 eines AFF in den Aspekten AVAL1-AVAL9 beschrieben:
AVAL1. Vorrichtung zum Anheben einer Ladefläche (12), umfassend einen unteren Ladeflächenteil (12a) und einen oberen Ladeflächenteil (12b), die über mindestens einen Ladeflächen-Höhenverstellantrieb (14) in Eingriff stehen, wobei der mindestens eine Ladeflächen-Höhenverstellantrieb (14) sich unterhalb des oberen Ladeflächenteils (12b) befindet und der Ladeflächen-Höhenverstellantrieb mindestens eine Höhenverstellvorrichtung (269) umfasst.
AVAL2. Vorrichtung nach AVAL1, wobei die mindestens eine Höhenverstellvorrichtung (269) über eine Kette (265) oder einen Riemen angetrieben werden.
AVAL3. Vorrichtung nach AVAL2, wobei mehr als eine Höhenverstellvorrichtung (269) über dieselbe Kette (265) oder denselben Riemen angetrieben werden.
AVAL4. Vorrichtung nach AVAL2, wobei die Kette (265) oder der Riemen über ein Antriebselement gespannt werden.
AVALS. Vorrichtung nach AVAL2, wobei Kette (265) oder Riemen in einer Ebene liegen.
AVAL6. Vorrichtung nach AVAL1, wobei die Höhenverstellvorrichtung (269) vertikal in ihrer Höhe variabel ist.
AVAL7: Vorrichtung nach AVAL1, wobei die Höhenverstellvorrichtung (269) ein Zylinder (264) ist.
AVAL8. Vorrichtung nach AVAL7, wobei die Höhenverstellung des mindestens einen Zylinders (264) über eine Spindel (259) erfolgt.
AVAL9. Vorrichtung nach AVAL8, wobei die Spindel (259) mit einem Zahnrad (261) oder einem Element für einen Riemenantrieb) in Eingriff steht.
AVAL10. Vorrichtung nach AVAL1, welche in einem autonomen Flurförderzeug (5) implementiert ist.

### Beispiel 28: Warnsystem für autonomes Flurförderzeug

Autonome Flurförderzeuge 5 sollten aus Sicherheitsgründen über akustische Warneinrichtungen verfügen wie einen Signalgeber 280 für akustische Signale, bspw. eine Hupe, einen Lautsprecher zur Ausgabe von Warnungen, die bspw. vom Zustand des autonomen Flurförderzeugs 5 abhängig sein können. Personen, die sich im Umfeld des autonomen Flurförderzeugs 5 befinden, können durch stets identische Signale in ihrem Empfinden abstumpfen und die Warnungen ignorieren. Dies erhöht die Unfallgefahr. In einem Aspekt ist das autonome Flurförderzeug 5 so konfiguriert, dass es in einem Zustand, der eine Warnung notwendig macht, die Art der Warnung variieren kann, um dieses Abstumpfen bei den zu warnenden Personen zu vermeiden. Der Zustand des autonomen Flurförderzeugs 5 kann durch eine Zustandsmaschine beschrieben sein. Bei einer Warnung kann es sich um eine bestimmte Folge von Signaltönen, um Lautsprecherausgaben von Texten, etc. handeln. Dazu verfügt das autonome Flurförderzeug 5 in einem Speicher (z.B. 2) über unterschiedliche hinterlegte Warnungen, bspw. eingeteilt in Warnungsklassen. Die Ausgabe dieser hinterlegten Warnungen wird über einen Ausgabengenerator 281 gesteuert. Dieser Ausgabengenerator 281 kann entweder Warnungen basierend auf einem festen Regelwerk ausgeben, bspw. in Abhängigkeit vom Zustand des autonomen Flurförderzeugs 5, basierend auf der Distanz zu detektierten Hindernissen, bspw. beweglichen Hindernissen, die über einen berührungslosen Sensor erfasst werden (bspw. 15, 16, 18, 20, 31, 31). Alternativ und/oder ergänzend können die Warnungen auch durch einen Zufallsgenerator im Warngenerator aus einer Liste mit verschiedenen Warnungen (bzw. Warnungsklassen) generiert werden. In einem Aspekt kann auch eine Kombination erfolgen: jeweils unterschiedliche Warnungen pro Zustand des autonomen Flurförderzeugs 5 oder Distanz zu beweglichen Hindernissen. Eine mögliche Anordnung der erwähnten Komponenten findet sich in Fig. 37.

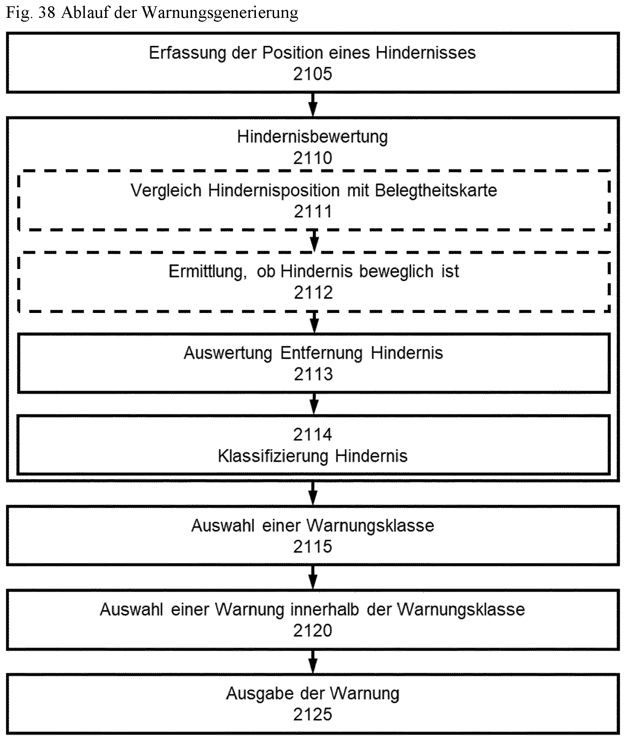

Der Ablauf der Warnung lässt sich anhand von Fig. 38 wie folgt beschreiben: Erfassung der Position eines Hindernisses 2105. Diese Erfassung erfolgt berührungslos durch einen Sensor wie bspw. 15, 16, 18, 20, 31, 31. Danach folgt die Hindernisbewertung 2110. Dies bedeutet in einem optionalen Aspekt, dass die ermittelte Position des Hindernisses mit in einer Belegtheitskarte verzeichneten (fixen) Hindernissen verglichen wird (Schritt 2111), um zu ermitteln, ob das Hindernis beweglich ist (2112). Ein Hindernis wird bspw. als beweglich eingestuft, wenn es nicht in der Belegtheitskarte hinterlegt ist. Alternativ und/oder ergänzend wird die Entfernung des Hindernisses zum autonomen Flurförderzeug 5 ausgewertet (2113). Dabei kann bspw. auch bewertet werden, ob es innerhalb definierter Schutzfelder liegt. Im Ergebnis wird das Hindernis klassifiziert 2114. Basierend auf diese Klassifizierung wird eine Warnungsklasse ausgewählt 2115, die für die Art der Warnung steht. Diese Warnung kann bspw. sich auf den Zustand des autonomen Flurförderzeugs 5 beziehen. Die Warnung kann bspw. eine allgemeine Warnung darstellen, dass sich das autonome Flurförderzeug 5 in der Nähe befindet. Oder es kann eine spezielle Warnung sein, dass sich das Hindernis auf dem Pfad befindet, den das autonome Flurförderzeug 5 zurücklegt und somit eine Kollisionsgefahr besteht. Es findet als nächstes eine Auswahl einer Warnung innerhalb der Warnungsklasse statt 2120. Dabei kann es sich um eine Zufallsauswahl handeln, die durch einen Zufallsgenerator vorgenommen wird. Es kann sich aber auch um eine definierte Abfolge unterschiedlicher Warnungen handeln, die sequentiell ausgegeben werden, etc. Schlussendlich wird die ausgewählte Warnung ausgegeben 2125.

Nachfolgend wird die Vorrichtung und der Ablauf der Warnungsausgabe durch die folgenden Aspekte Aspekten AAW1-AAW8 beschrieben:
AAW1. Verfahren zur Warnungsgenerierung, umfassend
   - Auswahl einer Warnungsklasse;
   - Auswahl einer Warnung innerhalb der Warnungsklasse;
   - Ausgabe der Warnung.
AAW2. Verfahren nach AAW1, wobei die Warnung basierend auf einem in einer Zustandsmaschine definierten Zustand ausgegeben wird.
AAW3. Verfahren nach AAW1, zuvor umfassend
   - Erfassung der Position eines Hindernisses und
   - Bewertung des Hindernisses.
AAW4. Verfahren nach AAW3, wobei die Hindernisbewertung umfasst:
   - Vergleich der erfassten Hindernisposition mit einer Belegtheitskarte;
   - Ermittlung, ob das Hindernis beweglich ist;
   - Auswertung der Entfernung zum Hindernis und
   - Klassifizierung des Hindernisses.
AAW5. Verfahren nach AAW3, wobei die Hindernisbewertung umfasst:
   - Auswertung der Entfernung zum Hindernis und
   - Klassifizierung des Hindernisses.
AAW6. Verfahren nach AAW4-5, wobei basierend auf der Klassifizierung des Hindernisses die Auswahl der Warnungsklasse erfolgt.
AAW7. Verfahren nach AAW1-AAW6, welches in einem autonomen Flurförderzeug (5) implementiert ist.
AAW8. Vorrichtung zur Durchführung des Verfahrens nach AAW1-AAW5.
AAW9. Warnungsvorrichtung umfassend einen berührungslosen Sensor (15, 16, 18, 20, 31, 31), einen Speicher (2), einen Ausgabengenerator (281) und einen Signalgebern (280) zur Ausgabe von Warnungen, wobei der Speicher (2) hinterlegte Warnungen beinhaltet und der Ausgabengenerator (281) Regeln zur Auswahl einer Warnung basierend auf Daten des berührungslosen Sensors (15, 16, 18, 20, 31, 31) beinhaltet, die über einen Signalgeber (280) ausgegeben werden.
AAW10. Warnungsvorrichtung nach AAW9, wobei der Ausgabengenerator (281) einen Zufallsgenerator umfasst.

### Bezugsbezeichnungen

- 1: mobile Basis
- 2: Speicher
- 3: Rechner
- 4: Akkumulator
- 5: AFF
- 6: Motor
- 7: Getriebe
- 10: Antriebsrad
- 11: Gelenkrolle
- 12: Ladefläche
- 12a: unterer Ladeflächenteil
- 12b: oberer Ladeflächenteil
- 13: Aufbau
- 14: Ladeflächen-Höhenverstellantrieb
- 15: LIDAR: nach vorne gerichtet
- 16: LIDAR, im Wesentlichen vertikal gerichtet
- 17: rückwärtsgerichtete Sensoreinheit
- 18: Sensoreinheit-LIDAR
- 19: Sensoreinheit-Leuchte
- 20: Sensoreinheit-Kamera
- 21: Ladefläche-Ladungssensor
- 22: Laser-Abstandsmesser
- 23: Kontaktsensor
- 24: Bedienelementen
- 25: Alarmleuchten (Ampel)
- 26: Projektionseinheit
- 27: Antenne
- 28: Druckempfindliche Stoßstange
- 29: Infrarot-ToF-Sensor
- 30: Display
- 31: Kamera
- 32: Radarsensor
- 33: Ladeschnittstelle
- 34: Cloud
- 35: Terminal
- 36: externes System
- 37: externer Rechner
- 38: externer Speicher
- 39: Höhenverstellungssensor
- 40: Inertialsensor
- 41: Rotations-Auswertungseinheit
- 42: Steuerungsschnittstelle
- 43: Ladestation
- 44: integrierter Ladeflächensensor
- 45: Ladehöhensensor
- 100: Ebene der Roboter-Fähigkeiten (Software)
- 110: Navigationsmodul
- 111: 2D/3D-Umfelderfassungsmodul
- 112: Pfadplanungsmodul
- 113: Selbstblockadedetektionsmodul
- 114: Selbstlokalisierungsmodul
- 115: Bewegungsplaner
- 116: Wartepositionsmodul
- 117: Kartierungsmodul
- 118: Lademodul
- 119: Ladungsermittlungsmodul
- 120: Hardwareebene
- 121: Odometrie-Modul
- 122: WLAN
- 123: AFF-AFF-Kommunikationsmodul (ZigBee)
- 124: Differentialantrieb
- 125: Ladeport und -elektronik
- 126: Steuerung
- 127: Steuerungsspeicher
- 128: Zähleinheit
- 129: Drehwinkelsensor
- 130: Prozessor
- 131: Watchdog
- 132: elektronische Schaltung
- 133: Relais
- 134: mechanische Bremse
- 135: sensornaher Speicher
- 136: Sichtfeld der vorderen LIDAR
- 137: Sichtfeld des hinteren LIDAR bei aufgenommenem Rollwagen
- 138: Rollwagen-Ladung-LIDAR-Totzone
- 139: Rollwagenrad
- 140: vertikale Drehachse eines Rollwagenrads
- 141: Sichtfeld des hinteren LIDAR ohne Beeinträchtigung durch Ladung
- 142: ohne-Ladung-LIDAR-Totzone
- 143: Ladung
- 144: Kartenmodul
- 145: Energieverbrauch-Kartenebene
- 146: Bewegliche-Hindernisse-Kartenebene
- 147: Schwer-Detektierbare-Hindernisse-Kartenebene
- 148: Normale-Hindernisse-Kartenebene
- 149: Verkehrsregel-Kartenebene
- 150: innerer Schutzbereich
- 151: Wand/Hindernis
- 152: Übertragungskanal
- 200: Rollwagen
- 201: Schiene
- 202: Markierungs- und/oder Führungslinie
- 203: Rollwagen-Reihe-Identifizierungsvorrichtung
- 204: Warenträger (auf Rollwagen)
- 250: oberseitiges Gewindeloch
- 251: Dichtungsring
- 252: Spindelmutter
- 253: Befestigungsplatte
- 254: Axial-Rillenkugellager
- 255: Endplatte
- 256: Hubwelle
- 257: Hubgehäuse
- 258: radiales Gleitlager
- 259: Spindel
- 260: Gleitlager
- 261: Zahnrad
- 262: untere Montagefläche
- 263: obere Montagefläche
- 264: Zylinder
- 265: Kette
- 266: Spannzahnrad
- 267: Höhenverstellmotor
- 268: Antriebszahnrad
- 269: Höhenverstellvorrichtung
- 280: Signalgeber
- 281: Ausgabengenerator

## Patentansprüche

1. Verfahren zur Kalibrierung eines Inertialsensors (40) einer mobilen Basis (1), wobei die mobile Basis (1) mindestens einen Sensor (15, 16, 18, 20, 29, 31, 32) zur Erfassung eines Umfelds der mobilen Basis (1) umfasst, das Verfahren umfassend
- Erfassung des Umfelds der mobilen Basis (1) mittels des mindestens einen Sensors (15, 16, 18, 20, 29, 31, 32);
- Detektion, basierend auf der Erfassung des Umfelds, eines Hindernisses (151);
- Ermittlung, basierend auf der Erfassung des Umfelds, eines Erfassungswinkels des Hindernisses (151);
- Durchführung mindestens einer Drehung der mobilen Basis (1) um einen Drehwinkel, wobei eine Ermittlung des Drehwinkels durch eine Auswertung des Erfassungswinkels erfolgt; und
- Vergleich des basierend auf der Auswertung des Erfassungswinkels ermittelten Drehwinkels mit einem mittels des Inertialsensors (40) ermittelten Drehwinkel.

2. Verfahren nach Anspruch 1, wobei die mindestens eine Drehung der mobilen Basis (1) eine Drehung rechts herum und eine Drehung links herum umfasst.

3. Verfahren nach Anspruch 2, wobei die Drehung nach links und die Drehung nach rechts herum über den gleichen Zeitraum erfolgen.

4. Verfahren nach einem vorhergehenden Ansprüche 1 bis 3, wobei der basierend auf der Auswertung des Erfassungswinkel ermittelte Drehwinkel ein Drehwinkel der mobilen Basis (1) von mindestens 360° ist.

5. Verfahren nach einem vorhergehenden Ansprüche 1 bis 4, weiter umfassend Ermittlung eines Rotationswinkels von mindestens einem Antriebsrad (10) und Ermittlung, basierend auf der Ermittlung des Rotationswinkels des mindestens einen Antriebsrads (10), eines Drehwinkels der mobilen Basis (1).

6. Verfahren nach Anspruch 5, weiter umfassend Vergleich des basierend auf der Ermittlung des Rotationswinkels des mindestens einen Antriebsrads (10) ermittelten Drehwinkels der mobilen Basis (1) mit einem vorgegebenen Drehwinkel.

7. Verfahren nach Anspruch 6, wobei der vorgegebene Drehwinkel basierend auf der Auswertung des Erfassungswinkels ermittelt wird.

8. Verfahren nach einem vorhergehenden Ansprüche 1 bis 7, wobei der Vergleich einen Drift des Inertialsensors (40) berücksichtigt.

9. Verfahren nach einem der Ansprüche 1 bis 8, wobei der Vergleich eine Mittelwertbildung zweier Drehungen der mobilen Basis (1) umfasst.

10. Verfahren nach einem der Ansprüche 1 bis 9, weiter umfassend Speichern eines basierend auf dem Vergleich ermittelten Korrekturfaktors in einem Speicher (2, 127).

11. Verfahren nach Anspruch 10, weiter umfassend Korrektur mittels des ermittelten Korrekturfaktors des mittels des Inertialsensors (40) ermittelten Drehwinkels und/oder des basierend auf der Ermittlung des Rotationswinkels des mindestens einen Antriebsrads (10) ermittelten Drehwinkels.

12. Verfahren nach einem der Ansprüche 1 bis 11, umfassend ein Wiederholen des Verfahrens zur Kalibrierung eines Inertialsensors (40).

13. Vorrichtung zur Durchführung eines Verfahrens nach einem der Ansprüche 1 bis 12, umfassend eine mobile Basis (1), welche ausgestaltet ist,
- basierend auf dem erfassten Umfeld der mobilen Basis (1) ein Hindernis (151) zu detektieren, wobei die mobile Basis (1) mindestens einen Sensor (15, 16, 18, 20, 29, 31, 32) zur Erfassung ihres Umfelds umfasst, und der mindestens eine Sensor ausgestaltet ist, einen Erfassungswinkel eines Hindernisses (151) zu ermitteln,
- basierend auf einer Auswertung des ermittelten Erfassungswinkels infolge einer Drehung der mobilen Basis (1) einen Drehwinkel der mobilen Basis (1) zu ermitteln, sowie
- den basierend auf der Auswertung des Erfassungswinkels ermittelten Drehwinkel mit einem mittels eines Inertialsensors (40) ermittelten Drehwinkel zu vergleichen.

14. Mobile Basis (1) umfassend
- einen Motor (6) und zwei Antriebsräder (10),
- mindestens einen Sensor (15, 16, 18, 20, 29, 31, 32) zur Erfassung eines Umfelds der mobilen Basis (1), wobei der mindestens eine Sensor ausgestaltet ist, einen Erfassungswinkel eines Hindernisses (151) ermitteln;
- einen Inertialsensor (40) zum Ermitteln mindestens Ermitteln mindestens eines Drehwinkels der mobilen Basis (1);
- und wobei die mobile Basis (1) derart ausgestaltet ist, basierend auf dem erfassten Umfeld der mobilen Basis (1) das Hindernis (151) zu detektieren, basierend auf einer Auswertung des Erfassungswinkels infolge einer Drehung der mobilen Basis (1) einen Drehwinkel der mobilen Basis (1) zu ermitteln, sowie den basierend auf der Auswertung des Erfassungswinkels ermittelten Drehwinkel mit einem mittels des Inertialsensors (40) ermittelten Drehwinkel zu vergleichen.

15. Mobile Basis (1) nach Anspruch 14, wobei der Inertialsensor (40) ausgestaltet ist, auf Basis mindestens einer Beschleunigung und/oder mindestens einer Drehrate der mobilen Basis (1) einen Drehwinkel der mobilen Basis (1) zu bestimmen.
